(19) Europäisches Patentamt
European Patent Office
Office européen des brevets

(11) **EP 4 776 151 A1**

(12) **EUROPEAN PATENT APPLICATION**
published in accordance with Art. 153(4) EPC

(43) Date of publication:
**15.07.2026 Bulletin 2026/29**

(21) Application number: **23953713.7**

(22) Date of filing: **28.09.2023**

(51) International Patent Classification (IPC):
**G06F 16/29** (2019.01)    **H04W 4/02** (2018.01)

(52) Cooperative Patent Classification (CPC):
**G06F 16/29; H04W 4/02**

(86) International application number:
**PCT/CN2023/122728**

(87) International publication number:
**WO 2025/065566 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.
Shenzhen, Guangdong 518129 (CN)**

(72) Inventors:
• **MA, Mengyao
Shenzhen, Guangdong 518129 (CN)**

• **MA, He
Shenzhen, Guangdong 518129 (CN)**
• **LI, Jiahui
Shenzhen, Guangdong 518129 (CN)**
• **LUO, Jiajin
Shenzhen, Guangdong 518129 (CN)**
• **MA, Jianglei
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND COMMUNICATION APPARATUS**

(57)    This application provides a communication method. The method includes: A first communication device obtains an environment reconstruction map of a first space, where the first space is a space within a preset range of the first communication device, the environment reconstruction map is represented by using a basic map element, the basic map element includes parameter information of the basic map element, and the parameter information of the basic map element includes type information and location information of the basic map element. The first communication device performs a communication service based on the environment reconstruction map, where the communication service includes at least one of the following: MIMO transmission, channel measurement, link adaptation, beam management, high-frequency communication, network management, and data transmission. In this application, for different services, different UE capabilities, and the like, the first communication device can flexibly use a defined data format to represent an environment reconstruction map, and may further perform a communication service based on the obtained environment reconstruction map, so that accuracy of a communication-related parameter can be improved, and a better transmission/scheduling parameter can be obtained.

FIG. 2

## Description

## TECHNICAL FIELD

This application relates to the communication field, and more specifically, to a communication method and a communication apparatus.

## BACKGROUND

With increasing diversity of application scenarios of wireless communication, a next-generation wireless communication process may be oriented to more new scenarios, including sensing, imaging, environment reconstruction, and integrated sensing and communication. In a new scenario, a plurality of devices (sensors) may sense/observe a same environment from different viewing directions. Therefore, sensing results of the plurality of devices may be sent to a base station (server), and fused into a complete/large environment reconstruction map, or various services are performed based on a fusion result, to reduce power consumption and transmission overheads of the devices. In addition, because different devices may observe in different viewing directions, a blockage/blind area problem caused by an obstacle can be alleviated by fusing sensing results of the plurality of devices, to achieve more refined reconstruction or better service effect. For different service requirements, sensing data exchanged between a device (a sensor) and a base station (a server) may have different representations. Therefore, it is necessary to define a format of the sensing data exchanged between the device (sensor) and the base station (server) and between devices (sensors), so that the defined data format can be flexibly used for different services, different UE capabilities, and the like.

## SUMMARY

This application provides a communication method and a communication apparatus, so that a defined data format can be flexibly used for different services, different UE capabilities, and the like.

According to a first aspect, a communication method is provided. The method may be performed by a first communication device. Unless otherwise specified, the "first communication device" in this application may be the first communication device (for example, a network device or a terminal device), or may be a component (for example, a processor, a chip, or a chip system) in the first communication device, or may be a logical module or software that can implement all or a part of functions of the first communication device.

The method may include: The first communication device obtains an environment reconstruction map of a first space, where the first space is a space within a preset range of the first communication device, the environment reconstruction map is represented by using a basic map element, the basic map element includes parameter information of the basic map element, and the parameter information of the basic map element includes type information and location information of the basic map element. The first communication device performs a communication service based on the environment reconstruction map, where the communication service includes at least one of the following: multiple-input multiple-output (multiple-input multiple-output, MIMO) transmission, channel measurement, link adaptation, beam management, high-frequency communication, network management, and data transmission.

The MIMO transmission may include, for example, channel prediction on a channel, MIMO precoding, link blockage prediction, and beam adjustment. The channel measurement may include, for example, channel estimation, propagation path parameter obtaining, channel covariance information obtaining, and channel prediction. The link adaptation may include, for example, channel link estimation, coding and modulation selection, and power control. The beam management may include, for example, beam alignment, beam search, beam training, beam prediction, and beam tracking. The high-frequency communication may include, for example, millimeter wave communication, terahertz communication, blockage prediction, and beam switching. The network management may include, for example, resource management, load balancing, interference coordination, access control, user scheduling, user mobility management, edge user management, and MU-MIMO user pairing. The data transmission may include, for example, user data transmission, signaling transmission, network control data transmission, transmission of raw data/native data in a RAN, non-terrestrial network communication, and satellite communication.

Optionally, the first communication device may further perform a sensing service based on the environment reconstruction map. The sensing service may include, for example, performing a positioning/tracking/recognition task or imaging, or assisting subsequent environment sensing, performing radar scanning, or assisting evaluation of a sensing scan parameter based on the map. In this embodiment of this application, the first communication device obtains the environment reconstruction map of the first space, and the environment reconstruction map may be represented by using one or more basic map elements. This is general, and the environment reconstruction map can be flexibly represented by using a defined data format. Therefore, the first communication device can perform the communication service based on the obtained environment reconstruction map, for example, may implement sensing-assisted communication, to reduce signaling overheads, reduce a transmission/scheduling latency, ensure communication quality, improve accuracy of a communication-related parameter, and obtain a better transmission/scheduling parameter. Specifically, for a MIMO transmission task, for example, channel prediction is performed on a channel, and a UE may feed back channel prediction that is based on the environment reconstruction map to a base station instead of original channel prediction, so that a feedback data amount can be reduced. For link blockage prediction on a base station side, a transmission parameter of the UE can be determined and adjusted in advance, to avoid blockage and ensure communication quality of the UE. For a channel measurement task, the first communication device may obtain more accurate information such as a propagation path parameter based on an environment map, to better communicate with the second communication device. For a beam management task, based on an environment map, the first communication device may obtain more accurate beam state information and beam prediction information, or obtain a more accurate beam alignment result, or reduce a beam training latency, to better communicate with the second communication device. For a high-frequency communication task, based on an environment map, the first communication device may obtain more accurate channel state information, beam information, and the like, or determine blockage in advance, to reduce a beam switching latency and ensure communication quality, so as to better communicate with the second communication device. For a network management task, a base station may determine a status such as interference in advance based on an environment map, to improve quality of interference coordination and user scheduling, or reduce a user mobility management (handover) latency. A UE feeds back channel state information to the base station based on the environment map, to help the base station obtain a better MU-MIMO pairing result. For a data transmission task, the first communication device obtains a more accurate data transmission parameter based on an environment map, to improve quality of data transmission between the first communication device and the second communication device.

With reference to the first aspect, in some implementations of the first aspect, that the first communication device obtains the environment reconstruction map of the first space includes: The first communication device scans the first space to obtain the environment reconstruction map.

The first communication device may scan/-sense the first space based on radio signal sensing, infrared sensing, radar (radio detection and ranging, RADAR) sensing, lidar (light detection and ranging, LIDAR) sensing, 2D/3D camera sensing, or the like.

It should be understood that sensing based on a radio frequency sensor (sensor sensing based on a radio signal) is not easily affected by weather and light. The infrared sensing may obtain night vision imaging effect and may also penetrate smoke. The radar sensing may detect an object at a short distance. The lidar sensing may obtain ranging/depth information to obtain a high spatial resolution. A 2D/3D camera may obtain a visual feature from an environment, and may implement a higher resolution of an environment map.

In addition, multi-modal sensing may be further performed, for example, sensing based on both a camera and a radar, or sensing based on both a camera and a lidar. Sensing results of different modal sensors can be fused by multi-modal sensing, to improve sensing precision.

In this embodiment of this application, the first communication device may scan the first space to obtain the environment reconstruction map. For example, the first communication device may sense the first space based on a sensor on the first communication device, to obtain the environment reconstruction map within a specific range around the first communication device, so that the environment reconstruction map required by the first communication device can be obtained without participation of another device.

In a possible implementation, the environment reconstruction map is represented by using a basic map element corresponding to first capability information, and the first capability information indicates type information of the basic map element supported by the first communication device. In this implementation, the first communication device obtains the environment reconstruction map of the first space through scanning, and the environment reconstruction map may be represented by using the basic map element corresponding to the first capability information. In other words, the environment reconstruction map may be represented by using the basic map element supported by the first communication device. For example, if the first communication device supports data of a voxel type, the environment reconstruction map may be represented by using a basic map element of the voxel type.

In a possible implementation, the method further includes: The first communication device receives second capability information sent by a second communication device, where the second capability information indicates type information of a basic map element supported by the second communication device, and the environment reconstruction map is represented by using the basic map element corresponding to the second capability information.

In this implementation, the first communication device may receive the second capability information sent by the second communication device. Types of basic map elements supported by the second communication device may be fewer than types of basic map elements supported by the first communication device. Therefore, the environment reconstruction map obtained through scanning by the first communication device may be represented by using the basic map element corresponding to the second capability information, and further, the environment reconstruction map may be sent to the second communication device for use by the second communication device. In a possible implementation, the method further includes: The first communication device receives second capability information sent by a second communication device, where the second capability information indicates type information of a basic map element supported by the second communication device. The first communication device determines third capability information based on the second capability information and first capability information, where the first capability information indicates type information of a basic map element supported by the first communication device, the third capability information indicates at least one item in type information of a basic map element supported by both the first communication device and the second communication device, and the environment reconstruction map is represented by using the basic map element corresponding to the third capability information.

In this implementation, the first communication device and the second communication device may support different type information. Therefore, the first communication device may receive the second capability information sent by the second communication device, to determine the third capability information based on the second capability information and the first capability information. The environment reconstruction map may be represented by using a plurality of basic map elements corresponding to the third capability information. In this way, both the first communication device and the second communication device can directly use the environment reconstruction map.

With reference to the first aspect, in some implementations of the first aspect, that the first communication device obtains the environment reconstruction map of the first space includes: The first communication device receives a global environment reconstruction map sent by a second communication device, where the global environment reconstruction map is represented by using a basic map element corresponding to second capability information, and the second capability information indicates type information of the basic map element supported by the second communication device. The first communication device determines the environment reconstruction map from the global environment reconstruction map based on first capability information, where the environment reconstruction map is represented by using a basic map element corresponding to the first capability information, and the first capability information indicates type information of the basic map element supported by the first communication device. In this embodiment of this application, the first communication device may receive the global environment reconstruction map sent by the second communication device. However, the global environment reconstruction map is represented by using the basic map element corresponding to the second capability information. The first communication device may not support representation of some types of data in the global environment reconstruction map. Therefore, the first communication device may determine the environment reconstruction map applicable to the first communication device from the global environment reconstruction map, to perform a subsequent communication service.

With reference to the first aspect, in some implementations of the first aspect, that the first communication device obtains the environment reconstruction map of the first space includes: The first communication device receives a first local environment reconstruction map sent by a second communication device, where the first local environment reconstruction map is an environment reconstruction map that is in the first space and that the second communication device has. The first communication device scans the first space to obtain a second local environment reconstruction map. The first communication device determines the environment reconstruction map based on the first local environment reconstruction map and the second local environment reconstruction map.

In this embodiment of this application, the first communication device and the second communication device may observe in different viewing directions. Therefore, the first communication device may receive an existing environment reconstruction map (namely, the first local environment reconstruction map) that is about the first space and that is sent by the second communication device, and the first communication device may further scan/sense the first space to obtain the second local environment reconstruction map. In addition, the first communication device may fuse the first local environment reconstruction map and the second local environment reconstruction map, to obtain a more refined environment reconstruction map. In this way, the first communication device and the second communication device can obtain better service effect. With reference to the first aspect, in some implementations of the first aspect, that the first communication device performs the communication service based on the environment reconstruction map includes: The first communication device sends the environment reconstruction map to the second communication device.

In this embodiment of this application, after obtaining the environment reconstruction map through scanning/sensing, the first communication device may send the environment reconstruction map to the second communication device, so that the second communication device performs a sensing service and/or a communication service based on the environment reconstruction map.

It should be noted that the second communication device may obtain environment reconstruction maps sent by a plurality of devices (including the first communication device). The plurality of devices sense/observe a same environment from different viewing directions, and may send sensing results of the plurality of devices to the second communication device (for example, a base station) to fuse into a complete/large environment reconstruction map, so that another sensing service can be performed based on a fusion result, to reduce power consumption and transmission overheads of each device. In addition, because each device may observe in a different viewing direction, a of blockage/blind area problem caused by an obstacle can be resolved by fusing the sensing results of the plurality of devices, to further achieve more refined reconstruction or better service effect.

With reference to the first aspect, in some implementations of the first aspect, the method further includes: The first communication device sends the first capability information to the second communication device, where the first capability information indicates the type information of the basic map element supported by the first communication device.

In this embodiment of this application, the first communication device may send the first capability information to the second communication device. The first capability information may indicate the type information of the basic map element supported by the first communication device, so that the second communication device parses the environment reconstruction map based on the first capability information, to reduce map parsing complexity.

With reference to the first aspect, in some implementations of the first aspect, that the first communication device obtains the environment reconstruction map of the first space includes: The first communication device receives the environment reconstruction map sent by a second communication device.

In this embodiment of this application, the first communication device may directly obtain the environment reconstruction map of the first space from the second communication device. Therefore, the required environment reconstruction map can be obtained without active scanning/sensing by the first communication device, to reduce overheads of the first communication device, and reduce power consumption of the first communication device.

In a possible implementation, the method further includes: The first communication device receives second capability information sent by the second communication device, where the second capability information indicates type information of a basic map element supported by the second communication device.

In this implementation, the first communication device may receive the second capability information sent by the second communication device, to learn of the type information of the basic map element supported by the second communication device.

In a possible implementation, the environment reconstruction map is represented by using the basic map element corresponding to the second capability information, and the second capability information indicates the type information of the basic map element supported by the second communication device.

In a possible implementation, the method further includes: The first communication device sends first capability information to the second communication device, where the first capability information indicates type information of a basic map element supported by the first communication device. The environment reconstruction map is represented by using the basic map element corresponding to the first capability information.

In this implementation, the first communication device may send the first capability information to the second communication device, so that the second communication device can learn of the type information of the basic map element supported by the first communication device. After learning of the first capability information, the second communication device may represent the environment reconstruction map based on the basic map element corresponding to the first capability information, to facilitate parsing by the first communication device, and reduce parsing complexity.

In a possible implementation, the method further includes: The first communication device sends first capability information to the second communication device, where the first capability information indicates type information of a basic map element supported by the first communication device. The environment reconstruction map is represented by using a basic map element corresponding to third capability information, and the third capability information indicates at least one item in type information of a basic map element supported by both the first communication device and the second communication device.

In this implementation, the first communication device and the second communication device may support different type information of basic map elements. Therefore, the second communication device may determine the third capability information based on the received first capability information and the second capability information of the second communication device. In this way, the environment reconstruction map may be further represented by using the basic map element corresponding to the third capability information, to facilitate parsing by the first communication device, and reduce parsing complexity.

In a possible implementation, the method further includes: The first communication device receives second capability information sent by the second communication device, where the second capability information indicates type information of a basic map element supported by the second communication device. The first communication device determines third capability information based on the second capability information and first capability information, where the first capability information indicates type information of a basic map element supported by the first communication device, and the third capability information indicates at least one item in type information of a basic map element supported by both the first communication device and the second communication device. The first communication device sends the third capability information to the second communication device, where the environment reconstruction map is represented by using the basic map element corresponding to the third capability information.

In this implementation, the first communication device and the second communication device may support different type information of basic map elements. Therefore, the first communication device may determine the third capability information based on the received second capability information and the first capability information of the first communication device. In this way, the environment reconstruction map may be represented by using the basic map element corresponding to the third capability information.

With reference to the first aspect, in some implementations of the first aspect, the method further includes: The first communication device obtains first information, where the first information indicates a correspondence between a first service and type information of a basic map element, and the first service includes the communication service and/or the sensing service.

In an example, that the first communication device obtains the first information includes: The first communication device receives the first information sent by a second communication device. In another example, the first information may be information predefined in a protocol.

In this embodiment of this application, the first communication device may obtain the first information. The first information indicates the correspondence between the first service and type information of a basic map element, and the first service includes different communication services and/or sensing services. In other words, the first communication device may determine, based on the first information, a correspondence between a to-be-performed service and a basic map element. For example, if the first communication device performs a beam tracking task, the first communication device may be to obtain information of a polygon type.

In a possible implementation, that the first communication device obtains the environment reconstruction map of the first space includes: The first communication device scans the first space to obtain the environment reconstruction map, where the environment reconstruction map is represented by using a basic map element corresponding to a target service, the target service is a service that is to be performed by the first communication device, and the first service includes the target service.

In this implementation, the first communication device may scan the first space to obtain the related environment reconstruction map, and the environment reconstruction map may be parsed and represented by using the basic map element corresponding to the target service. In other words, during scanning, the first communication device may directly obtain the basic map element corresponding to the target service, to reduce power consumption during scanning.

In a possible implementation, the method further includes: The first communication device sends the environment reconstruction map to the second communication device.

In this implementation, the first communication device may send the obtained environment reconstruction map related to the target service to the second communication device, so that the second communication device performs a related communication service and/or sensing service based on the environment reconstruction map.

In a possible implementation, that the first communication device obtains the environment reconstruction map of the first space includes: The first communication device receives the environment reconstruction map sent by the second communication device, where the environment reconstruction map is represented by using a basic map element corresponding to a target service, the first service includes the target service, and the target service is a service that is to be performed by the first communication device.

In this implementation, the first communication device may directly receive the environment reconstruction map that is about the target service and that is sent by the second communication device. The environment reconstruction map of the target service can be obtained without active scanning/sensing by the first communication device, to reduce overheads of the first communication device, and reduce power consumption of the first communication device.

In a possible implementation, before the first communication device receives the environment reconstruction map sent by the second communication device, the method further includes: The first communication device sends the target service to the second communication device.

In this implementation, to help the second communication device accurately learn of the target service that is to be performed by the first communication device, the first communication device may actively report the sensing service and/or the communication service that is to be performed by the first communication device, so that the second communication device can determine the environment reconstruction map based on the target service.

In a possible implementation, that the first communication device obtains the environment reconstruction map of the first space includes: The first communication device receives a service environment reconstruction map sent by the second communication device, where the service environment reconstruction map is represented by using a basic map element corresponding to the first service. The first communication device determines the environment reconstruction map from the service environment reconstruction map based on a target service, where the target service is a service that is to be performed by the first communication device, the first service includes the target service, and the environment reconstruction map is represented by using a basic map element corresponding to the target service.

In this implementation, the second communication device may send the service environment reconstruction map corresponding to the first service to the first communication device, so that the first communication device can determine, based on the service environment reconstruction map, the environment reconstruction map related to the target service.

With reference to the first aspect, in some implementations of the first aspect, the type information of the basic map element may include at least one of the following: a point, a straight line, a curve, a plane, a surface, a cube, a cylinder, a cone, a sphere, a voxel, and an octree.

With reference to the first aspect, in some implementations of the first aspect, the location information of the basic map element includes at least one of the following: coordinates of the basic map element in the environment reconstruction map, an index of the basic map element in the environment reconstruction map, and a space range of the basic map element in the environment reconstruction map.

With reference to the first aspect, in some implementations of the first aspect, the parameter information of the basic map element further includes: a representation parameter, where the representation parameter represents a geometric feature of the basic map element; an attribute type, where the attribute type may include at least one of the following: a material, a texture, a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element. In this embodiment of this application, there may be a plurality of types of parameter information of basic map elements, and there may also be a plurality of types of type information of basic map elements and a plurality of types of location information of basic map elements. In other words, different data formats can be flexibly used for different sensing services and communication services, different UE capabilities, different base station capabilities, and the like. In addition, the basic map element may be represented in a plurality of manners, and can support a plurality of sensing scenarios and/or communication scenarios, to reduce standardization difficulty, and provide generality and extensibility.

With reference to the first aspect, in some implementations of the first aspect, the environment reconstruction map is a map obtained by data compression.

With reference to the first aspect, in some implementations of the first aspect, the environment reconstruction map is a map obtained by fusing and compressing basic map elements corresponding to same type information, and/or the environment reconstruction map is a map obtained by fusing and compressing same representation parameters.

In this embodiment of this application, before the environment reconstruction map is transmitted, the basic map elements included in the environment reconstruction map may be fused and compressed. A compression method includes but is not limited to the following manners: transformation, projection, differencing, quantization, entropy coding, and the like. It should be understood that data compression can reduce a data transmission amount and air interface overheads.

According to a second aspect, a communication method is provided. The method may be performed by a second communication device. Unless otherwise specified, the "second communication device" in this application may be the second communication device (for example, a network device or a terminal device), or may be a component (for example, a processor, a chip, or a chip system) in the second communication device, or may be a logical module or software that can implement all or a part of functions of the second communication device.

The method includes: The second communication device receives an environment reconstruction map of a first space sent by the first communication device, where the first space is a space within a preset range of the first communication device, the environment reconstruction map is represented by using a basic map element, the basic map element includes parameter information of the basic map element, and the parameter information of the basic map element includes type information and location information of the basic map element. The second communication device performs a communication service based on the environment reconstruction map, where the communication service includes at least one of the following: multiple-input multiple-output MIMO transmission, channel measurement, link adaptation, beam management, high-frequency communication, network management, and data transmission.

In an example, the first communication device may be a UE, and the second communication device may be a base station. After receiving the environment reconstruction map sent by the UE, the base station may specifically perform the following communication services: MIMO transmission: adjusting a MIMO beam based on the obtained environment reconstruction map, performing MIMO precoding based on the obtained environment reconstruction map, especially performing MIMO precoding on a plurality of users, and the like; channel measurement: obtaining a channel propagation path parameter of the UE, channel prediction, and the like based on the obtained environment reconstruction map; link adaptation: performing coding and modulation selection, power control, and the like based on the obtained environment reconstruction map; beam management: performing operations such as beam alignment, beam search, beam training, beam prediction, and beam tracking based on the obtained environment reconstruction map; high-frequency communication: performing blockage prediction, beam switching, and the like based on the obtained environment reconstruction map; network management: performing operations such as load balancing, interference coordination, user mobility management, edge user management, and MU-MIMO user pairing based on the obtained environment reconstruction map; and data transmission: performing user data transmission, signaling transmission, network control data transmission, transmission of raw data/native data in a RAN, satellite communication and scheduling, and the like based on the obtained environment reconstruction map.

In another example, the first communication device may be a base station, and the second communication device may be a UE. After receiving the environment reconstruction map sent by the base station, the UE may specifically perform the following communication services: MIMO transmission: performing channel prediction on a channel based on the obtained environment reconstruction map, and the like; channel measurement: performing channel estimation, obtaining a propagation path parameter and channel covariance information, performing channel prediction, and the like based on the obtained environment reconstruction map; link adaptation: performing channel link estimation, power control, and the like based on the obtained environment reconstruction map; beam management: performing beam alignment, beam search, beam training, beam prediction, beam tracking, and the like based on the obtained environment reconstruction map; high-frequency communication: performing millimeter wave communication, terahertz communication, blockage prediction, beam switching, and the like based on the obtained environment reconstruction map; network management: assisting in interference coordination on a network, user mobility management, access control, and the like based on the obtained environment reconstruction map; and data transmission: performing data transmission, including user data transmission, signaling transmission, network control data transmission, transmission of raw data/native data in a RAN, and satellite communication based on the obtained environment reconstruction map.

In this embodiment of this application, the second communication device may receive the environment reconstruction map sent by the first communication device, to perform the communication service based on the environment reconstruction map, for example, can implement sensing-assisted communication, to reduce signaling overheads, reduce a transmission/scheduling latency, ensure communication quality, improve accuracy of a communication-related parameter, and obtain a better transmission/scheduling parameter.

Specifically, for a MIMO transmission task, for example, channel prediction is performed on a channel, and a UE may feed back channel prediction that is based on the environment reconstruction map to a base station instead of original channel prediction, so that a feedback data amount can be reduced. For link blockage prediction on a base station side, a transmission parameter of the UE can be determined and adjusted in advance, to avoid blockage and ensure communication quality of the UE. For a channel measurement task, the first communication device may obtain more accurate information such as a propagation path parameter based on an environment map, to better communicate with the second communication device. For a beam management task, based on an environment map, the first communication device may obtain more accurate beam state information and beam prediction information, or obtain a more accurate beam alignment result, or reduce a beam training latency, to better communicate with the second communication device. For a high-frequency communication task, based on an environment map, the first communication device may obtain more accurate channel state information, beam information, and the like, or determine blockage in advance, to reduce a beam switching latency and ensure communication quality, so as to better communicate with the second communication device. For the network management, a base station may determine a status such as interference in advance based on an environment map, to improve quality of interference coordination and user scheduling, or reduce a user mobility management (handover) latency. A UE feeds back channel state information to the base station based on the environment map, to help the base station obtain a better MU-MIMO pairing result. For the data transmission, the first communication device obtains a more accurate data transmission parameter based on an environment map, to improve quality of data transmission between the first communication device and the second communication device.

With reference to the second aspect, in some possible implementations of the second aspect, the environment reconstruction map is represented by using a basic map element corresponding to first capability information, and the first capability information indicates type information of the basic map element supported by the first communication device.

With reference to the second aspect, in some implementations of the second aspect, the method further includes: The second communication device receives the first capability information sent by the first communication device, where the first capability information indicates the type information of the basic map element supported by the first communication device.

In this embodiment of this application, the second communication device may receive the first capability information sent by the first communication device, to learn of the type information of the basic map element supported by the first communication device.

With reference to the second aspect, in some implementations of the second aspect, the method further includes: The second communication device sends second capability information to the first communication device, where the second capability information indicates type information of a basic map element supported by the second communication device. The environment reconstruction map is represented by using the basic map element corresponding to the second capability information.

In this embodiment of this application, the second communication device may send the second capability information to the first communication device, so that the first communication device can learn of the type information of the basic map element supported by the second communication device. After learning of the second capability information, the first communication device may represent the environment reconstruction map based on the basic map element corresponding to the second capability information, to facilitate parsing by the second communication device, and reduce parsing complexity.

With reference to the second aspect, in some implementations of the second aspect, the method further includes: The second communication device sends second capability information to the first communication device, where the second capability information indicates type information of a basic map element supported by the second communication device. The environment reconstruction map is represented by using a basic map element corresponding to third capability information, and the third capability information indicates at least one item in type information of a basic map element supported by both the first communication device and the second communication device.

In this embodiment of this application, the first communication device and the second communication device may support different type information of basic map elements. Therefore, the second communication device may send the second capability information to the first communication device, so that the first communication device determines the third capability information based on the received second capability information and the first capability information of the first communication device. In this way, the environment reconstruction map may be further represented by using the basic map element corresponding to the third capability information, to facilitate parsing by the second communication device or the first communication device, and reduce parsing complexity.

With reference to the second aspect, in some implementations of the second aspect, before the second communication device receives the environment reconstruction map of the first space sent by the first communication device, the method further includes: The second communication device sends a global environment reconstruction map to the first communication device, where the global environment reconstruction map is represented by using a basic map element corresponding to second capability information, and the second capability information indicates type information of the basic map element supported by the second communication device. The environment reconstruction map is represented by using a basic map element corresponding to first capability information, and the first capability information indicates type information of the basic map element supported by the first communication device.

In this embodiment of this application, the second communication device may send the global environment reconstruction map to the first communication device. However, the global environment reconstruction map is represented by using the basic map element corresponding to the second capability information. The first communication device may not support representation of some types of data in the global environment reconstruction map. Therefore, the first communication device may determine the environment reconstruction map applicable to the first communication device from the global environment reconstruction map, to perform a subsequent communication service.

With reference to the second aspect, in some implementations of the second aspect, before the second communication device receives the environment reconstruction map of the first space sent by the first communication device, the method further includes: The second communication device sends a first local environment reconstruction map to the first communication device, where the first local environment reconstruction map is an environment reconstruction map that is in the first space and that the second communication device has.

In this embodiment of this application, the second communication device may send the first local environment reconstruction map to the first communication device, so that the first communication device can obtain a more refined environment reconstruction map based on the first local environment reconstruction map. In this way, the first communication device and the second communication device can obtain better service effect.

With reference to the second aspect, in some implementations of the second aspect, the method further includes: The second communication device obtains first information, where the first information indicates a correspondence between a first service and type information of a basic map element, and the first service includes the communication service and/or a sensing service.

In an example, that the second communication device obtains the first information includes: The second communication device receives the first information sent by the first communication device. In another example, the first information may be information predefined in a protocol.

In this embodiment of this application, the second communication device may obtain the first information in different manners, so that the second communication device can learn of a correspondence between different services and basic map elements, so that type information of a basic map element corresponding to a target service can be subsequently determined based on the first information and the target service.

In a possible implementation, the environment reconstruction map is represented by using the basic map element corresponding to the target service, the target service is a service that is to be performed by the first communication device, and the first service includes the target service.

With reference to the second aspect, in some implementations of the second aspect, the type information of the basic map element may include at least one of the following: a point, a straight line, a curve, a plane, a surface, a cube, a cylinder, a cone, a sphere, a voxel, and an octree.

With reference to the second aspect, in some implementations of the second aspect, the location information of the basic map element includes at least one of the following: coordinates of the basic map element in the environment reconstruction map, an index of the basic map element in the environment reconstruction map, and a space range of the basic map element in the environment reconstruction map.

With reference to the second aspect, in some implementations of the second aspect, the parameter information of the basic map element further includes: a representation parameter, where the representation parameter represents a geometric feature of the basic map element; an attribute type, where the attribute type may include at least one of the following: a material, a texture, a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element. In this embodiment of this application, there may be a plurality of types of parameter information of basic map elements, and there may also be a plurality of types of type information of basic map elements and a plurality of types of location information of basic map elements. In other words, different data formats can be flexibly used for different sensing services and communication services, different UE capabilities, different base station capabilities, and the like. In addition, the basic map element may be represented in a plurality of manners, and can support a plurality of sensing scenarios and/or communication scenarios, to reduce standardization difficulty, and provide generality and extensibility.

With reference to the second aspect, in some implementations of the second aspect, the environment reconstruction map is a map obtained by data compression.

With reference to the second aspect, in some implementations of the second aspect, the environment reconstruction map is a map obtained by fusing and compressing basic map elements corresponding to same type information, and/or the environment reconstruction map is a map obtained by fusing and compressing same representation parameters.

In this embodiment of this application, before the environment reconstruction map is transmitted, the basic map elements included in the environment reconstruction map may be fused and compressed. A compression method includes but is not limited to the following manners: transformation, projection, differencing, quantization, entropy coding, and the like. It should be understood that data compression can reduce a data transmission amount and air interface overheads.

According to a third aspect, a communication method is provided. The method may be performed by a second communication device. Unless otherwise specified, the "second communication device" in this application may be the second communication device (for example, a network device or a terminal device), or may be a component (for example, a processor, a chip, or a chip system) in the second communication device, or may be a logical module or software that can implement all or a part of functions of the second communication device.

The method includes: The second communication device sends an environment reconstruction map of a first space to a first communication device, where the first space is a space within a preset range of the first communication device, the environment reconstruction map is represented by using a basic map element, the basic map element includes parameter information of the basic map element, and the parameter information of the basic map element includes type information and location information of the basic map element. The second communication device performs a communication service, where the communication service includes at least one of the following: multiple-input multiple-output MIMO transmission, channel measurement, link adaptation, beam management, high-frequency communication, network management, and data transmission.

In an example, the first communication device may be a UE, and the second communication device may be a base station. After the base station sends the environment reconstruction map to the UE, the UE may obtain the environment reconstruction map from the base station. The base station may perform the following communication services: MIMO transmission, channel measurement, link adaptation, beam management, high-frequency communication, network management, and data transmission. Details are as follows:
For a MIMO transmission task, the UE may send channel prediction information to the base station; and after receiving the channel prediction information from the UE, the base station may adjust a MIMO beam, perform MIMO precoding on a plurality of users, and the like.

For a channel measurement task, the UE may send channel estimation, a propagation path parameter, and the like to the base station; and the base station receives the channel estimation, the propagation path parameter, and the like from the UE, and adjust transmission parameters (including coding, modulation, control of a quantity of MIMO streams, MIMO precoding, and the like) that are between the base station and the UE.

For a beam management task, the UE may send beam feedback information to the base station; and the base station receives the beam feedback information from the UE, and then may perform beam alignment, beam search, beam training, beam prediction, beam tracking, and the like.

For a high-frequency communication task, the UE may send channel feedback information to the base station; and the base station receives the channel feedback information from the UE, and the base station may perform millimeter wave communication, terahertz communication, blockage prediction, beam switching, and the like based on the channel feedback information.

For a network management task, the UE may send interference measurement information, channel feedback information, and the like to the base station; and the base station receives the interference measurement information, the channel feedback information, and the like from the UE, and then performs load balancing, interference coordination, user mobility management, edge user management, MU-MIMO user pairing, and the like.

For a data transmission task, the UE may send user data, signaling, raw data/native data in a RAN, and the like to the base station; and the base station may receive the user data, the signaling, the raw data/native data in the RAN, and the like from the UE. Alternatively, the UE may send a transmission request to the base station, and the base station receives the transmission request from the UE, to perform user data transmission, signaling transmission, network control data transmission, transmission of raw data/native data in the RAN, satellite communication and scheduling, and the like.

In an example, the first communication device may be a base station, and the second communication device may be a UE. After the UE sends the environment reconstruction map to the base station, the base station may obtain the environment reconstruction map from the UE, and the UE may perform the following communication services:

For a MIMO transmission task, for example, channel prediction is performed on a channel, and the UE may feed back channel prediction that is based on the environment reconstruction map to the base station instead of original channel prediction, so that a feedback data amount can be reduced.

For a channel measurement task, the UE may obtain a propagation path parameter, channel covariance information, channel prediction, and the like, and feed back the information to the base station; and the base station obtains channel information of the UE based on the feedback from the UE and the environment reconstruction map.

For a beam management task, the UE may feed back beam state information and beam prediction information to the base station; and the base station performs beam alignment, beam search, beam training, beam prediction, beam tracking, and the like based on the feedback from the UE and the environment reconstruction map.

In this embodiment of this application, the second communication device may send the environment reconstruction map to the first communication device, and may further perform the communication service better based on information fed back by the first communication device, to perform the communication service based on the environment reconstruction map, for example, can implement sensing-assisted communication, to reduce signaling overheads, reduce a transmission/scheduling latency, ensure communication quality, improve accuracy of a communication-related parameter, and obtain a better transmission/scheduling parameter.

Specifically, for a MIMO transmission task, for example, channel prediction is performed on a channel, and the UE may feed back channel prediction that is based on the environment reconstruction map to the base station instead of original channel prediction, so that a feedback data amount can be reduced. For link blockage prediction on a base station side, a transmission parameter of the UE can be determined and adjusted in advance, to avoid blockage and ensure communication quality of the UE. For a channel measurement task, the first communication device may obtain more accurate information such as a propagation path parameter based on an environment map, to better communicate with the second communication device. For a beam management task, based on an environment map, the first communication device may obtain more accurate beam state information and beam prediction information, or obtain a more accurate beam alignment result, or reduce a beam training latency, to better communicate with the second communication device. For a high-frequency communication task, based on an environment map, the first communication device may obtain more accurate channel state information, beam information, and the like, or determine blockage in advance, to reduce a beam switching latency and ensure communication quality, so as to better communicate with the second communication device. For the network management, the base station may determine a status such as interference in advance based on an environment map, to improve quality of interference coordination and user scheduling, or reduce a user mobility management (handover) latency. The UE feeds back channel state information to the base station based on the environment map, to help the base station obtain a better MU-MIMO pairing result. For the data transmission, the first communication device obtains a more accurate data transmission parameter based on an environment map, to improve quality of data transmission between the first communication device and the second communication device.

With reference to the third aspect, in some implementations of the third aspect, the method further includes: The second communication device sends second capability information to the first communication device, where the second capability information indicates type information of a basic map element supported by the second communication device.

In this embodiment of this application, the second communication device may send the second capability information to the first communication device, and the first communication device may receive the second capability information sent by the second communication device, so that the first communication device can learn of the type information of the basic map element supported by the second communication device.

With reference to the third aspect, in some possible implementations of the third aspect, the environment reconstruction map is represented by using the basic map element corresponding to the second capability information, and the second capability information indicates the type information of the basic map element supported by the second communication device.

With reference to the third aspect, in some possible implementations of the third aspect, the method further includes: The second communication device receives first capability information sent by the first communication device, where the first capability information indicates type information of a basic map element supported by the first communication device, and the environment reconstruction map is represented by using the basic map element corresponding to the first capability information.

In this embodiment of this application, the second communication device may receive the first capability information sent by the first communication device, to represent the environment reconstruction map by using the basic map element corresponding to the first capability information, and may further send the environment reconstruction map to the first communication device, to facilitate performing the communication service by the first communication device. With reference to the third aspect, in some possible implementations of the third aspect, the method further includes: The second communication device receives first capability information sent by the first communication device, where the first capability information indicates type information of a basic map element supported by the first communication device. The second communication device determines third capability information based on the first capability information and second capability information, where the third capability information indicates at least one item in type information of a basic map element supported by both the first communication device and the second communication device, and the environment reconstruction map is represented by using the basic map element corresponding to the third capability information.

In this embodiment of this application, the first communication device and the second communication device may support different type information. Therefore, the second communication device may determine the third capability information, and the third capability information indicates at least one of the type information of the basic map elements supported by both the first communication device and the second communication device. Therefore, the environment reconstruction map may be represented based on a plurality of basic map elements corresponding to the third capability information. In this way, both the first communication device and the second communication device can directly use the environment reconstruction map. With reference to the third aspect, in some possible implementations of the third aspect, the method further includes: The second communication device receives third capability information sent by the first communication device, where the third capability information indicates at least one item in type information of a basic map element supported by both the first communication device and the second communication device, and the environment reconstruction map is represented by using the basic map element corresponding to the third capability information.

In this embodiment of this application, the first communication device and the second communication device may support different type information. Therefore, the first communication device may determine the third capability information and then send the third capability information to the second communication device, and the third capability information indicates at least one of the type information of the basic map elements supported by both the first communication device and the second communication device. Therefore, the environment reconstruction map obtained by the second communication device may be represented by using a plurality of basic map elements corresponding to the third capability information. In this way, both the first communication device and the second communication device can directly use the environment reconstruction map.

With reference to the third aspect, in some implementations of the third aspect, the method further includes: The second communication device obtains first information, where the first information indicates a correspondence between a first service and type information of a basic map element, and the first service includes the communication service and/or a sensing service.

In a possible implementation, that the second communication device obtains the first information includes: The second communication device receives the first information sent by the first communication device.

In this embodiment of this application, the second communication device may obtain the first information in different manners, so that the second communication device can learn of a correspondence between different services and basic map elements, so that type information of a basic map element corresponding to a target service can be subsequently determined based on the first information and the target service.

In a possible implementation, the environment reconstruction map is represented by using a basic map element corresponding to a target service, the target service is a service that is to be performed by the first communication device, and the first service includes the target service.

In this embodiment of this application, the environment reconstruction map sent by the second communication device to the first communication device may be a map corresponding to a service that is to be performed by the first communication device (namely, the target service). In this way, after receiving the environment reconstruction map, the first communication device may perform the target service based on the environment reconstruction map.

In a possible implementation, before the second communication device sends the environment reconstruction map of the first space to the first communication device, the method further includes: The second communication device receives the target service sent by the first communication device. The second communication device determines the environment reconstruction map based on the target service.

In this embodiment of this application, before the second communication device sends the environment reconstruction map to the first communication device, the second communication device may receive the target service sent by the first communication device, so that the environment reconstruction map corresponding to the target service can be directly determined based on the target service.

With reference to the third aspect, in some implementations of the third aspect, the type information of the basic map element may include at least one of the following: a point, a straight line, a curve, a plane, a surface, a cube, a cylinder, a cone, a sphere, a voxel, and an octree.

With reference to the third aspect, in some implementations of the third aspect, the location information of the basic map element includes at least one of the following: coordinates of the basic map element in the environment reconstruction map, an index of the basic map element in the environment reconstruction map, and a space range of the basic map element in the environment reconstruction map.

With reference to the third aspect, in some implementations of the third aspect, the parameter information of the basic map element further includes: a representation parameter, where the representation parameter represents a geometric feature of the basic map element; an attribute type, where the attribute type may include at least one of the following: a material, a texture, a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element. In this embodiment of this application, there may be a plurality of types of parameter information of basic map elements, and there may also be a plurality of types of type information of basic map elements and a plurality of types of location information of basic map elements. In other words, different data formats can be flexibly used for different sensing services and communication services, different UE capabilities, different base station capabilities, and the like. In addition, the basic map element may be represented in a plurality of manners, and can support a plurality of sensing scenarios and/or communication scenarios, to reduce standardization difficulty, and provide generality and extensibility.

With reference to the third aspect, in some implementations of the third aspect, the environment reconstruction map is a map obtained by data compression.

With reference to the third aspect, in some implementations of the third aspect, the environment reconstruction map is a map obtained by fusing and compressing basic map elements corresponding to same type information, and/or the environment reconstruction map is a map obtained by fusing and compressing same representation parameters.

In this embodiment of this application, before the environment reconstruction map is transmitted, the basic map elements included in the environment reconstruction map may be fused and compressed. A compression method includes but is not limited to the following manners: transformation, projection, differencing, quantization, entropy coding, and the like. It should be understood that data compression can reduce a data transmission amount and air interface overheads.

According to a fourth aspect, a communication apparatus is provided, including: an obtaining unit, configured to obtain an environment reconstruction map of a first space, where the first space is a space within a preset range of the first communication device, the environment reconstruction map is represented by using a basic map element, the basic map element includes parameter information of the basic map element, and the parameter information of the basic map element includes type information and location information of the basic map element; and a processing unit, configured to perform a communication service based on the environment reconstruction map, where the communication service includes at least one of the following: multiple-input multiple-output MIMO transmission, channel measurement, link adaptation, beam management, high-frequency communication, network management, and data transmission.

With reference to the fourth aspect, in some implementations of the fourth aspect, the obtaining unit is further configured to scan the first space to obtain the environment reconstruction map.

With reference to the fourth aspect, in some possible implementations of the fourth aspect, the environment reconstruction map is represented by using a basic map element corresponding to first capability information, and the first capability information indicates type information of the basic map element supported by the first communication device.

With reference to the fourth aspect, in some implementations of the fourth aspect, the obtaining unit is further configured to receive second capability information sent by a second communication device, where the second capability information indicates type information of a basic map element supported by the second communication device, and the environment reconstruction map is represented by using the basic map element corresponding to the second capability information. With reference to the fourth aspect, in some implementations of the fourth aspect, the obtaining unit is further configured to receive second capability information sent by a second communication device, where the second capability information indicates type information of a basic map element supported by the second communication device. The processing unit is further configured to determine third capability information based on the second capability information and first capability information, where the first capability information indicates type information of a basic map element supported by the first communication device, the third capability information indicates at least one item in type information of a basic map element supported by both the first communication device and the second communication device, and the environment reconstruction map is represented by using the basic map element corresponding to the third capability information.

With reference to the fourth aspect, in some implementations of the fourth aspect, the obtaining unit is further configured to receive a global environment reconstruction map sent by a second communication device, where the global environment reconstruction map is represented by using a basic map element corresponding to second capability information, and the second capability information indicates type information of the basic map element supported by the second communication device. The processing unit is further configured to determine the environment reconstruction map from the global environment reconstruction map based on first capability information, where the environment reconstruction map is represented by using a basic map element corresponding to the first capability information, and the first capability information indicates type information of the basic map element supported by the first communication device. With reference to the fourth aspect, in some implementations of the fourth aspect, the obtaining unit is further configured to receive a first local environment reconstruction map sent by a second communication device, where the first local environment reconstruction map is an environment reconstruction map that is in the first space and that the second communication device has. The obtaining unit is further configured to scan the first space to obtain a second local environment reconstruction map. The processing unit is further configured to determine the environment reconstruction map based on the first local environment reconstruction map and the second local environment reconstruction map.

With reference to the fourth aspect, in some implementations of the fourth aspect, the communication apparatus further includes a sending unit, and the sending unit is configured to send the environment reconstruction map to the second communication device.

With reference to the fourth aspect, in some implementations of the fourth aspect, the sending unit is further configured to send the first capability information to the second communication device, where the first capability information indicates the type information of the basic map element supported by the first communication device.

With reference to the fourth aspect, in some implementations of the fourth aspect, the obtaining unit is further configured to receive the environment reconstruction map sent by a second communication device.

With reference to the fourth aspect, in some implementations of the fourth aspect, the obtaining unit is further configured to receive second capability information sent by the second communication device, where the second capability information indicates type information of a basic map element supported by the second communication device.

With reference to the fourth aspect, in some possible implementations of the fourth aspect, the environment reconstruction map is represented by using the basic map element corresponding to the second capability information, and the second capability information indicates the type information of the basic map element supported by the second communication device.

With reference to the fourth aspect, in some implementations of the fourth aspect, the sending unit is further configured to send first capability information to the second communication device, where the first capability information indicates type information of a basic map element supported by the first communication device. The environment reconstruction map is represented by using the basic map element corresponding to the first capability information.

With reference to the fourth aspect, in some implementations of the fourth aspect, the sending unit is further configured to send first capability information to the second communication device, where the first capability information indicates type information of a basic map element supported by the first communication device. The environment reconstruction map is represented by using a basic map element corresponding to third capability information, and the third capability information indicates at least one item in type information of a basic map element supported by both the first communication device and the second communication device.

With reference to the fourth aspect, in some implementations of the fourth aspect, the obtaining unit is further configured to receive second capability information sent by the second communication device, where the second capability information indicates type information of a basic map element supported by the second communication device. The processing unit is further configured to determine third capability information based on the second capability information and first capability information, where the first capability information indicates type information of a basic map element supported by the first communication device, the third capability information indicates at least one item in type information of a basic map element supported by both the first communication device and the second communication device. The sending unit is further configured to send the third capability information to the second communication device, where the environment reconstruction map is represented by using the basic map element corresponding to the third capability information.

With reference to the fourth aspect, in some implementations of the fourth aspect, the obtaining unit is further configured to obtain first information, where the first information indicates a correspondence between a first service and type information of a basic map element, and the first service includes the communication service and/or a sensing service.

With reference to the fourth aspect, in some implementations of the fourth aspect, the obtaining unit is further configured to receive the first information sent by a second communication device. With reference to the fourth aspect, in some implementations of the fourth aspect, the processing unit is further configured to scan the first space to obtain the environment reconstruction map, where the environment reconstruction map is represented by using a basic map element corresponding to a target service, the target service is a service that is to be performed by the first communication device, and the first service includes the target service.

With reference to the fourth aspect, in some implementations of the fourth aspect, the sending unit is further configured to send the environment reconstruction map to the second communication device.

With reference to the fourth aspect, in some implementations of the fourth aspect, the obtaining unit is further configured to receive the environment reconstruction map sent by the second communication device, where the environment reconstruction map is represented by using a basic map element corresponding to a target service, the first service includes the target service, and the target service is a service that is to be performed by the first communication device.

With reference to the fourth aspect, in some implementations of the fourth aspect, the sending unit is further configured to send the target service to the second communication device.

With reference to the fourth aspect, in some implementations of the fourth aspect, the obtaining unit is further configured to receive a service environment reconstruction map sent by the second communication device, where the service environment reconstruction map is represented by using a basic map element corresponding to the first service. The processing unit is further configured to determine the environment reconstruction map from the service environment reconstruction map based on a target service, where the target service is a service that is to be performed by the first communication device, the first service includes the target service, and the environment reconstruction map is represented by using a basic map element corresponding to the target service. With reference to the fourth aspect, in some implementations of the fourth aspect, the type information of the basic map element includes at least one of the following: a plane, a voxel, an octree, a sphere, a cylinder, and a cone.

With reference to the fourth aspect, in some implementations of the fourth aspect, the location information of the basic map element includes at least one of the following: coordinates of the basic map element in the environment reconstruction map, an index of the basic map element in the environment reconstruction map, and a space range of the basic map element in the environment reconstruction map.

With reference to the fourth aspect, in some implementations of the fourth aspect, the parameter information of the basic map element further includes: a representation parameter, where the representation parameter represents a geometric feature of the basic map element; an attribute type, where the attribute type includes at least one of the following: a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element.

With reference to the fourth aspect, in some implementations of the fourth aspect, the environment reconstruction map is a map obtained by data compression.

With reference to the fourth aspect, in some implementations of the fourth aspect, the environment reconstruction map is a map obtained by fusing and compressing basic map elements corresponding to same type information, and/or the environment reconstruction map is a map obtained by fusing and compressing same representation parameters.

For beneficial effect of the communication apparatus in the fourth aspect, refer to beneficial effect of the method in the first aspect. Details are not described herein again.

According to a fifth aspect, a communication apparatus is provided, including: an obtaining unit, configured to receive an environment reconstruction map of a first space sent by a first communication device, where the first space is a space within a preset range of the first communication device, the environment reconstruction map is represented by using a basic map element, the basic map element includes parameter information of the basic map element, and the parameter information of the basic map element includes type information and location information of the basic map element; and a processing unit, configured to perform a communication service based on the environment reconstruction map, where the communication service includes at least one of the following: multiple-input multiple-output MIMO transmission, channel measurement, link adaptation, beam management, high-frequency communication, network management, and data transmission.

With reference to the fifth aspect, in some possible implementations of the fifth aspect, the environment reconstruction map is represented by using a basic map element corresponding to first capability information, and the first capability information indicates type information of the basic map element supported by the first communication device.

With reference to the fifth aspect, in some implementations of the fifth aspect, the obtaining unit is further configured to receive the first capability information sent by the second communication device, where the first capability information indicates the type information of the basic map element supported by the first communication device.

With reference to the fifth aspect, in some implementations of the fifth aspect, the communication apparatus further includes a sending unit, and the sending unit is further configured to send second capability information to the first communication device, where the second capability information indicates type information of a basic map element supported by the second communication device. The environment reconstruction map is represented by using the basic map element corresponding to the second capability information.

With reference to the fifth aspect, in some implementations of the fifth aspect, the sending unit is further configured to send second capability information to the first communication device, where the second capability information indicates type information of a basic map element supported by the second communication device. The environment reconstruction map is represented by using a basic map element corresponding to third capability information, and the third capability information indicates at least one item in type information of a basic map element supported by both the first communication device and the second communication device.

With reference to the fifth aspect, in some implementations of the fifth aspect, the sending unit is further configured to send a global environment reconstruction map to the first communication device, where the global environment reconstruction map is represented by using a basic map element corresponding to second capability information, and the second capability information indicates type information of the basic map element supported by the second communication device. The environment reconstruction map is represented by using a basic map element corresponding to first capability information, and the first capability information indicates type information of the basic map element supported by the first communication device.

With reference to the fifth aspect, in some implementations of the fifth aspect, the sending unit is further configured to send a first local environment reconstruction map to the first communication device, where the first local environment reconstruction map is an environment reconstruction map that is in the first space and that the second communication device has.

With reference to the fifth aspect, in some implementations of the fifth aspect, the obtaining unit is further configured to obtain first information, where the first information indicates a correspondence between a first service and type information of a basic map element, and the first service includes the communication service and/or a sensing service.

With reference to the fifth aspect, in some implementations of the fifth aspect, the obtaining unit is further configured to receive the first information sent by the first communication device.

With reference to the fifth aspect, in some implementations of the fifth aspect, the environment reconstruction map is represented by using a basic map element corresponding to a target service, the target service is a service that is to be performed by the first communication device, and the first service includes the target service.

With reference to the fifth aspect, in some implementations of the fifth aspect, the type information of the basic map element includes at least one of the following: a plane, a voxel, an octree, a sphere, a cylinder, and a cone.

With reference to the fifth aspect, in some implementations of the fifth aspect, the location information of the basic map element includes at least one of the following: coordinates of the basic map element in the environment reconstruction map, an index of the basic map element in the environment reconstruction map, and a space range of the basic map element in the environment reconstruction map.

With reference to the fifth aspect, in some implementations of the fifth aspect, the parameter information of the basic map element further includes: a representation parameter, where the representation parameter represents a geometric feature of the basic map element; an attribute type, where the attribute type includes at least one of the following: a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element.

With reference to the fifth aspect, in some implementations of the fifth aspect, the environment reconstruction map is a map obtained by data compression.

With reference to the fifth aspect, in some implementations of the fifth aspect, the environment reconstruction map is a map obtained by fusing and compressing basic map elements corresponding to same type information, and/or the environment reconstruction map is a map obtained by fusing and compressing same representation parameters.

For beneficial effect of the communication apparatus in the fifth aspect, refer to beneficial effect of the method in the second aspect. Details are not described herein again.

According to a sixth aspect, a communication apparatus is provided, including: a sending unit, configured to send an environment reconstruction map of a first space to a first communication device, where the first space is a space within a preset range of the first communication device, the environment reconstruction map is represented by using a basic map element, the basic map element includes parameter information of the basic map element, and the parameter information of the basic map element includes type information and location information of the basic map element; and a processing unit, configured to perform a communication service, where the communication service includes at least one of the following: multiple-input multiple-output MIMO transmission, channel measurement, link adaptation, beam management, high-frequency communication, network management, and data transmission.

With reference to the sixth aspect, in some implementations of the sixth aspect, the sending unit is further configured to send second capability information to the second communication device, where the second capability information indicates type information of a basic map element supported by the second communication device.

With reference to the sixth aspect, in some possible implementations of the sixth aspect, the environment reconstruction map is represented by using the basic map element corresponding to the second capability information, and the second capability information indicates the type information of the basic map element supported by the second communication device.

With reference to the sixth aspect, in some possible implementations of the sixth aspect, the communication apparatus further includes: an obtaining unit. The obtaining unit is configured to receive first capability information sent by the first communication device, where the first capability information indicates type information of a basic map element supported by the first communication device. The environment reconstruction map is represented by using the basic map element corresponding to the first capability information.

With reference to the sixth aspect, in some possible implementations of the sixth aspect, the obtaining unit is further configured to receive first capability information sent by the first communication device, where the first capability information indicates type information of a basic map element supported by the first communication device. The processing unit is further configured to determine third capability information based on the first capability information and second capability information, where the third capability information indicates at least one item in type information of a basic map element supported by both the first communication device and the second communication device, and the environment reconstruction map is represented by using the basic map element corresponding to the third capability information.

With reference to the sixth aspect, in some possible implementations of the sixth aspect, the obtaining unit is further configured to receive third capability information sent by the first communication device, where the third capability information indicates at least one item in type information of a basic map element supported by both the first communication device and the second communication device, and the environment reconstruction map is represented by using the basic map element corresponding to the third capability information.

With reference to the sixth aspect, in some implementations of the sixth aspect, the obtaining unit is further configured to obtain first information, where the first information indicates a correspondence between a first service and type information of a basic map element, and the first service includes the communication service and/or a sensing service.

With reference to the sixth aspect, in some implementations of the sixth aspect, the obtaining unit is further configured to receive the first information sent by the first communication device.

With reference to the sixth aspect, in some implementations of the sixth aspect, the environment reconstruction map is represented by using a basic map element corresponding to a target service, the target service is a service that is to be performed by the first communication device, and the first service includes the target service.

With reference to the sixth aspect, in some implementations of the sixth aspect, the obtaining unit is further configured to receive the target service sent by the first communication device; and the processing unit is further configured to determine the environment reconstruction map based on the target service.

With reference to the sixth aspect, in some implementations of the sixth aspect, the type information of the basic map element includes at least one of the following: a plane, a voxel, an octree, a sphere, a cylinder, and a cone.

With reference to the sixth aspect, in some implementations of the sixth aspect, the location information of the basic map element includes at least one of the following: coordinates of the basic map element in the environment reconstruction map, an index of the basic map element in the environment reconstruction map, and a space range of the basic map element in the environment reconstruction map.

With reference to the sixth aspect, in some implementations of the sixth aspect, the parameter information of the basic map element further includes: a representation parameter, where the representation parameter represents a geometric feature of the basic map element; an attribute type, where the attribute type includes at least one of the following: a dielectric constant, a permeability, and a scattering coefficient; an attribute parameter, where the attribute parameter is a specific parameter value corresponding to the attribute type; and/or a reliability parameter, where the reliability parameter indicates a reliability degree of the basic map element.

With reference to the sixth aspect, in some implementations of the sixth aspect, the environment reconstruction map is a map obtained by data compression.

With reference to the sixth aspect, in some implementations of the sixth aspect, the environment reconstruction map is a map obtained by fusing and compressing basic map elements corresponding to same type information, and/or the environment reconstruction map is a map obtained by fusing and compressing same representation parameters.

For beneficial effect of the communication apparatus in the sixth aspect, refer to beneficial effect of the method in the third aspect. Details are not described herein again.

According to a seventh aspect, a communication apparatus is provided, including: at least one processor and a communication interface. The communication interface is used by the communication apparatus to exchange information with another communication apparatus. When program instructions are executed in the at least one processor, the communication apparatus is enabled to perform the method according to any one of the first aspect or the possible implementations of the first aspect.

Optionally, the communication apparatus may further include a memory. The memory is coupled to the processor. The processor is configured to implement the method described in any one of the first aspect or the possible implementations of the first aspect. For example, the memory is configured to store instructions and data. When executing the instructions stored in the memory, the processor may implement the method described in any one of the first aspect or the possible implementations of the first aspect.

Optionally, the communication interface may be a transceiver, a circuit, a bus, a module, a pin, or another type of communication interface.

According to an eighth aspect, a communication apparatus is provided, including at least one processor and a communication interface. The communication interface is used by the communication apparatus to exchange information with another communication apparatus. When program instructions are executed in the at least one processor, the communication apparatus is enabled to perform the method according to any one of the second aspect or the possible implementations of the second aspect.

Optionally, the communication apparatus may further include a memory. The memory is coupled to the processor. The processor is configured to implement the method described in any one of the second aspect or the possible implementations of the second aspect. For example, the memory is configured to store instructions and data. When executing the instructions stored in the memory, the processor may implement the method described in any one of the second aspect or the possible implementations of the second aspect.

Optionally, the communication interface may be a transceiver, a circuit, a bus, a module, a pin, or another type of communication interface.

According to a ninth aspect, a communication apparatus is provided, including at least one processor and a communication interface. The communication interface is used by the communication apparatus to exchange information with another communication apparatus. When program instructions are executed in the at least one processor, the communication apparatus is enabled to perform the method according to any one of the third aspect or the possible implementations of the third aspect.

Optionally, the communication apparatus may further include a memory. The memory is coupled to the processor. The processor is configured to implement the method described in any one of the third aspect or the possible implementations of the third aspect. For example, the memory is configured to store instructions and data. When executing the instructions stored in the memory, the processor may implement the method described in any one of the third aspect or the possible implementations of the third aspect.

Optionally, the communication interface may be a transceiver, a circuit, a bus, a module, a pin, or another type of communication interface.

According to a tenth aspect, a chip system is provided. The chip system includes a processor, configured to implement, by a terminal device, a function according to any one of the first aspect or the possible implementations of the first aspect, for example, receiving, sending, or processing data and/or information in the foregoing method. In a possible design, the chip system further includes a memory. The memory is configured to store program instructions and data that are necessary for the terminal device. The chip system may include a chip, or may include a chip and another discrete component.

According to an eleventh aspect, a chip system is provided. The chip system includes a processor, configured to implement, by a radio access network device, a function according to any one of the second aspect or the possible implementations of the second aspect, for example, receiving, sending, or processing data and/or information in the foregoing method. In a possible design, the chip system further includes a memory. The memory is configured to store program instructions and data that are necessary for a terminal device. The chip system may include a chip, or may include a chip and another discrete component.

According to a twelfth aspect, a chip system is provided. The chip system includes a processor, configured to implement, by a radio access network device, a function according to any one of the third aspect or the possible implementations of the third aspect, for example, receiving, sending, or processing data and/or information in the foregoing method. In a possible design, the chip system further includes a memory. The memory is configured to store program instructions and data that are necessary for a terminal device. The chip system may include a chip, or may include a chip and another discrete component.

According to a thirteenth aspect, a computer-readable storage medium is provided. The computer-readable storage medium stores a computer program or instructions. When the computer program or the instructions are executed, the method according to any one of the first aspect or the possible implementations of the first aspect is implemented.

According to a fourteenth aspect, a computer-readable storage medium is provided. The computer-readable storage medium stores a computer program or instructions. When the computer program or the instructions are executed, the method according to any one of the second aspect or the possible implementations of the second aspect is implemented.

According to a fifteenth aspect, a computer-readable storage medium is provided. The computer-readable storage medium stores a computer program or instructions. When the computer program or the instructions are executed, the method according to any one of the third aspect or the possible implementations of the third aspect is implemented.

According to a sixteenth aspect, a computer program product is provided. The computer program product includes computer program code. When the computer program code is run on a computer, the computer is enabled to perform the method according to any one of the first aspect or the possible implementations of the first aspect.

According to a seventeenth aspect, a computer program product is provided. The computer program product includes computer program code. When the computer program code is run on a computer, the computer is enabled to perform the method according to any one of the second aspect or the possible implementations of the second aspect.

According to an eighteenth aspect, a computer program product is provided. The computer program product includes computer program code. When the computer program code is run on a computer, the computer is enabled to perform the method according to any one of the third aspect or the possible implementations of the third aspect.

According to a nineteenth aspect, a communication system is provided, including: the terminal device described in the fourth aspect and the radio access network device described in the fifth aspect; or including: the communication apparatus described in the fourth aspect and the communication apparatus described in the sixth aspect.

It may be understood that any communication apparatus, chip system, computer-readable storage medium, computer program product, or the like provided above is configured to perform the corresponding method provided above. Therefore, for beneficial effect that can be achieved by the communication apparatus, the chip system, the computer-readable storage medium, the computer program product, or the like, refer to beneficial effect in the corresponding method. Details are not described herein again.

## BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of a structure of an octree according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic flowchart of another communication method according to an embodiment of this application;
FIG. 15 is a diagram of a segment of time-frequency resources according to an embodiment of this application;
FIG. 16 is a diagram of a structure of a communication apparatus according to an embodiment of this application;
FIG. 17 is a diagram of a structure of another communication apparatus according to an embodiment of this application;

FIG. 18 is a diagram of a structure of another communication apparatus according to an embodiment of this application; and

FIG. 19 is a diagram of a structure of another communication apparatus according to an embodiment of this application.

## DESCRIPTION OF EMBODIMENTS

The following describes technical solutions of this application with reference to accompanying drawings.

In this application, at least one means one or more, and a plurality of means two or more. In addition, in embodiments of this application, "first", "second", and various numeric numbers are merely used for distinguishing for ease of description, and are not intended to limit the scope of embodiments of this application. Sequence numbers of the following processes do not mean an execution sequence. The execution sequence of the processes should be determined based on functions and internal logic of the processes, and should not constitute any limitation on an implementation process of embodiments of this application. Moreover, in embodiments of this application, words such as "101", "102", and "103" are merely identifiers for ease of description, and do not limit a sequence of performing steps.

In this application, "indicate" may include "directly indicate" and "indirectly indicate". When indication information indicates A, the indication information may directly indicate A or indirectly indicate A, but it does not indicate that the indication information definitely carries A. In embodiments of this application, descriptions such as "when...", "in a case of...", and "if" all mean that the device performs corresponding processing in an objective case, and are not limited to time, and the device is not required to perform a determining action during implementation. This does not mean that there is another limitation. It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an evolved communication system such as a new radio (new radio, NR) system, a vehicle-to-everything (vehicle-to-X, V2X) system, where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, a long term evolution-vehicle (long term evolution-vehicle, LTE-V) system, an internet of vehicles system, a machine type communication (machine type communication, MTC) system, an internet of things (internet of things, IoT) system, a long term evolution-machine (long term evolution-machine, LTE-M) system, a machine-to-machine (machine-to-machine, M2M) system, and a device-to-device (device-to-device, D2D) system. The communication system includes a radio access network (radio access network, RAN). The RAN may be a cellular system related to the 3rd generation partnership project (3rd generation partnership project, 3GPP), for example, a 4G or 5G mobile communication system or a future-oriented evolved system (for example, a 6G mobile communication system). The RAN may alternatively be an open access network (open RAN, O-RAN or ORAN), a cloud radio access network (cloud radio access network, CRAN), or a wireless fidelity (wireless fidelity, Wi-Fi) system. The RAN may alternatively be a communication system that integrates two or more of the foregoing systems.

A RAN node may also be sometimes referred to as an access network device, a network device, a RAN entity, an access node, or the like, and forms a part of a communication system, to help a terminal implement radio access. A plurality of RAN nodes in the communication system may be nodes of a same type, or may be nodes of different types. In some scenarios, roles of the RAN node and the terminal are relative to each other.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node. In another possible scenario, the plurality of RAN nodes cooperate to assist the terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

A terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on-board unit (on-board unit, OBU), a roadside unit (roadside unit, RSU), a vehicle-mounted communication unit (telematics box, T-box), a chip, or a system on chip (system on chip, SoC). The chip or the SoC may be installed in a vehicle, an OBU, an RSU, or a T-box.

The terminal device in embodiments of this application further includes at least any one of a user equipment, an augmented reality (augmented reality, AR) device/a virtual reality (virtual reality, VR) device/an extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, a customer premise equipment (customer premise equipment, CPE), a router, a network access device, and the like. In terms of Uu (UTRAN-to-user equipment) air interface transmission, both parties of wireless communication include a network apparatus and a user communication device. In terms of sidelink (sidelink, SL) communication air interface transmission, a receiving end and a transmitting end of wireless communication are both user communication devices. The network apparatus may be a conventional macro base station eNB in a conventional UMTS/a conventional LTE wireless communication system, may be a micro base station eNB in a heterogeneous network (heterogeneous network, HetNet) scenario, may be a baseband processing unit and a remote radio unit in a distributed base station scenario, may be a baseband unit pool BBU pool and a radio frequency unit RRU in a CRAN scenario, and may be a gNB in a wireless communication system.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G system, for example, an NR system, or one antenna panel or one group of antenna panels (including a plurality of antenna panels) of a base station in a 5G system, or may be a network node that forms a gNB or a transmission point, for example, a baseband unit or a distributed unit.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource allocated by the network device (for example, a frequency domain resource, or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in this application is not particularly limited in this application, provided that communication can be performed according to the method provided in embodiments of this application by running a program that records code of the method provided in this application. For example, the method provided in embodiments of this application may be executed by a terminal device or a network device, or a functional module that is in the terminal device or the network device and that can invoke a program and execute the program.

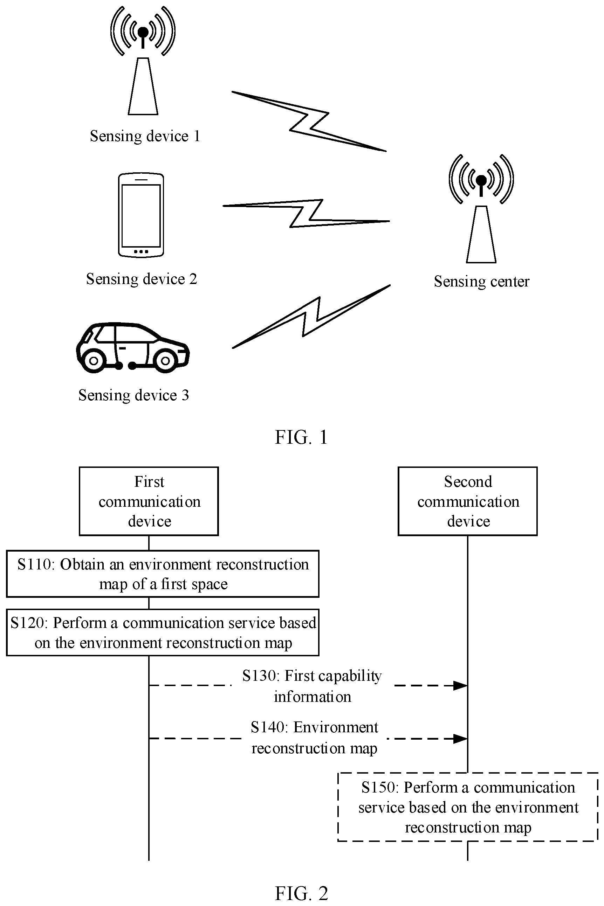

FIG. 1 is a diagram of a communication system according to an embodiment of this application. As shown in FIG. 1, a sensing device is a device having a sensing capability, and may be a terminal device having a sensing capability, for example, a mobile phone or a vehicle, or may be a network device having a sensing capability, for example, a base station. The sensing capability may be implemented by using several sensors that sense information about an environment around the sensing device. For example, the sensing capability may be implemented by using a global positioning system (global positioning system, GPS), or may be implemented by using one or more of a BeiDou system or another positioning system, an inertia measurement unit (inertial measurement unit, IMU), a lidar, a millimeter wave radar, an ultrasonic radar, radio, infrared, and a camera apparatus. A sensing center may be a terminal device having a receiving capability, for example, a mobile phone or a vehicle, or may be a network device having a receiving capability, for example, a base station. It may be understood that the sensing device may be an apparatus having a sensing/imaging capability, and the sensing center is an apparatus receiving a sensing result/an imaging result.

In some embodiments, as shown in FIG. 1, the sensing device may send a sensing result (an environment reconstruction map described below) to the sensing center. The sensing center may receive and fuse results sensed by a plurality of sensing devices, to help the sensing center obtain a more complete or more precise sensing result. Further, the sensing center may perform a related communication task and/or sensing task. The communication task includes but is not limited to the following content: MIMO transmission, channel measurement, link adaptation, beam management, high-frequency communication, network management, and data transmission. The sensing task includes but is not limited to the following content: task positioning/tracking/identification, imaging, assisting subsequent environment sensing, radar scanning, assisting evaluation of a sensing scan parameter, and the like.

In some embodiments, as shown in FIG. 1, the sensing center may also send an environment reconstruction map obtained in advance by the sensing center to the sensing device, so that the sensing device can perform a related communication task and/or sensing task based on the environment reconstruction map without repeated sensing.

It should be understood that FIG. 1 is merely a diagram, and another device that is not shown may be further included. In addition, a quantity of sensing devices and a quantity of sensing centers included in a communication system are not limited in embodiments of this application.

It should be noted that, in some embodiments, a first communication device in the following may be a sensing device, and a second communication device may be a sensing center. In some other embodiments, the first communication device in the following may be a sensing center, and the second communication device may be a sensing device. This is not limited in this application.

Before the technical solutions in this application are described, related technologies in embodiments of this application are first described.

In an existing environment reconstruction solution, environment information is usually collected by using methods such as optical scanning and lidar (that is, LiDAR), visual simultaneous localization and mapping (simultaneous localization and mapping, SLAM), remote sensing, and light field reconstruction. In different environment reconstruction solutions, data formats obtained after raw environment information collected by using the foregoing methods is processed are also different. For example, in terrain reconstruction, a constraint polyhedron model is usually generated according to a three-dimensional Delaunay triangulation algorithm to represent different terrains, or a point cloud convex hull of raw point cloud data is extracted according to a convex hull algorithm, and the data exists in a polyhedron format. In an MPEG-GPCC (moving picture experts group-geometry based point cloud compression, moving picture experts group-geometry based point cloud compression) solution, a space in which a 3D point cloud is located is divided into eight subspaces based on a 3D data representation of octree voxels. For example, a subspace being 1 indicates that the subspace includes a point, and a subspace being 0 indicates that the subspace does not include a point. Eight indication values are recorded. Then, a first-layer subspace recorded as 1 is further divided into eight subspaces, and eight indication values of the eight subspaces are recorded as second-layer indication values in the same manner. A subsequent layer follows the same pattern, an octree representing a raw point cloud can be obtained. In an MPEG-VPCC (MPEG-video based point cloud compression, moving picture experts group-video based point cloud compression) solution, raw 3D point cloud data is projected to six surrounding planes, and 2D data obtained by projection is processed by conventional H.264 compression.

In addition, there are some solutions for fitting environment objects by simply combining different geometric types. For example, in boundary representation (boundary representation, B-Rep), a three-dimensional object is represented by using a combination of vertices, edges, and planes. In non-uniform rational b-splines (non-uniform rational b-splines, NURBS), a complex geometric shape is approximated by using NURBS curves and surfaces.

In the foregoing existing solutions, different solutions generate different geometric types, and data formats of the different geometric types are also different.

In the conventional technology, during environment reconstruction, solutions such as the MPEG-VPCC and the MPEG-GPCC are only for a single geometric type, and other solutions for simple combinations of several geometric types can only support a few covered geometric types. Main problems are as follows: Lack of standardization and generality: Different application scenarios and tasks require environment reconstruction of different geometric types, yet there is no general definition and solution. Difficulty in processing a complex structure: When a few supported geometric types are used to fit a complex geometric object, many parameters may need to be introduced, and this increases calculation complexity. Data storage problem: If a plurality of environment reconstruction solutions are simultaneously used for environment reconstruction in a large-scale and complex scenario, massive complex data in different formats is generated, and this poses great challenges for data compression and storage. Poor processing capability in dynamic environments: A solution with a single geometric type cannot adapt to rapidly changing environments.

Based on the existing technical status, this application proposes a communication method for sensing environment reconstruction and digital twins in next-generation wireless communication (for example, 6G), to flexibly use different data formats for different sensing tasks, different device capabilities, and the like. In addition, sensing-assisted communication can be further implemented, accuracy of a communication-related parameter can be improved, and a better transmission/scheduling parameter can be obtained.

The following describes a communication method provided in this application with reference to FIG. 2 to FIG. 14.

The communication method provided in this application may be performed by a first communication device, or may be implemented by interaction between the first communication device and a second communication device. This is not specifically limited in this application. In actual application, there may be a plurality of first communication devices and a plurality of second communication devices. This is not specifically limited in this application. Unless otherwise specified, the "first communication device" in this application may be the first communication device (for example, a network device or a terminal device), or may be a component (for example, a processor, a chip, or a chip system) in the first communication device, or may be a logical module or software that can implement all or a part of functions of the first communication device. Unless otherwise specified, the "second communication device" in this application may be the second communication device (for example, a network device or a terminal device), or may be a component (for example, a processor, a chip, or a chip system) in the second communication device, or may be a logical module or software that can implement all or a part of functions of the second communication device.

It should be noted that, in this application, a communication service and a communication task have a same meaning, a sensing service and a sensing task have a same meaning, a first task and a first service have a same meaning, and a target service and a target task have a same meaning. In other words, in this application, the communication service may be replaced with the communication task, the sensing service may be replaced with the sensing task, the first service may be replaced with the first task, and the target service may be replaced with the target task. That is, "service" and "task" may be replaced with each other.

FIG. 2 is a schematic flowchart of a communication method according to an embodiment of this application. The method relates to interaction between a first communication device and a second communication device. The first communication device/second communication device may be a network device, or may be a terminal device. This is not limited in this application.

S110: The first communication device obtains an environment reconstruction map of a first space. The first space is a space within a preset range of the first communication device. The "preset range" may be understood as a space range that can be scanned by a configured sensor when the first communication device performs scanning, or a space range related to an environment reconstruction map when the first communication device receives the environment reconstruction map sent by the second communication device, or a space range that adapts to an environment reconstruction map of the first communication device. The environment reconstruction map is represented by using a basic map element, and the basic map element includes parameter information of the basic map element.

The parameter information of the basic map element may include type information and location information of the basic map element. The type information of the basic map element may be specifically geometric type information.

In some embodiments, the type information of the basic map element includes at least one of the following: a point, a straight line, a curve, a plane, a surface, a cube, a cylinder, a cone, a sphere, a voxel, and an octree.

In some embodiments, the location information of the basic map element includes at least one of the following: coordinates of the basic map element in the environment reconstruction map, an index of the basic map element in the environment reconstruction map, and a space range of the basic map element in the environment reconstruction map.

The parameter information of the basic map element may further include a representation parameter, an attribute type, an attribute parameter, and/or a reliability parameter. The representation parameter represents a geometric feature of the basic map element. The attribute type includes at least one of the following:

a material, a texture, a dielectric constant, a permeability, and a scattering coefficient. The attribute parameter is a specific parameter value corresponding to the attribute type. The reliability parameter indicates a reliability degree of the basic map element, and the reliability parameter may also be understood as confidence of the basic map element.

For example, if the first communication device is a base station, the base station may receive environment reconstruction maps sent by a plurality of UEs, and the environment reconstruction maps may carry reliability parameters. For example, a reliability parameter of a basic map element of an environment reconstruction map from a UE 1 is 70%, and a reliability parameter of a basic map element of an environment reconstruction map from a UE 2 is 80%. In this case, the base station may select a map with a higher reliability parameter based on the reliability parameters of the environment reconstruction maps reported by the UE 1 and the UE 2, or perform weighting on the basic map elements of the UE 1 and the UE 2 based on the reliability parameters, and fuse the environment reconstruction map of the UE 1 and the environment reconstruction map of the UE 2, to obtain an environment reconstruction map with higher accuracy.

The following briefly describes basic map elements of different geometric types.

Type 1: Point

Parameter information of the point includes location information of the point, and the location information of the point may include coordinates of the point in the environment reconstruction map and/or an index of the point in the environment reconstruction map. The coordinates of the point may be represented by Cartesian coordinates, polar coordinates, or cylindrical coordinates. In other words, the location information of the point may be Cartesian coordinate values $(x, y, z)$ of the point in the environment reconstruction map, polar coordinate values $(\theta, \varphi, r)$ of the point in the environment reconstruction map, or cylindrical coordinate values $(\varnothing, R, z)$ of the point in the environment reconstruction map.

Optionally, if coordinates of many points are predefined, location information of the points may be indexes of the points in the environment reconstruction map. That is, the location information of the points may not be directly represented by the coordinate values of the points, but location information of each point is represented by an index value corresponding to the point.

Type 2: Straight line

Parameter information of the straight line may include coordinates of the straight line in the environment reconstruction map, an index of the straight line in the environment reconstruction map, or coordinates of a start point of the straight line and a representation parameter (that is, a direction vector) in the environment reconstruction map. In other words, the parameter information of the straight line may be {coordinates of two points}, {indexes of two points}, {coordinates of a start point, direction vector}, or the like.

Type 3: Curve

Parameter information of the curve may also be represented in a plurality of manners. The parameter information of the curve may be defined by a curve equation/function.

In an example, the curve equation may be, for example, an ellipse $\frac{x^2}{a^2} + \frac{y^2}{b^2} = c$ or a parabola $y = ax^2 + bx + c$. The parameter information of the curve includes a representation parameter and a space range of the curve in the environment reconstruction map. A curve range may be a constraint condition (for example, $x^2 + y^2 \leq a$), or a value range (for example, $x < a$, $y < b$) of a variable. For example, the parameter information of the curve is {curve parameters a, b, c, and the like, curve range}.

In another example, the curve equation may be a $p$-order B-spline curve $C(u) = \sum_{i=0}^{n} P_i N_{i,p}(u)$ , and the parameter information of the curve includes a control point sequence $P_i$ of the curve. Optionally, the parameter information of the curve may further include a node sequence {$u$} and/or a curve order p. In other words, the parameter information of the B-spline curve may include any one of the following: {control point sequence $P_i$ of the curve}, {control point sequence $P_i$ of the curve, node sequences {$u$}{$v$}}, {control point sequence $P_i$ of the curve, curve order p}, and {control point sequence $P_i$ of the curve, node sequences {$u$}{$v$}, curve order p}. The control point sequence $P_i$ determines a space range of the B-spline curve in the environment reconstruction map.

Type 4: Plane/Polygon

Parameter information of the plane/polygon is represented in the following manners:
In an example, the plane is a polygon, and the polygon includes a plurality of points. Parameter information of the polygon includes a total quantity of points and coordinates/an index of each point. In other words, the parameter information of the plane may be {quantity of points, coordinates of each point} or {quantity of points, index of each point}. It should be understood that, if coordinates of many points are predefined, coordinate values of the points may be represented by index values of the points.

In another example, the parameter information of the plane may be defined by an equation/function, and the parameter information of the plane includes a representation parameter of the plane and a space range of the plane in the environment reconstruction map. For example, an expression of the plane may be $ax + by + cz + d = 0$, and a plane range may be a constraint condition (for example, $x^2 + y^2 + z^2 \leq a$), a value range (for example, $x < a$, $y < b$ and $z < c$) of a variable, or a bounding box (bounding box). Therefore, the parameter information of the plane may be {plane parameters a, b, c, d, plane range}.

Type 5: Surface

Parameter information of the surface may also be represented in a plurality of manners. The parameter information of the surface may be defined by a surface equation/function.

In an example, the surface equation may be, for example, an ellipsoid $\frac{x^2}{a^2} + \frac{y^2}{b^2} + \frac{z^2}{c^2} = 1$ or a paraboloid $\frac{x^2}{a^2} - \frac{y^2}{b^2} = z$. The parameter information of the surface includes a representation parameter of the surface and a space range of the surface in the environment reconstruction map. A surface range may be a constraint condition (for example, $x^2 + y^2 + z^2 \leq a$), a value range (for example, $x < a$, $y < b$ and $z < c$) of a variable, or a bounding box (bounding box). For example, the parameter information of the surface is {surface parameters a, b, c, and the like, surface range}.

In another example, the surface equation may be a $p \times q$-order B-spline surface $P(u,v) = \sum_{i=0}^{m} \sum_{j=0}^{n} P_{i,j} N_{i,p}(u) N_{j,q}(v)$ , and the parameter information of the surface includes a control point sequence $P_{i,j}$ of the surface. Optionally, the parameter information of the surface may further include node sequences {u} and {v}, and/or surface orders p and q. In other words, geometric representation parameters of the B-spline surface may include any one of the following: {control point sequence $P_{i,j}$ of the surface}, {control point sequence $P_{i,j}$ of the surface, node sequences {$u$}{$v$}}, {control point sequence $P_{i,j}$ of the surface, surface orders p, q}, {control point sequence $P_{i,j}$ of the surface, node sequences {$u$}{$v$}, surface orders p, q}. The control point sequence $P_{i,j}$ determines a space range of the B-spline surface in the environment reconstruction map.

In still another example, the surface may be an NURBS surface, and the parameter information of the surface includes a control point sequence and a weight factor sequence of the surface. Optionally, the parameter information of the surface may further include a node sequence and/or a surface order. In other words, parameter information of the NURBS surface may include any one of the following: {control point sequence of the surface, weight factor sequence}, {control point sequence of the surface, weight factor sequence, node sequence}, {control point sequence of the surface, weight factor sequence, surface order}, and {control point sequence of the surface, weight factor sequence, node sequence, surface order}.

Type 6: Cube

Parameter information of the cube may be represented in the following manners:

In an example, the cube may include a plurality of points. Therefore, the parameter information of the cube may include {quantity of points, coordinates of each point}, or {quantity of points, index of each point}.

In another example, the cube may include a plurality of points and a height. Therefore, the parameter information of the cube may include {quantity of points on a plane, coordinates of each point on the plane, height of the cube}, or {quantity of points on a plane, index of each point on the plane, height of the cube}.

Type 7: Cylinder

Parameter information of the cylinder may include coordinates of a center point of the cylinder in the environment reconstruction map and a representation parameter (for example, a radius, a height, and a cylinder direction). For example, the parameter information of the cylinder may include: {center point, radius, height}, or {center point, direction of the cylinder, radius, height}.

Type 8: Cone

Parameter information of the cone may include coordinates of a central point of the cone or a vertex of the cone in the environment reconstruction map and a representation parameter (for example, a radius and a height of the cone).

In an example, the parameter information of the cone may include: {center point, radius, cone height/cone vertex}, or {center point, cone direction, radius, cone height/cone vertex}.

In another example, the parameter information of the cone may include: {a quantity of points on a plane, coordinates/index of each point on the plane, a height of the cone/cone vertex}.

Type 9: Sphere

Parameter information of the sphere may include coordinates of a center point of the sphere in the environment reconstruction map and a representation parameter (that is, a radius). For example, the parameter information of the sphere includes {center point, radius}.

Type 10: Voxel

A voxel is an abbreviation for a volume pixel in a three-dimensional space, similar to a pixel in a two-dimensional image. Each voxel represents a discrete three-dimensional space unit, usually a cuboid or a cube. The voxel is usually arranged in a three-dimensional space in a form of a three-dimensional grid to form a voxel grid. Each grid unit includes one voxel, similar to a pixel grid in the two-dimensional image. Parameter information of the voxel may be represented in the following manners:

In an example, the parameter information of the voxel may include: {size of a voxel space box, size of a voxel unit, information about whether each voxel unit is empty}. Optionally, the parameter information may further include a start point of the voxel space.

In another example, the parameter information of the voxel may include: {quantity of voxel units in each direction in a voxel space, size of a voxel unit, information about whether each voxel unit is empty}. Optionally, the parameter information may further include a start point of the voxel space.

Type 11: Octree

The octree is a tree-like data structure, and is usually used to represent an object or a scenario in a three-dimensional space. Each internal node of the octree has a feature that each internal node has up to eight child nodes, and these child nodes correspond to eight equal-volume cubes in the three-dimensional space. The octree recursively divides the three-dimensional space into child nodes, each child node represents one child cube. The octree is usually used to represent a three-dimensional object, such as a model, an object, or a scenario. Each leaf node stores information about an object, for example, a geometric shape and a material attribute.

Parameter information of the octree may include {structure information of the octree}. For example, after breadth-first tree traversal (breadth first) or depth-first tree traversal (depth first), information about all nodes may be obtained, and information about the nodes may represent structure information of the octree.

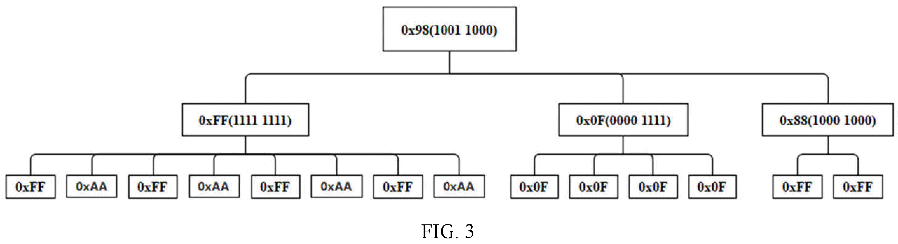

For example, as shown in FIG. 3, a specific bit string (hexadecimal in parentheses) obtained by breadth-first traversal of the octree is {0x98, 0xFF, 0x0F, 0x88, 0xFF, 0xAA, 0xFF, 0xAA, 0xFF, 0xAA, 0xFF, 0xAA, 0x0F, 0x0F, 0x0F, 0x0F, 0xFF, 0xFF}.

In an example, the structure information of the octree may be directly represented by the bit string obtained by traversal of the tree. In another example, to further reduce indication overheads, the structure information of the octree may be alternatively represented by a bit string obtained after entropy coding.

Optionally, a representation parameter may further include a geometric transformation parameter such as a translation vector, a rotation vector, or a scaling coefficient, so that an operation such as translation, rotation, or scaling is performed on the foregoing basic representation.

It should be noted that identifiers of the geometric types of the basic map element may be indicated in a manner such as enumeration, indexes, or a bitmap.

In an example, the identifiers of the geometric types may be indicated by enumeration. For example, {POINT, PATCH, SURFACE, CUBE, CONE, CURVE, ...} indicates that used geometric types include the point, the plane, the surface, the cube, the cone, the curve, and the like.

In another example, the identifiers of the geometric types may be indicated by indexes (index). Specifically, the identifiers may be represented with reference to a table. The table may be agreed on in a protocol, or may be dynamically configured by the base station for a UE, or may be dynamically indicated by the UE to the base station. For example, with reference to Table 1 or Table 2, an index corresponding to a geometric type may be selected to indicate an identifier of the geometric type. For example, with reference to Table 1, {0, 1, 3} indicates that used geometric types include the point, the plane/-polygon, and the cube.

Table 1

| Index | Geometric type |
|-------|----------------|
| 0 | Point |
| 1 | Plane/Polygon |
| 2 | Surface |
| 3 | Cube |
| 4 | Cylinder |
| 5 | Voxel |
| ... | ... |

Optionally, different indexes may be further used to distinguish different formula definitions of a same geometric type. As shown in Table 2, indexes 2, 3, and 4 respectively represent different formula types of the surface.

Table 2

| Index | Geometric type |
|-------|----------------|
| 0 | Point |
| 1 | Plane/Polygon |
| 2 | Surface formula 1 |
| 3 | Surface formula 2 |
| 4 | Surface formula 3 |
| 5 | Cube |
| 6 | Cylinder |
| ... | ... |

In still another example, the identifiers of the geometric types may be indicated by a bitmap. With reference to geometric types in a table, each bit corresponds to one type. For example, 110100 indicates that types 1, 2, and 4 of the table are used. That is, used geometric types are the point, the plane/polygon, and the cube with reference to Table 1.

Optionally, identifiers of the attribute types of the basic map element may also be indicated in a manner such as enumeration, indexes, or a bitmap.

It should be noted that indication of the attribute types and indication of the geometric types may use a same message, or may use different messages. The attribute type may include a material, a texture, a dielectric constant, a permeability, a scattering coefficient, and the like.

The material is used to represent a category of a target object, for example, ground, building, vegetation, and water. The texture is used to represent a visual feature change of the target object, and includes a local texture feature and a global texture feature. The dielectric constant is a main parameter that reflects a dielectric property or a polarization property of a dielectric of a piezoelectric smart material under an action of an electrostatic field. Polarity of a polymer material may be determined based on a dielectric constant of the material. The permeability represents a magnetization degree of the target object, or a physical amount of magnetism of a magnetic medium, and represents a resistance of generating a magnetic flux after a current flows through a coil in space or in magnetic core space, or a capability to conduct a magnetic line in a magnetic field. The scattering coefficient is reflectivity per unit area.

In an example, the identifiers of the attribute types may be indicated by enumeration. For example, {MATERIAL, TEXTURE, PERMEABILITY} indicates that used attribute types include the material, the texture, and the permeability.

In another example, the identifiers of the attribute types may be indicated by indexes. Specifically, the identifiers may be represented with reference to a table. The table may be agreed on in a protocol, or may be dynamically configured by the base station for the UE, or may be dynamically indicated by the UE to the base station. For example, with reference to Table 3, an index corresponding to an attribute type may be selected to indicate an identifier of the attribute type. For example, with reference to Table 3, {0, 1, 3} indicates that the used attribute types include the material, the texture, and the permeability.

Table 3

| Index | Attribute type |
|-------|----------------|
| 0 | Material |
| 1 | Texture |
| 2 | Dielectric constant |
| 3 | Permeability |
| 4 | Scattering coefficient |

(continued)

| Index | Attribute type |
|-------|----------------|
| ... | ... |

In still another example, the identifiers of the attribute types may be indicated by a bitmap. With reference to attribute types in a table, each bit corresponds to one type. For example, 11001 indicates that other used attributes include the material, the texture, and the scattering coefficient with reference to Table 3.

It should be understood that the environment reconstruction map may be represented by using one or more basic map elements.

In some embodiments, each basic map element may separately indicate a geometric type identifier. The environment reconstruction map may include a total quantity N of basic map elements and N basic map elements, and the N basic map elements may include parameter information of the N basic map elements.

The environment reconstruction map may be represented as: {total quantity N of basic map elements, basic map element 1, basic map element 2, ..., basic map element N}. A basic map element i may be represented as: {geometric type identifier, corresponding location information}, where $1 \leq i \leq N$. Optionally, the basic map element i may further include one or more of a representation parameter, an attribute type, an attribute parameter, and a reliability parameter. For example, when a geometric type is a point, the basic map element may include: {quantity P of points, $(x_0, y_0, z_0)$, ..., $(x_p, y_p, z_p)$}. For another example, when a geometric type is a cube, the basic map element may include: {quantity P of points on a plane, coordinates of P points, height of the cube}. For another example, when there are a plurality of cubes, the basic map element may include: {total quantity K of cubes, parameters of a 1$^{st}$ cube {quantity $p_0$ of points on a plane, coordinates of $p_0$ points, heights of the cube}, ..., parameters of a K$^{th}$ cube {quantity $p_k$ of points on a plane, coordinates of $p_k$ points, height of the cube}}.

In some other embodiments, a plurality of basic map elements may jointly indicate a geometric type identifier. The environment reconstruction map may include a total quantity M of geometric types and parameter information of the M geometric types. The parameter information of the M geometric types includes a geometric type identifier, a total quantity of basic map elements included in the geometric type, and location information corresponding to the basic map elements. Optionally, the basic map element may further include one or more of a representation parameter, an attribute type, an attribute parameter, and a reliability parameter.

The environment reconstruction map may be represented as: {total quantity M of geometric types, parameter information 1 of a geometric type, parameter information 2 of a geometric type, ..., parameter information M of a geometric type}. Parameter information j of a geometric type is represented as: {geometric type identifier j, total quantity $N_j$ of elements, element 1, ..., element $N_j$}, where the element may include {location information}. Optionally, the basic map element may further include one or more of a representation parameter, an attribute type, an attribute parameter, and a reliability parameter.

It should be noted that the environment reconstruction map may be a map obtained by data compression. In other words, in this embodiment of this application, before the environment reconstruction map is transmitted, the basic map elements included in the environment reconstruction map may be fused and compressed. A compression method includes but is not limited to the following manners: transformation, projection, differencing, quantization, entropy coding, and the like. It should be understood that data compression can reduce a data transmission amount and air interface overheads.

In an example, the environment reconstruction map may be a map obtained by fusing and compressing basic map elements corresponding to same type information.

As described above, the environment reconstruction map may be represented as: {total quantity M of geometric types, parameter information 1 of a geometric type, parameter information 2 of a geometric type, ..., parameter information M of a geometric type}. Parameter information j of a geometric type is represented as: {geometric type identifier j, total quantity $N_j$ of elements, element 1, ..., element $N_j$}, where the element may include {location information}. Optionally, the basic map element may further include one or more of a representation parameter, an attribute type, an attribute parameter, and a reliability parameter.

In this example, {element 1, ..., element $N_j$} corresponding to the same geometric type j may be fused and compressed. For example, fusion and compression may be performed by using operations such as transformation, projection, differencing, quantization, and entropy coding.

For example, if the geometric type identifier j is a point (POINT), a point cloud including a plurality of basic map elements may be jointly compressed, to reduce a data transmission amount. For another example, the geometric type identifier j is a B-spline surface, and parameter information corresponding to one basic map element may be {control point sequence, node sequence}. A plurality of control point sequences of a plurality of basic map elements may be fused for joint compression.

In another example, the environment reconstruction map may be a map obtained by fusing and compressing same representation parameters. In this example, parameters of a same type may be fused for joint compression.

For example, the environment reconstruction map may be represented as: {total quantity N of basic map elements, basic map element 1, ..., basic map element N}, where the basic map element i includes: {geometric type identifier, corresponding location information}; or the environment reconstruction map may be represented as: {total quantity M of geometric types, parameter information 1 of a geometric type, parameter information 2 of a geometric type, ..., parameter information M of a geometric type}, where parameter information j of a geometric type is represented as: {geometric type identifier j, total quantity $N_j$ of elements, element 1, ..., element $N_j$}, and the element may include {location information}.

If some of the basic map elements (of the same or different types) include similar parameters a, all the parameters a in different basic map elements may be fused for joint compression. The compression method may be transformation, projection, differencing, quantization, entropy coding, or the like.

For example, if a basic map element whose geometric type identifier is the point (POINT) includes coordinates ($x$, $y$, $z$), and a basic map element whose geometric type identifier is the plane/polygon (POLYGON) also includes coordinates ($x$, $y$, $z$), coordinates included in all elements whose types are the point and the plane may be fused for joint compression. For another example, if a basic map element whose geometric type identifier is the B-spline surface includes a control point sequence, and a basic map element whose geometric type identifier is the B-spline curve also includes a control point sequence, all control point sequences included in elements whose types are the B-spline surface and the B-spline curve may be fused for joint compression.

It should be noted that in this step (that is, in S110), the first communication device may obtain the environment reconstruction map of the first space by scanning the first space, or may receive an environment reconstruction map sent by another device (for example, the second communication device).

In some embodiments, the first communication device may scan the first space to obtain the environment reconstruction map of the first space.

In other words, the first communication device can sense the first space, and obtain the environment reconstruction map of the first space, so that the environment reconstruction map of the first space can be obtained without participation of another device.

In an example, the environment reconstruction map may be represented by using a basic map element corresponding to first capability information, and the first capability information indicates type information of the basic map element supported by the first communication device.

In this example, the first communication device may obtain the environment reconstruction map of the first space through scanning, and the environment reconstruction map may be represented by using the basic map element corresponding to the first capability information. In other words, the environment reconstruction map may be represented by using the basic map element supported by the first communication device. For example, if the first communication device supports data of a voxel type, the environment reconstruction map may be represented by using a basic map element of the voxel type.

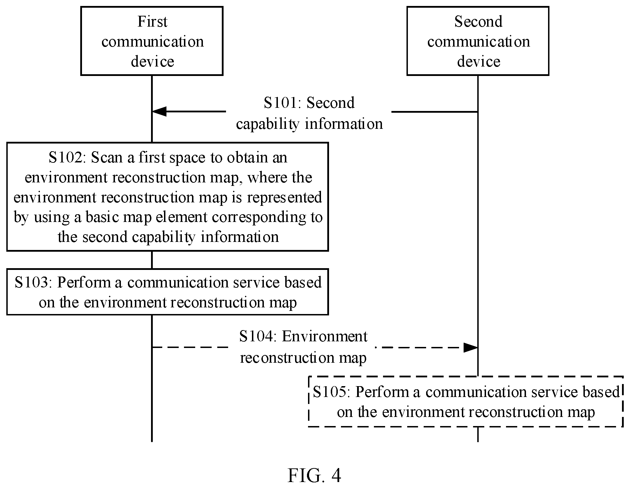

In another example, the first communication device may further receive second capability information sent by the second communication device, so that the environment reconstruction map may be represented by using a basic map element corresponding to the second capability information, and the second capability information indicates type information of a basic map element supported by the second communication device. The following provides detailed descriptions in FIG. 4.

In this example, the first communication device may receive the second capability information sent by the second communication device. Types of basic map elements supported by the second communication device may be fewer than types of basic map elements supported by the first communication device. Therefore, the environment reconstruction map obtained through scanning by the first communication device may be represented by using the basic map element corresponding to the second capability information, and further, the environment reconstruction map may be sent to the second communication device for use by the second communication device.

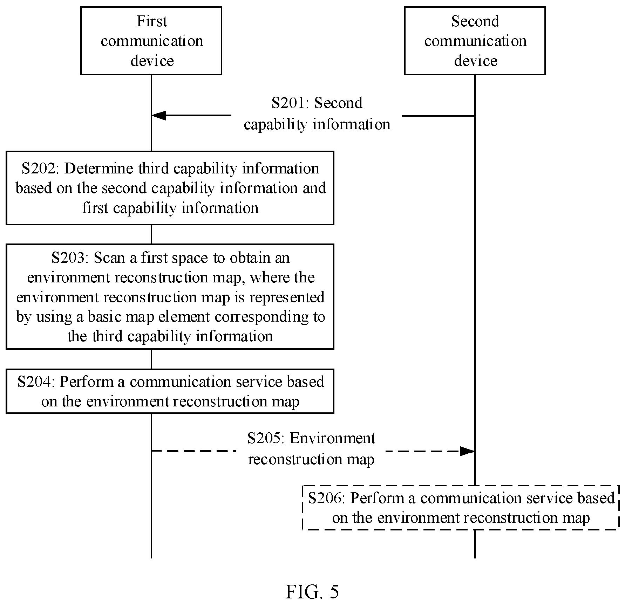

In still another example, the first communication device receives second capability information sent by the second communication device. The second capability information indicates type information of a basic map element supported by the second communication device. The first communication device determines third capability information based on the second capability information and first capability information. The first capability information indicates type information of a basic map element supported by the first communication device, the third capability information indicates at least one item in type information of a basic map element supported by both the first communication device and the second communication device, and the environment reconstruction map is represented by using a plurality of basic map elements corresponding to the third capability information. The following provides detailed descriptions in FIG. 5.

The first communication device and the second communication device may support different type information. Therefore, in this example, the first communication device may receive the second capability information sent by the second communication device, to determine the third capability information based on the second capability information and the first capability information. The environment reconstruction map may be represented based on a plurality of basic map elements corresponding to the third capability information.

In some other embodiments, the first communication device may receive the environment reconstruction map of the first space sent by the second communication device.

In other words, the first communication device does not need to scan/sense the first space, but can directly receive the environment reconstruction map of the first space sent by the second communication device, so that overheads of the first communication device can be reduced, and power consumption of the first communication device can be reduced.

The environment reconstruction map may be represented by using a basic map element corresponding to second capability information, and the second capability information indicates type information of the basic map element supported by the second communication device.

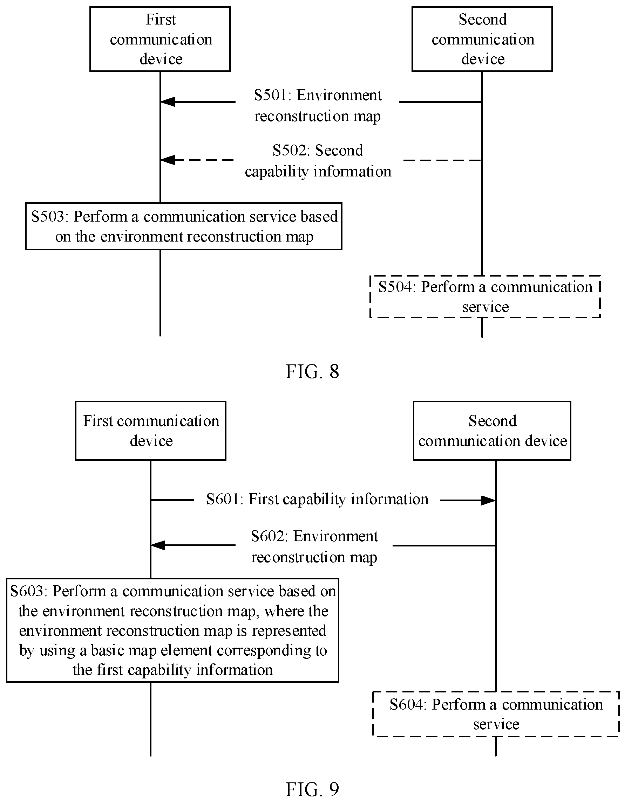

In an example, the first communication device may further receive second capability information sent by the second communication device. The second capability information indicates type information of a basic map element supported by the second communication device. The environment reconstruction map is represented by using the basic map element corresponding to the second capability information, and the second capability information indicates the type information of the basic map element supported by the second communication device. The following provides detailed descriptions in FIG. 8.

In another example, the first communication device may send first capability information to the second communication device. The first capability information indicates type information of a basic map element supported by the first communication device.

For example, the environment reconstruction map may be represented by using the basic map element corresponding to the first capability information. The following provides detailed descriptions in FIG. 9.

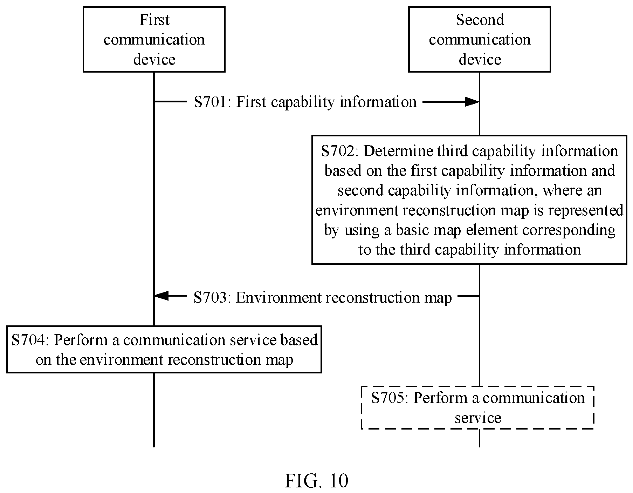

For example, the environment reconstruction map may be alternatively represented by using a basic map element corresponding to third capability information, and the third capability information indicates at least one item in type information of a basic map element supported by both the first communication device and the second communication device. The following provides detailed descriptions in FIG. 10.

The first communication device and the second communication device may support different type information of basic map elements. Therefore, in this example, the second communication device may determine the third capability information based on the received first capability information and the second capability information of the second communication device. In this way, the environment reconstruction map may be further represented by using the basic map element corresponding to the third capability information.

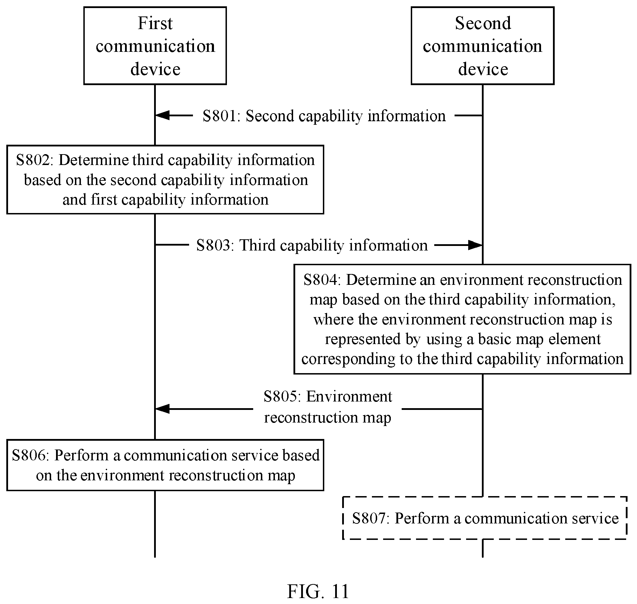

In another example, the first communication device receives second capability information sent by the second communication device. The second capability information indicates type information of a basic map element supported by the second communication device. The first communication device determines third capability information based on the second capability information and first capability information. The first capability information indicates type information of a basic map element supported by the first communication device, and the third capability information indicates at least one item in type information of a basic map element supported by both the first communication device and the second communication device. The first communication device sends the third capability information to the second communication device. The environment reconstruction map is represented by using the basic map element corresponding to the third capability information. The following provides detailed descriptions in FIG. 11.

The first communication device and the second communication device may support different type information of basic map elements. Therefore, in this example, the first communication device may determine the third capability information based on the received second capability information and the first capability information of the first communication device. In this way, the environment reconstruction map may be further represented by using the basic map element corresponding to the third capability information.

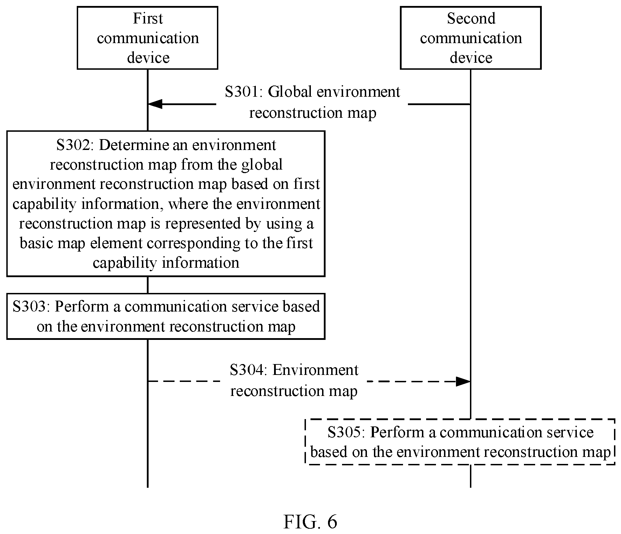

In some embodiments, the first communication device receives a global environment reconstruction map sent by the second communication device. The global environment reconstruction map is represented by using a basic map element corresponding to second capability information, and the second capability information indicates type information of the basic map element supported by the second communication device. The first communication device determines the environment reconstruction map from the global environment reconstruction map based on first capability information. The environment reconstruction map is represented by using a basic map element corresponding to the first capability information, and the first capability information indicates type information of the basic map element supported by the first communication device. The following provides detailed descriptions in FIG. 6.

In this embodiment, the first communication device may receive the global environment reconstruction map sent by the second communication device. However, the global environment reconstruction map is represented by using the basic map element corresponding to the second capability information. The first communication device may not support representation of some types of data in the global environment reconstruction map. Therefore, the first communication device may determine the environment reconstruction map applicable to the first communication device from the global environment reconstruction map, to perform a subsequent communication service.

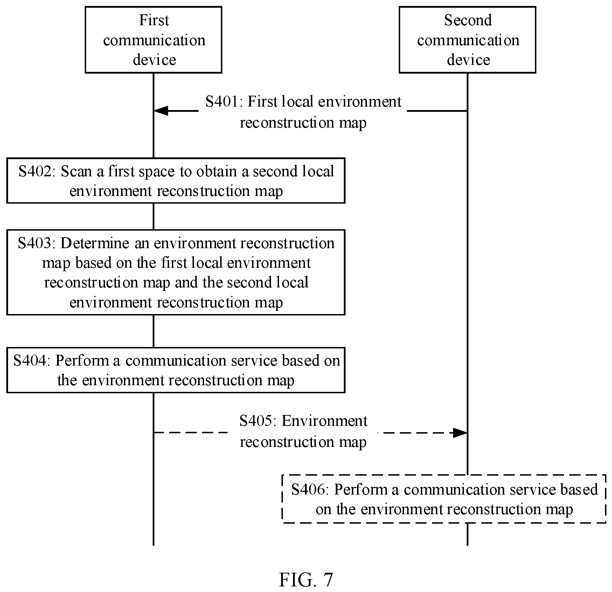

In some embodiments, the first communication device receives a first local environment reconstruction map sent by a second communication device. The first local environment reconstruction map is an environment reconstruction map that is in the first space and that the second communication device has. The first communication device scans the first space to obtain a second local environment reconstruction map. The first communication device determines the environment reconstruction map based on the first local environment reconstruction map and the second local environment reconstruction map. The following provides detailed descriptions in FIG. 7.

In this embodiment, the first communication device and the second communication device may observe in different viewing directions. Therefore, the first communication device may receive an existing environment reconstruction map (namely, the first local environment reconstruction map) that is about the first space and that is sent by the second communication device, and the first communication device may further scan/sense the first space to obtain the second local environment reconstruction map. The first communication device may fuse the first local environment reconstruction map and the second local environment reconstruction map, to obtain a more refined environment reconstruction map. In this way, the first communication device and the second communication device can obtain better service effect.

In some embodiments, the first communication device may further use, based on different services, basic map element types corresponding to the different services to represent the environment reconstruction map.

The first communication device may obtain first information. The first information indicates a correspondence between a first service and type information of a basic map element, and the first service includes a communication service and/or a sensing service. The first communication device may receive the first information sent by the second communication device, or the first information may be predefined in a protocol, and the first communication device may directly obtain the first information from the protocol.

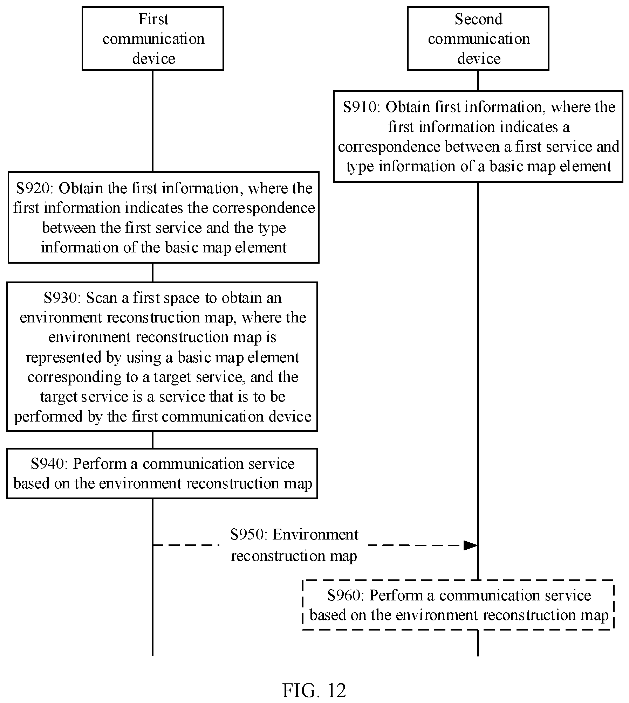

In an example, the first communication device may scan the first space to obtain the environment reconstruction map. The environment reconstruction map is represented by using a basic map element corresponding to a target service, the target service is a service that is to be performed by the first communication device, and the first service includes the target service. The following provides detailed descriptions in FIG. 12.

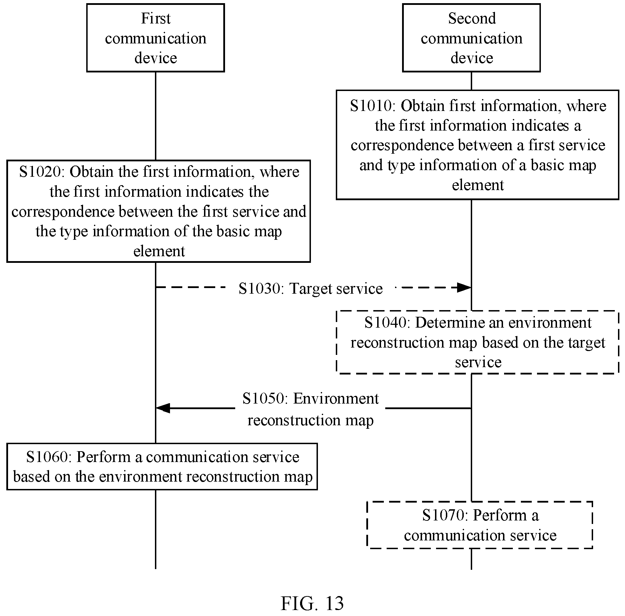

In another example, the first communication device receives the environment reconstruction map sent by the second communication device. The environment reconstruction map is represented by using a basic map element corresponding to a target service, the first service includes the target service, and the target service is a service that is to be performed by the first communication device. The following provides detailed descriptions in FIG. 13.

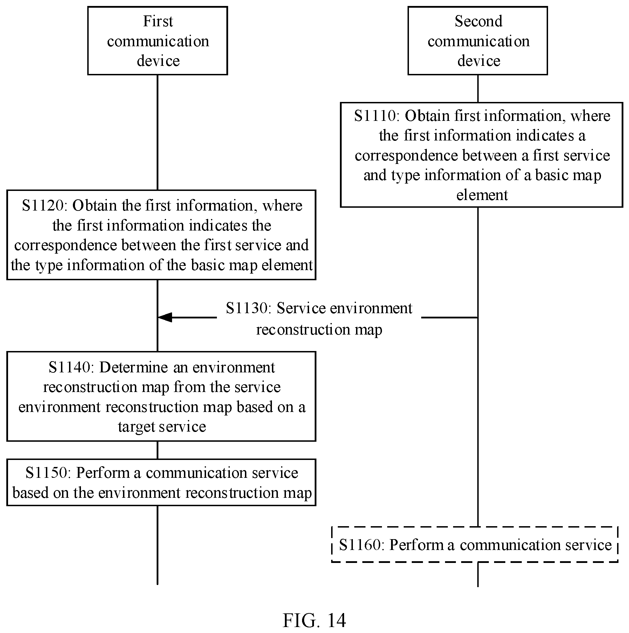

In still another example, the first communication device receives a service environment reconstruction map sent by the second communication device. The service environment reconstruction map is represented by using a basic map element corresponding to the first service. The first communication device determines the environment reconstruction map from the service environment reconstruction map based on a target service. The target service is a service that is to be performed by the first communication device, the first service includes the target service, and the environment reconstruction map is represented by using a basic map element corresponding to the target service. The following provides detailed descriptions in FIG. 14.

S120: The first communication device performs a communication service based on the environment reconstruction map.

The communication service may include at least one of the following: MIMO transmission, channel measurement, link adaptation, beam management, high-frequency communication, network management, and data transmission.

The MIMO transmission may include, for example, channel prediction on a channel, MIMO precoding, link blockage prediction, and beam adjustment. The channel measurement may include, for example, channel estimation, propagation path parameter obtaining, channel covariance information obtaining, and channel prediction. The link adaptation may include, for example, channel link estimation, coding and modulation selection, and power control. The beam management may include, for example, beam alignment, beam search, beam training, beam prediction, and beam tracking. The high-frequency communication may include, for example, millimeter wave communication, terahertz communication, blockage prediction, and beam switching. The network management may include, for example, resource management, load balancing, interference coordination, access control, user scheduling, user mobility management, edge user management, and MU-MIMO user pairing. The data transmission may include, for example, user data transmission, signaling transmission, network control data transmission, transmission of raw data/native data in a RAN, non-terrestrial network communication, and satellite communication.

Optionally, the first communication device may further perform a sensing service based on the environment reconstruction map. The sensing service may include, for example, performing a positioning/tracking/recognition task or imaging, or assisting subsequent environment sensing, performing radar scanning, or assisting evaluation of a sensing scan parameter based on the map. S130: The first communication device sends the first capability information to the second communication device. Correspondingly, the second communication device receives the first capability information sent by the first communication device.

It should be understood that S130 is an optional step.

Optionally, the first communication device may send the first capability information to the second communication device, so that the second communication device learns of the type information supported by the first communication device.

The first capability information indicates the type information of the basic map element supported by the first communication device. For example, the first capability information indicates that the first communication device supports geometric types such as a point and a plane. For example, the first capability information may include 110000. For another example, the first capability information may include {POINT, PATCH}.

Optionally, the first capability information may further indicate an attribute type supported by the first communication device. For example, the first capability information indicates that the first communication device supports attribute types such as a dielectric constant and a permeability. For example, the first capability information may include 00110. For another example, the first capability information may alternatively include {DIELECTRIC-CONSTANT, PERMEABILITY}.

S140: The first communication device sends the environment reconstruction map, and correspondingly, the second communication device receives the environment reconstruction map. It should be understood that S140 is an optional step. After the first communication device sends the environment reconstruction map to the second communication device, and the second communication device receives the environment reconstruction map, the second communication device may also perform a sensing service and/or the communication service based on the environment reconstruction map. The environment reconstruction map may be represented by using the basic map element corresponding to the first capability information.

It should be noted that, in some embodiments, the second communication device may directly parse the first capability information from the received environment reconstruction map, or does not need to know the first capability information. Therefore, S130 may be omitted. In some other embodiments, if the second communication device receives the first capability information sent by the first communication device, the second communication device may not need to parse the first capability information from the environment reconstruction map. Therefore, power consumption of the second communication device can also be reduced.

In some embodiments, the second communication device may perform the communication service based on the environment reconstruction map, for example, MIMO transmission, channel measurement, link adaptation, beam management, high-frequency communication, network management, and data transmission.

In some embodiments, the second communication device may further perform the sensing service based on the environment reconstruction map, for example, perform a positioning/tracking/recognition task or imaging based on the map, or assisting subsequent environment sensing, radar scanning, or assisting evaluation of a sensing scan parameter.

It should be noted that the second communication device may obtain environment reconstruction maps sent by a plurality of first communication devices, and fuse the environment reconstruction maps into a complete/large environment reconstruction map, or execute another sensing service based on a result of fusion, to reduce power consumption and transmission overheads of each device.

In an example, the first communication device may be a UE, and the second communication device may be a base station. After receiving the environment reconstruction map sent by the UE, the base station may specifically perform the following communication services:

MIMO transmission: adjusting a MIMO beam based on the obtained environment reconstruction map, performing MIMO precoding based on the obtained environment reconstruction map, especially performing MIMO precoding on a plurality of users, and the like;
channel measurement: obtaining a channel propagation path parameter of the UE, channel prediction, and the like based on the obtained environment reconstruction map;
link adaptation: performing coding and modulation selection, power control, and the like based on the obtained environment reconstruction map;
beam management: performing operations such as beam alignment, beam search, beam training, beam prediction, and beam tracking based on the obtained environment reconstruction map;
high-frequency communication: performing blockage prediction, beam switching, and the like based on the obtained environment reconstruction map;
network management: performing operations such as load balancing, interference coordination, user mobility management, edge user management, and MU-MIMO user pairing based on the obtained environment reconstruction map; and
data transmission: performing user data transmission, signaling transmission, network control data transmission, transmission of raw data/native data in a RAN, satellite communication and scheduling, and the like based on the obtained environment reconstruction map.

In another example, the first communication device may be a base station, and the second communication device may be a UE. After receiving the environment reconstruction map sent by the base station, the UE may specifically perform the following communication services:

MIMO transmission: performing channel prediction on a channel based on the obtained environment reconstruction map, and the like;

channel measurement: performing channel estimation, obtaining a propagation path parameter and channel covariance information, performing channel prediction, and the like based on the obtained environment reconstruction map;

link adaptation: performing channel link estimation, power control, and the like based on the obtained environment reconstruction map;

beam management: performing beam alignment, beam search, beam training, beam prediction, beam tracking, and the like based on the obtained environment reconstruction map;

high-frequency communication: performing millimeter wave communication, terahertz communication, blockage prediction, beam switching, and the like based on the obtained environment reconstruction map;

network management: assisting in interference coordination on a network, user mobility management, access control, and the like based on the obtained environment reconstruction map; and

data transmission: performing data transmission, including user data transmission, signaling transmission, network control data transmission, transmission of raw data/native data in a RAN, and satellite communication based on the obtained environment reconstruction map.

In this embodiment of this application, the first communication device obtains the environment reconstruction map of the first space, and the environment reconstruction map may be represented by using one or more basic map elements. This is general, and the environment reconstruction map can be flexibly represented by using a defined data format. Therefore, the first communication device may perform a communication service based on the obtained environment reconstruction map, for example, may implement sensing-assisted communication, so that a plurality of communication services such as MIMO transmission, channel measurement, link adaptation, beam management, high-frequency communication, network management, and data transmission can be implemented. In addition, the first communication device may further send the obtained environment reconstruction map to the second communication device, so that the second communication device can also perform a sensing service and/or a communication service. Therefore, signaling overheads are reduced, a transmission/scheduling latency is reduced, communication quality is ensured, accuracy of a communication-related parameter is improved, and a better transmission/scheduling parameter is obtained.

Specifically, for a MIMO transmission task, for example, channel prediction is performed on a channel, and a UE may feed back channel prediction that is based on the environment reconstruction map to a base station instead of original channel prediction, so that a feedback data amount can be reduced. For link blockage prediction on a base station side, a transmission parameter of the UE can be determined and adjusted in advance, to avoid blockage and ensure communication quality of the UE. For a channel measurement task, the first communication device may obtain more accurate information such as a propagation path parameter based on an environment map, to better communicate with the second communication device. For a beam management task, based on an environment map, the first communication device may obtain more accurate beam state information and beam prediction information, or obtain a more accurate beam alignment result, or reduce a beam training latency, to better communicate with the second communication device. For a high-frequency communication task, based on an environment map, the first communication device may obtain more accurate channel state information, beam information, and the like, or determine blockage in advance, to reduce a beam switching latency and ensure communication quality, so as to better communicate with the second communication device. For a network management task, a base station may determine a status such as interference in advance based on an environment map, to improve quality of interference coordination and user scheduling, or reduce a user mobility management (handover) latency. A UE feeds back channel state information to the base station based on the environment map, to help the base station obtain a better MU-MIMO pairing result. For a data transmission task, the first communication device obtains a more accurate data transmission parameter based on an environment map, to improve quality of data transmission between the first communication device and the second communication device.

The following specifically describes communication methods in different embodiments with reference to FIG. 4 to FIG. 14.

FIG. 4 is a schematic flowchart of another communication method according to an embodiment of this application. In the method, a first communication device obtains an environment reconstruction map through scanning. The method mainly relates to interaction between the first communication device and a second communication device.

S101: The second communication device sends second capability information to the first communication device. Correspondingly, the first communication device receives the second capability information.

The second capability information indicates type information of a basic map element supported by the second communication device. For example, the second capability information indicates that the second communication device supports geometric types such as a point, a plane, and a cube. For example, the second capability information may include 110100. For another example, the second capability information may include {POINT, PATCH, CUBE}.

Optionally, the second capability information may further indicate an attribute type supported by the second communication device. For example, the second capability information indicates that the second communication device supports attribute types such as a dielectric constant, a permeability, and a scattering coefficient. For example, the second capability information may include 00111. For another example, the second capability information may alternatively include {DIELECTRIC-CONSTANT, PERMEABILITY, SCATTER-COEFF}.

In some embodiments, the first communication device may be a UE, the second communication device may be a base station, and the second communication device may send the second capability information to the first communication device in a broadcast, multicast, or unicast manner.

In some embodiments, the first communication device may be a base station, the second communication device may be a UE, and the UE may send the second capability information of the UE to the base station. Correspondingly, the base station may receive the second capability information sent by the UE.

S102: The first communication device scans a first space to obtain an environment reconstruction map of the first space.

The environment reconstruction map is represented by using the basic map element corresponding to the second capability information. For example, if the second capability information indicates that the second communication device supports geometric types such as a point, a plane, and a cube, the environment reconstruction map may be represented by using a point, a plane, a cube, and the like. In other words, the environment reconstruction map may include a point, a plane, a cube, and the like.

It should be noted that the first communication device may scan/sense the first space based on radio signal sensing, infrared sensing, radar (radio detection and ranging, RADAR) sensing, lidar (light detection and ranging, LIDAR) sensing, 2D/3D camera sensing, or the like.

It should be understood that sensing based on a radio frequency sensor (sensor sensing based on a radio signal) is not easily affected by weather and light. The infrared sensing may obtain night vision imaging effect and may also penetrate smoke. The radar sensing may detect an object at a short distance. The lidar sensing may obtain ranging/depth information to obtain a high spatial resolution. A 2D/3D camera may obtain a visual feature from an environment, and may implement a higher resolution of an environment map.

In addition, multi-modal sensing may be further performed, for example, sensing based on both a camera and a radar, or sensing based on both a camera and a lidar. Sensing results of different modal sensors can be fused by multi-modal sensing, to improve sensing precision.

S103: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform the sensing service based on the environment reconstruction map, for example, perform a positioning/tracking/recognition task or imaging based on the map, or assisting subsequent environment sensing, radar scanning, or assisting evaluation of a sensing scan parameter.

It should be noted that the first communication device may sense and obtain the environment reconstruction map of the first space, and the environment reconstruction map may assist the first communication device in performing a related communication service.

S104: The first communication device sends the environment reconstruction map to the second communication device. Correspondingly, the second communication device receives the environment reconstruction map.

It should be understood that S104 is an optional step. In some embodiments, the first communication device may send the environment reconstruction map to the second communication device for use by the second communication device.

S105: The second communication device performs a communication service based on the environment reconstruction map.

It should be understood that S105 is an optional step. After the first communication device sends the environment reconstruction map to the second communication device, and the second communication device receives the environment reconstruction map, the second communication device may also perform a sensing service and/or the communication service based on the environment reconstruction map.

It should be noted that, for S104 and S105, refer to S140 and S150 respectively. Details are not described herein again.

In this embodiment of this application, the second communication device may send the second capability information to the first communication device, and the first communication device may receive the second capability information sent by the second communication device. Types of basic map elements supported by the second communication device may be fewer than types of basic map elements supported by the first communication device. Therefore, the environment reconstruction map obtained through scanning by the first communication device may be represented by using the basic map element corresponding to the second capability information. The environment reconstruction map may be further sent to the second communication device, so that the second communication device can perform the communication service also based on the environment reconstruction map.

FIG. 5 is a schematic flowchart of another communication method according to an embodiment of this application. In the method, a first communication device obtains an environment reconstruction map through scanning. The method mainly relates to interaction between the first communication device and a second communication device.

S201: The second communication device sends second capability information to the first communication device. Correspondingly, the first communication device receives the second capability information.

For specific content of this step, refer to S101. Details are not described herein again.

S202: The first communication device determines third capability information based on the second capability information and first capability information.

The first capability information indicates type information of a basic map element supported by the first communication device, and the third capability information indicates at least one item in type information of a basic map element supported by both the first communication device and the second communication device. In other words, the third capability information indicates the type information of the basic map elements supported by the first communication device and the second communication device or a subset of the type information.

In an example, the second capability information indicates that the second communication device supports geometric types such as a point, a plane, and a cube. For example, the second capability information may include 110100. For another example, the second capability information may include {POINT, PATCH, CUBE}.

The second capability information may further indicate an attribute type supported by the second communication device. For example, the second capability information indicates that the second communication device supports attribute types such as a dielectric constant, a permeability, and a scattering coefficient. For example, the second capability information may include 00111. For another example, the second capability information may alternatively include {DIELECTRIC-CONSTANT, PERMEABILITY, SCATTER-COEFF}.

The first capability information indicates that the first communication device supports geometric types such as a point and a plane. For example, the first capability information may include 110000. For another example, the first capability information may include {POINT, PATCH}.

The first capability information may further indicate an attribute type supported by the first communication device. For example, the first capability information indicates that the first communication device supports attribute types such as a dielectric constant and a permeability. For example, the first capability information may include 00110. For another example, the first capability information may alternatively include {DIELECTRIC-CONSTANT, PERMEABILITY}.

Therefore, the third capability information determined by the first communication device may include at least one of {POINT, PATCH}. Optionally, the third capability information may further include at least one of {DIELECTRIC-CONSTANT, PERMEABILITY}.

S203: The first communication device scans a first space to obtain an environment reconstruction map of the first space.

The environment reconstruction map is represented by using the basic map element corresponding to the third capability information. For example, the third capability information includes geometric types such as a point and a plane. The environment reconstruction map may be represented by using a point, a plane, and the like. In other words, the environment reconstruction map may include a point, a plane, and the like.

For other specific content of this step, refer to S102. Details are not described herein again. S204: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

For specific content of this step, refer to S120. Details are not described herein again.

S205: The first communication device sends the environment reconstruction map to the second communication device. Correspondingly, the second communication device receives the environment reconstruction map.

It should be understood that S205 is an optional step. In some embodiments, the first communication device may send the environment reconstruction map to the second communication device for use by the second communication device.

S206: The second communication device performs a communication service based on the environment reconstruction information.

It should be understood that S206 is an optional step. After the first communication device sends the environment reconstruction map to the second communication device, and the second communication device receives the environment reconstruction map, the second communication device may also perform a sensing service and/or the communication service based on the environment reconstruction map.

It should be noted that, for S205 and S206, refer to S140 and S150 respectively. Details are not described herein again.

In this embodiment of this application, the first communication device and the second communication device may support different type information. Therefore, the first communication device may receive the second capability information sent by the second communication device, to determine the third capability information based on the second capability information and the first capability information. The environment reconstruction map may be represented by using a plurality of basic map elements corresponding to the third capability information. In this way, both the first communication device and the second communication device can directly use the environment reconstruction map, that is, perform the communication service based on the environment reconstruction map.

FIG. 6 is a schematic flowchart of another communication method according to an embodiment of this application. The method mainly relates to interaction between a first communication device and a second communication device. The first communication device may be a sensing device, and the second communication device may be a sensing center.

S301: The second communication device sends a global environment reconstruction map to the first communication device. Correspondingly, the first communication device receives the global environment reconstruction map sent by the second communication device.

The global environment reconstruction map is represented by using a basic map element corresponding to second capability information, and the second capability information indicates type information of the basic map element supported by the second communication device.

For example, the second capability information indicates that the second communication device supports geometric types such as a point, a plane, and a cube. For example, the second capability information may include 110100. For another example, the second capability information may include {POINT, PATCH, CUBE}. In this example, the global environment reconstruction map may be represented by using a point, a plane, a cube, and the like. In other words, the global environment reconstruction map may include a point, a plane, a cube, and the like.

The second capability information may further indicate an attribute type supported by the second communication device. For example, the second capability information indicates that the second communication device supports attribute types such as a dielectric constant, a permeability, and a scattering coefficient. For example, the second capability information may include 00111. For another example, the second capability information may alternatively include {DIELECTRIC-CONSTANT, PERMEABILITY, SCATTER-COEFF}.

S302: The first communication device determines an environment reconstruction map from the global environment reconstruction map based on first capability information.

The environment reconstruction map is represented by using a basic map element corresponding to the first capability information, and the first capability information indicates type information of the basic map element supported by the first communication device.

For example, the first capability information indicates that the first communication device supports geometric types such as a point and a plane. For example, the first capability information may include 110000. For another example, the first capability information may include {POINT, PATCH}. In this example, the environment reconstruction map may be represented by using a point, a plane, and the like. In other words, the environment reconstruction map may include a point, a plane, and the like.

The first capability information may further indicate an attribute type supported by the first communication device. For example, the first capability information indicates that the first communication device supports attribute types such as a dielectric constant and a permeability. For example, the first capability information may include 00110. For another example, the first capability information may alternatively include {DIELECTRIC-CONSTANT, PERMEABILITY}.

In this step, the first communication device may determine the environment reconstruction map from the global environment reconstruction map based on a capability of the first communication device, that is, determine data of the geometric types and the attribute types that can be supported by the first communication device.

S303: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

For specific content of this step, refer to S120. Details are not described herein again.

S304: The first communication device sends the environment reconstruction map to the second communication device. Correspondingly, the second communication device receives the environment reconstruction map.

It should be understood that S304 is an optional step. In some embodiments, the first communication device may send the environment reconstruction map to the second communication device for use by the second communication device.

S305: The second communication device performs a communication service based on the environment reconstruction information.

It should be understood that S305 is an optional step. After the first communication device sends the environment reconstruction map to the second communication device, and the second communication device receives the environment reconstruction map, the second communication device may also perform a sensing service and/or the communication service based on the environment reconstruction map.

It should be noted that, for S304 and S305, refer to S140 and S150 respectively. Details are not described herein again.

In this embodiment of this application, the second communication device may send the global environment reconstruction map to the first communication device, and the first communication device may receive the global environment reconstruction map. However, the global environment reconstruction map is represented by using the basic map element corresponding to the second capability information. The first communication device may not support representation of some types of data in the global environment reconstruction map. Therefore, the first communication device may determine the environment reconstruction map applicable to the first communication device from the global environment reconstruction map, to perform a subsequent communication service.

FIG. 7 is a schematic flowchart of another communication method according to an embodiment of this application. The method mainly relates to interaction between a first communication device and a second communication device. The first communication device may be a sensing device, and the second communication device may be a sensing center.

S401: The second communication device sends a first local environment reconstruction map to the first communication device. Correspondingly, the first communication device receives the first local environment reconstruction map sent by the second communication device.

The first local environment reconstruction map is an environment reconstruction map that is in a first space and that the second communication device has.

For example, the first communication device may be a UE, and the second communication device may be a base station. The base station may send an existing environment reconstruction map to the UE, to assist functions such as sensing and communication on a terminal side.

S402: The first communication device scans the first space to obtain a second local environment reconstruction map.

The first communication device may obtain the second local environment reconstruction map by sensing the first space based on radio signal sensing, infrared sensing, radar sensing, lidar sensing, 2D/3D camera sensing, or the like.

S403: The first communication device determines an environment reconstruction map based on the first local environment reconstruction map and the second local environment reconstruction map.

In some embodiments, the first communication device may fuse the first local environment reconstruction map and the second local environment reconstruction map, to obtain a more refined environment reconstruction map.

In some embodiments, the first communication device may delete some points, planes, and the like with low reliability parameters from the first local environment reconstruction map based on the second local environment reconstruction map obtained through scanning.

S404: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

For specific content of this step, refer to S120. Details are not described herein again.

S405: The first communication device sends the environment reconstruction map to the second communication device. Correspondingly, the second communication device receives the environment reconstruction map.

It should be understood that S405 is an optional step. In some embodiments, the first communication device may send the environment reconstruction map to the second communication device for use by the second communication device.

S406: The second communication device performs a communication service based on the environment reconstruction information.

It should be understood that S406 is an optional step. After the first communication device sends the environment reconstruction map to the second communication device, and the second communication device receives the environment reconstruction map, the second communication device may also perform a sensing service and/or the communication service based on the environment reconstruction map.

It should be noted that, for S405 and S406, refer to S140 and S150 respectively. Details are not described herein again.

In this embodiment of this application, the first communication device and the second communication device may observe in different viewing directions. Therefore, the first communication device may receive an existing environment reconstruction map (namely, the first local environment reconstruction map) that is about the first space and that is sent by the second communication device, and the first communication device may further scan/sense the first space to obtain the second local environment reconstruction map. In addition, the first communication device may fuse the first local environment reconstruction map and the second local environment reconstruction map, to obtain a more refined environment reconstruction map. In this way, the first communication device and the second communication device can obtain better service effect. FIG. 8 is a schematic flowchart of another communication method according to an embodiment of this application. In the method, a first communication device obtains an environment reconstruction map from a second communication device. The method mainly relates to interaction between the first communication device and the second communication device.

S501: The second communication device sends an environment reconstruction map of a first space to the first communication device. Correspondingly, the first communication device receives the environment reconstruction map sent by the second communication device.

The first space is a space within a preset range of the first communication device, the environment reconstruction map is represented by using a basic map element, the basic map element includes parameter information of the basic map element, and the parameter information of the basic map element includes type information and location information of the basic map element.

In some embodiments, the first communication device may be a UE, the second communication device may be a base station, and the second communication device may send the environment reconstruction map of the first space to the first communication device in a broadcast, multicast, or unicast manner.

In some embodiments, the first communication device may be a base station, the second communication device may be a UE, and the UE may send the environment reconstruction map to the base station. Correspondingly, the base station may receive the environment reconstruction map sent by the UE. S502: The second communication device sends second capability information to the first communication device. Correspondingly, the first communication device receives the second capability information sent by the second communication device.

It should be understood that S502 is an optional step. In some embodiments, the first communication device may directly parse the second capability information from the environment reconstruction map in S501, or does not need to know the second capability information. Therefore, S502 may be omitted. In some other embodiments, the second communication device may send the second capability information to the first communication device. Therefore, the first communication device may not need to parse the second capability information from the environment reconstruction map, so that power consumption of the first communication device can be reduced.

The second capability information indicates type information of a basic map element supported by the second communication device. For example, the second capability information indicates that the second communication device supports geometric types such as a point, a plane, and a cube. For example, the second capability information may include 110100. For another example, the second capability information may include {POINT, PATCH, CUBE}.

Optionally, the second capability information may further indicate an attribute type supported by the second communication device. For example, the second capability information indicates that the second communication device supports attribute types such as a dielectric constant, a permeability, and a scattering coefficient. For example, the second capability information may include 00111. For another example, the second capability information may alternatively include {DIELECTRIC-CONSTANT, PERMEABILITY, SCATTER-COEFF}.

In some embodiments, the first communication device may be a UE, the second communication device may be a base station, and the second communication device may send the second capability information to the first communication device in a broadcast, multicast, or unicast manner.

In some embodiments, the first communication device may be a base station, the second communication device may be a UE, and the UE may send the second capability information of the UE to the base station. Correspondingly, the base station may receive the second capability information sent by the UE.

S503: The first communication device performs a communication service based on the environment reconstruction map.

In some embodiments, the environment reconstruction map is represented by using the basic map element corresponding to the second capability information.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S504: The second communication device performs a communication service.

It should be understood that S504 is an optional step.

It should be noted that when the second communication device performs the communication service, a parameter fed back by the first communication device may assist in performing the communication service and/or a sensing service.

In an example, the first communication device may be a UE, and the second communication device may be a base station. After the base station sends the environment reconstruction map to the UE, the UE may obtain the environment reconstruction map from the base station. The base station may perform the following communication services: MIMO transmission, channel measurement, link adaptation, beam management, high-frequency communication, network management, and data transmission. Details are as follows:

For a MIMO transmission task, the UE may send channel prediction information to the base station; and after receiving the channel prediction information from the UE, the base station may adjust a MIMO beam, perform MIMO precoding on a plurality of users, and the like.

For a channel measurement task, the UE may send channel estimation, a propagation path parameter, and the like to the base station; and the base station receives the channel estimation, the propagation path parameter, and the like from the UE, and adjust transmission parameters (including coding, modulation, control of a quantity of MIMO streams, MIMO precoding, and the like) that are between the base station and the UE.

For a beam management task, the UE may send beam feedback information to the base station; and the base station receives the beam feedback information from the UE, and then may perform beam alignment, beam search, beam training, beam prediction, beam tracking, and the like.

For a high-frequency communication task, the UE may send channel feedback information to the base station; and the base station receives the channel feedback information from the UE, and the base station may perform millimeter wave communication, terahertz communication, blockage prediction, beam switching, and the like based on the channel feedback information.

For a network management task, the UE may send interference measurement information, channel feedback information, and the like to the base station; and the base station receives the interference measurement information, the channel feedback information, and the like from the UE, and then performs load balancing, interference coordination, user mobility management, edge user management, MU-MIMO user pairing, and the like.

For a data transmission task, the UE may send user data, signaling, raw data/native data in a RAN, and the like to the base station; and the base station may receive the user data, the signaling, the raw data/native data in the RAN, and the like from the UE. Alternatively, the UE may send a transmission request to the base station, and the base station receives the transmission request from the UE, to perform user data transmission, signaling transmission, network control data transmission, transmission of raw data/native data in the RAN, satellite communication and scheduling, and the like.

In an example, the first communication device may be a base station, and the second communication device may be a UE. After the UE sends the environment reconstruction map to the base station, the base station may obtain the environment reconstruction map from the UE, and the UE may perform the following communication services:

For a MIMO transmission task, for example, channel prediction is performed on a channel, and the UE may feed back channel prediction that is based on the environment reconstruction map to the base station instead of original channel prediction, so that a feedback data amount can be reduced.

For a channel measurement task, the UE may obtain a propagation path parameter, channel covariance information, channel prediction, and the like, and feed back the information to the base station; and the base station obtains channel information of the UE based on the feedback from the UE and the environment reconstruction map.

For a beam management task, the UE may feed back beam state information and beam prediction information to the base station; and the base station performs beam alignment, beam search, beam training, beam prediction, beam tracking, and the like based on the feedback from the UE and the environment reconstruction map.

FIG. 9 is a schematic flowchart of another communication method according to an embodiment of this application. In the method, a first communication device obtains an environment reconstruction map from a second communication device. The method mainly relates to interaction between the first communication device and the second communication device.

S601: The first communication device sends first capability information to the second communication device. Correspondingly, the second communication device receives the first capability information sent by the first communication device.

The first capability information indicates the type information of the basic map element supported by the first communication device. For example, the first capability information indicates that the first communication device supports geometric types such as a point and a plane. For example, the first capability information may include 110000. For another example, the first capability information may include {POINT, PATCH}.

Optionally, the first capability information may further indicate an attribute type supported by the first communication device. For example, the first capability information indicates that the first communication device supports attribute types such as a dielectric constant and a permeability. For example, the first capability information may include 00110. For another example, the first capability information may alternatively include {DIELECTRIC-CONSTANT, PERMEABILITY}.

In some embodiments, the first communication device may be a base station, the second communication device may be a UE, and the first communication device may send the first capability information to the second communication device in a broadcast, multicast, or unicast manner.

In some embodiments, the first communication device may be a UE, the second communication device may be a base station, and the UE may send the first capability information of the UE to the base station. Correspondingly, the base station may receive the first capability information sent by the UE.

Optionally, the method may further include the following step: The second communication device determines an environment reconstruction map based on the first capability information.

S602: The second communication device sends the environment reconstruction map of a first space to the first communication device. Correspondingly, the first communication device receives the environment reconstruction map sent by the second communication device.

The environment reconstruction map is represented by using the basic map element corresponding to the first capability information. For example, if the first capability information indicates that the first communication device supports the geometric types such as a point and a plane, the environment reconstruction map may be represented by using a point, a plane, and the like. In other words, the environment reconstruction map may include a point, a plane, and the like. S603: The first communication device performs a communication service based on the environment reconstruction map.

In some embodiments, the environment reconstruction map may be represented by using the basic map element corresponding to the first capability information.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S604: The second communication device performs a communication service.

It should be understood that S604 is an optional step.

For S603 and S604, refer to S503 and S504 respectively. Details are not described herein again.

In this embodiment of this application, the first communication device may send the first capability information to the second communication device, and the second communication device may determine the environment reconstruction map based on the first capability information. Therefore, the first communication device may perform the corresponding communication service based on the environment reconstruction map, and the second communication device may also better perform the communication service based on information fed back by the first communication device.

FIG. 10 is a schematic flowchart of another communication method according to an embodiment of this application. In the method, a first communication device obtains an environment reconstruction map from a second communication device. The method mainly relates to interaction between the first communication device and the second communication device.

S701: The first communication device sends first capability information to the second communication device. Correspondingly, the second communication device receives the first capability information sent by the first communication device.

The first capability information indicates type information of a basic map element supported by the first communication device. For example, the first capability information indicates that the first communication device supports geometric types such as a point and a plane. For example, the first capability information may include 110000. For another example, the first capability information may include {POINT, PATCH}.

Optionally, the first capability information may further indicate an attribute type supported by the first communication device. For example, the first capability information indicates that the first communication device supports attribute types such as a dielectric constant and a permeability. For example, the first capability information may include 00110. For another example, the first capability information may alternatively include {DIELECTRIC-CONSTANT, PERMEABILITY}.

In some embodiments, the first communication device may be a base station, the second communication device may be a UE, and the first communication device may send the first capability information to the second communication device in a broadcast, multicast, or unicast manner.

In some embodiments, the first communication device may be a UE, the second communication device may be a base station, and the UE may send the first capability information of the UE to the base station. Correspondingly, the base station may receive the first capability information sent by the UE.

S702: The second communication device determines third capability information based on the first capability information and second capability information.

The second capability information indicates type information of a basic map element supported by the second communication device, and the third capability information indicates at least one item in type information of a basic map element supported by both the first communication device and the second communication device.

In an example, the second capability information indicates that the second communication device supports geometric types such as a point, a plane, and a cube. For example, the second capability information may include 110100. For another example, the second capability information may include {POINT, PATCH, CUBE}.

The second capability information may further indicate an attribute type supported by the second communication device. For example, the second capability information indicates that the second communication device supports attribute types such as a dielectric constant, a permeability, and a scattering coefficient. For example, the second capability information may include 00111. For another example, the second capability information may alternatively include {DIELECTRIC-CONSTANT, PERMEABILITY, SCATTER-COEFF}.

Therefore, the third capability information determined by the second communication device may include at least one of {POINT, PATCH}. Optionally, the third capability information may further include at least one of {DIELECTRIC-CONSTANT, PERMEABILITY}.

S703: The second communication device sends an environment reconstruction map of a first space to the first communication device. Correspondingly, the first communication device receives the environment reconstruction map sent by the second communication device.

The environment reconstruction map is represented by using the basic map element corresponding to the third capability information. For example, the third capability information includes geometric types such as a point and a plane. The environment reconstruction map may be represented by using a point, a plane, and the like. In other words, the environment reconstruction map may include a point, a plane, and the like.

S704: The first communication device performs a communication service based on the environment reconstruction map.

In some embodiments, the environment reconstruction map may be represented by using the basic map element corresponding to the third capability information.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S705: The second communication device performs a communication service.

It should be understood that S705 is an optional step.

It should be understood that for S704 and S705, refer to S503 and S504 respectively. Details are not described herein again.

In this embodiment of this application, the first communication device may send the first capability information of the first communication device to the second communication device. The second communication device may determine the third capability information based on the first capability information and the second capability information of the second communication device, and may represent the environment reconstruction map based on the basic map element corresponding to the third capability information. Subsequently, the environment reconstruction map may be sent to the first communication device, so that the first communication device may perform a corresponding communication service based on the environment reconstruction map. Further, the second communication device may also better perform the communication service based on information fed back by the first communication device.

FIG. 11 is a schematic flowchart of another communication method according to an embodiment of this application. In the method, a first communication device obtains an environment reconstruction map from a second communication device. The method mainly relates to interaction between the first communication device and the second communication device.

S801: The second communication device sends second capability information to the first communication device. Correspondingly, the first communication device receives the second capability information sent by the second communication device.

For specific content of this step, refer to S101. Details are not described herein again.

S802: The first communication device determines third capability information based on the second capability information and first capability information.

For specific content of this step, refer to S202. Details are not described herein again.

S803: The first communication device sends the third capability information to the second communication device. Correspondingly, the second communication device receives the third capability information sent by the first communication device.

The third capability information indicates at least one item in type information of a basic map element supported by both the first communication device and the second communication device. For example, the third capability information may include at least one of {POINT, PATCH}. Optionally, the third capability information may further include at least one of {DIELECTRIC-CONSTANT, PERMEABILITY}.

S804: The second communication device determines an environment reconstruction map based on the third capability information.

The environment reconstruction map is represented by using the basic map element corresponding to the third capability information. For example, the third capability information includes geometric types such as a point and a plane. The environment reconstruction map may be represented by using a point, a plane, and the like. In other words, the environment reconstruction map may include a point, a plane, and the like.

S805: The second communication device sends the environment reconstruction map to the first communication device. Correspondingly, the first communication device receives the environment reconstruction map sent by the second communication device.

S806: The first communication device performs a communication service based on the environment reconstruction map.

In some embodiments, the environment reconstruction map may be represented by using the basic map element corresponding to the third capability information.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S807: The second communication device performs a communication service.

It should be understood that S807 is an optional step.

It should be understood that for S806 and S807, refer to S503 and S504 respectively. Details are not described herein again.

In this embodiment of this application, the second communication device may send the second capability information of the second communication device to the first communication device, and the first communication device may determine the third capability information based on the second capability information and the first capability information of the first communication device, and may send the third capability information to the second communication device, so that the second communication device may represent the environment reconstruction map based on the third capability information, and subsequently send the environment reconstruction map to the first communication device. In this way, the first communication device may perform the corresponding communication service and/or sensing service based on the environment reconstruction map. Further, the second communication device may also better perform the communication service and/or a sensing service based on information fed back by the first communication device.

FIG. 12 is a schematic flowchart of another communication method according to an embodiment of this application. In the method, a first communication device obtains an environment reconstruction map through scanning. The method mainly relates to interaction between the first communication device and a second communication device.

S910: The second communication device obtains first information.

S920: The first communication device obtains the first information.

It should be understood that the first information obtained in S910 and S920 indicates a correspondence between a first service and type information of a basic map element, and the first service includes a communication service and/or a sensing service.

In some embodiments, the first communication device and the second communication device may obtain the first information from a protocol. In other words, the first information may be information predefined in the protocol.

In some embodiments, if the first communication device stores the first information, the second communication device may obtain the first information from the first communication device. That is, the second communication device receives the first information sent by the first communication device. Correspondingly, the first communication device sends the first information to the second communication device.

In some embodiments, if the second communication device stores the first information, the first communication device may obtain the first information from the second communication device. That is, the first communication device receives the first information sent by the second communication device. Correspondingly, the second communication device sends the first information to the first communication device.

The first service may include the communication service and/or the sensing service. The communication service may include at least one of the following: multiple-input multiple-output MIMO transmission, channel measurement, link adaptation, beam management, high-frequency communication, network management, and data transmission. The MIMO transmission may include, for example, channel prediction on a channel, MIMO precoding, link blockage prediction, and beam adjustment. The channel measurement may include, for example, channel estimation, propagation path parameter obtaining, channel covariance information obtaining, and channel prediction. The link adaptation may include, for example, channel link estimation, coding and modulation selection, and power control. The beam management may include, for example, beam alignment, beam search, beam training, beam prediction, and beam tracking. The high-frequency communication may include, for example, millimeter wave communication, terahertz communication, blockage prediction, and beam switching. The network management may include, for example, resource management, load balancing, interference coordination, access control, user scheduling, user mobility management, edge user management, and MU-MIMO user pairing. The data transmission may include, for example, user data transmission, signaling transmission, network control data transmission, transmission of raw data/native data in a RAN, non-terrestrial network communication, and satellite communication.

The sensing service may include performing a positioning/tracking/recognition task or imaging, assisting subsequent environment sensing, radar scanning, assisting evaluation of a sensing scan parameter, or the like based on a map.

It should be noted that a correspondence between different tasks (that is, the first service) and a type of a basic map element may be explicitly indicated or implicitly bound.

Explicit indication: The first information is indicated by using signaling indication or table mapping.

For geometric types (or attribute types) corresponding to different tasks, identifiers of the geometric types (or identifiers of the attribute types) may be indicated by enumeration/a bitmap/indexes or the like. Different tasks may indicate different geometric types and attribute types. It should be understood that some tasks may include a geometric type and an attribute type, and some tasks may include only a geometric type.

With reference to Table 1 and Table 3, it can be learned that the explicit indication may include the following two representation manners.

Manner 1: {{task identifier 1, geometric type {POINT, PATCH, CUBE}, attribute type {MATERIAL, TEXTURE, PERMEABILITY}}, {task identifier 2, geometric type {POINT, PATCH}, attribute type {TEXTURE}}, ...,}

Manner 2: {{task identifier 1, geometric type 110100, attribute type 11001}, {task identifier 2, geometric type 110000, attribute type 00001}, {task identifier 3, geometric type 110000}, ...,} Geometric types (or attribute types) corresponding to different tasks may also be indicated by using a table mapping relationship. The table may be agreed on in a protocol, or may be broadcast/multicast/unicast to a UE by a base station. For example, a "basic map element type table" (B-Table for short) shown in Table 4 is defined. Indexes in the table correspond to different geometric types and attribute types, and "/" indicates that there is no attribute type.

With reference to Table 4, the explicit indication may further include the following two representation manners.

Manner 1: The first information may reference an index in a table (for example, the B-Table), for example, {{task identifier 1, B-Table index 0}, {task identifier 2, B-Table index 2}, {task identifier 3, B-Table index 1}, ...,}, which respectively indicate that a geometric type of a task 1 includes 110100 and an attribute type includes 11001, a geometric type of a task 2 includes 110000, and a geometric type of a task 3 includes 110000 and an attribute type includes 00001.

Manner 2: An index in Table 4 is directly a task identifier. For example, the following table may indicate that a geometric type of a task with a task identifier of 0 includes 110100 and an attribute type includes 11001, a geometric type of a task with a task identifier of 1 includes 110000 and an attribute type includes 00001, and a geometric type of a task with a task identifier of 2 includes 110000.

Table 4

| Index | Geometric type | Attribute type |
|-------|----------------|----------------|
| 0 | 110100 | 11001 |
| 1 | 110000 | 00001 |
| 2 | 110000 | / |
| ... | ... | ... |

Implicit binding: For example, the first information is implicitly indicated in a manner such as time-frequency resource mapping.

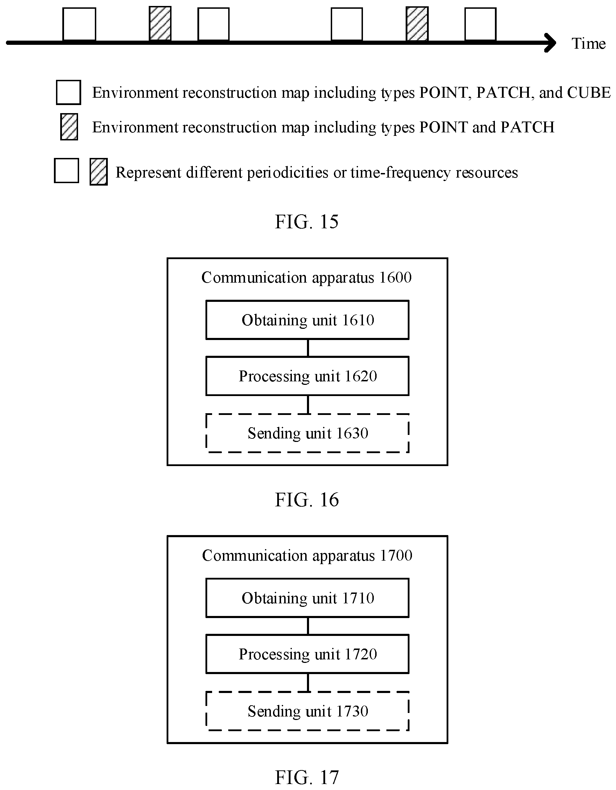

With reference to FIG. 15, it can be learned that the base station may feed back, on a corresponding time-frequency resource, environment reconstruction maps in different forms (different time-frequency resources implicitly correspond to different tasks). For example:

Manner 1: {periodicity 1, geometric type 110100, attribute type 11001}, {periodicity 2, geometric type 110000}, .... A correspondence between a task and a basic map element may be implicitly indicated by indicating a correspondence between different periodicities (a periodicity length and optional start time) and basic map elements. A geometric type of a task map corresponding to the periodicity 1 includes 110100, and an attribute type includes 11001. A geometric type of a task map corresponding to the periodicity 2 includes 110000.

Manner 2: {time-frequency resource 1, geometric type 110100, attribute type 11001}, {time-frequency resource 2, geometric type 110000}, .... A correspondence between a task and a basic map element may be implicitly indicated by indicating a correspondence between a time-frequency resource and a basic map element. A geometric type of a task map corresponding to the time-frequency resource 1 includes 110100, and an attribute type includes 11001. A geometric type of a task map corresponding to the time-frequency resource 2 includes 110000.

Manner 3: {time-frequency resource 1, B-Table index 0}, {time-frequency resource 2, B-Table index 2}, {time-frequency resource 3, B-Table index 1}, .... An index in Table 4 may be referenced for a correspondence between a task (time-frequency resource) and a basic map element. According to Table 4, a geometric type of a map sent on the time-frequency resource 1 includes 110100 and an attribute type includes 11001, a geometric type of a map sent on the time-frequency resource 2 includes 110000, and a geometric type of a map sent on the time-frequency resource 3 includes 110000 and an attribute type includes 00001.

It should be noted that the foregoing configuration may be indicated to a UE by using signaling such as RRC/MAC/PDCCH.

In some embodiments, the environment reconstruction map sent by the second communication device (for example, a base station) or the first communication device (for example, a UE) includes different types corresponding to different tasks. For example, the environment reconstruction map corresponding to the task 1 includes only the geometric type (or the attribute type) corresponding to the task 1, and the environment reconstruction map corresponding to the task 2 includes only the geometric type (or the attribute type) corresponding to the task 2.

S930: The first communication device scans a first space to obtain an environment reconstruction map.

The environment reconstruction map is represented by using a basic map element corresponding to a target service, the target service is a service that is to be performed by the first communication device, and the first service includes the target service.

For example, the target service is channel measurement, and an index of the target service may be an index 2 in Table 4. In this case, a geometric type of the target service includes 110000 (corresponding to a geometric type of a point and a plane in Table 1). The environment reconstruction map is represented by using the basic map element corresponding to the target service. In other words, the environment reconstruction map may be represented by using a point, a plane, and the like. In other words, the environment reconstruction map may include a point, a plane, and the like.

S940: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S950: The first communication device sends the environment reconstruction map to the second communication device. Correspondingly, the second communication device receives the environment reconstruction map.

It should be understood that S950 is an optional step. In some embodiments, the first communication device may send the environment reconstruction map to the second communication device for use by the second communication device.

S960: The second communication device performs a communication service based on the environment reconstruction map.

It should be understood that S960 is an optional step. After the first communication device sends the environment reconstruction map to the second communication device, and the second communication device receives the environment reconstruction map, the second communication device may also perform a sensing service and/or the communication service based on the environment reconstruction map.

It should be understood that for S940 to S960, refer to S103 to S105 respectively. Details are not described herein again.

In this embodiment of this application, both the first communication device and the second communication device can obtain the first information. That is, both the first communication device and the second communication device can obtain a correspondence between different services and basic map elements. Based on this, the first communication device may obtain the environment reconstruction map corresponding to the target service through scanning, and perform the communication service and/or the sensing service based on the environment reconstruction map. Subsequently, the first communication device may send the environment reconstruction map to the second communication device, so that the second communication device can perform a corresponding communication service and/or sensing service based on the environment reconstruction map.

FIG. 13 is a schematic flowchart of another communication method according to an embodiment of this application. In the method, a first communication device obtains an environment reconstruction map through scanning. The method mainly relates to interaction between the first communication device and a second communication device.

S1010: The second communication device obtains first information.

S1020: The first communication device obtains the first information.

For S1010 and S1020, refer to S910 and S920 respectively. Details are not described herein again. S1030. The first communication device sends a target service to the second communication device. Correspondingly, the second communication device receives the target service sent by the first communication device.

It should be understood that S1030 is an optional step. In some embodiments, the first communication device may not send the target service to the second communication device, and the target service may be implicitly indicated by using a time-frequency resource shown in FIG. 15. For example, in a periodicity 1 or a time-frequency resource 1, a geometric type corresponding to the target service is 110100, and the attribute type is 11001. Therefore, in the periodicity 1 or the time-frequency resource 1, the second communication device may directly send parameter information with a geometric type of 110100 and an attribute type of 11001.

In some other embodiments, the first communication device may send the target service to the second communication device. For example, the first communication device may send an identifier of the target service to the second communication device, so that the second communication device can determine, based on Table 4, the geometric type and the attribute type corresponding to the target service.

S1040: The second communication device determines an environment reconstruction map based on the target service.

The environment reconstruction map is represented by using a basic map element corresponding to the target service.

It should be understood that S1040 is an optional step. In some embodiments, in the periodicity 1 or the time-frequency resource 1, the second communication device may directly send the environment reconstruction map corresponding to the target service.

In some embodiments, if the second communication device receives the target service sent by the first communication device, the second communication device may determine the environment reconstruction map based on the target service that is to be performed by the first communication device.

S1050: The second communication device sends the environment reconstruction map to the first communication device. Correspondingly, the first communication device receives the environment reconstruction map sent by the second communication device.

S1060: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S1070: The second communication device performs a communication service.

It should be understood that S1070 is an optional step.

It should be understood that for S1060 and S1070, refer to S503 and S504 respectively. Details are not described herein again.

In this embodiment of this application, both the first communication device and the second communication device can obtain the first information. That is, both the first communication device and the second communication device can obtain a correspondence between different services and basic map elements. Based on this, the first communication device may send the target service that is to be performed to the second communication device, and the second communication device may determine the environment reconstruction map based on the first information and the target service, and send the environment reconstruction map to the first communication device, so that the first communication device can perform the communication service and/or the sensing service based on the environment reconstruction map. Further, the second communication device may also better perform the communication service and/or a sensing service based on information fed back by the first communication device.

FIG. 14 is a schematic flowchart of another communication method according to an embodiment of this application. In the method, a first communication device obtains an environment reconstruction map through scanning. The method mainly relates to interaction between the first communication device and a second communication device.

S1110: The second communication device obtains first information.

S1120: The first communication device obtains the first information.

For S1110 and S1120, refer to S910 and S920 respectively. Details are not described herein again. S1130: The second communication device sends a service environment reconstruction map to the first communication device. Correspondingly, the first communication device receives the service environment reconstruction map sent by the second communication device.

The service environment reconstruction map is represented by using a basic map element corresponding to a first service. In other words, the service environment reconstruction map is represented by using, for example, basic map elements corresponding to a plurality of different tasks shown in Table 4. The first service includes a target service.

S1140: The first communication device determines an environment reconstruction map from the service environment reconstruction map based on the target service.

The environment reconstruction map is represented by using a basic map element corresponding to the target service.

In this step, the first communication device may determine, from the service environment reconstruction map sent by the second communication device, the environment reconstruction map corresponding to the target service, so that the first communication device performs the target service.

S1150: The first communication device performs a communication service based on the environment reconstruction map.

In some embodiments, the first communication device may perform the communication service based on the environment reconstruction map, for example, MIMO transmission, channel measurement, link adaptation, beam management, high-frequency communication, network management, and data transmission.

In some embodiments, the first communication device may further perform a sensing service based on the environment reconstruction map, for example, perform a positioning/tracking/recognition task or imaging based on the map, or assisting subsequent environment sensing, radar scanning, or assisting evaluation of a sensing scan parameter.

S1160: The second communication device performs a communication service.

It should be understood that S1160 is an optional step.

It should be understood that for S1150 and S1160, refer to S503 and S504 respectively. Details are not described herein again.

In this embodiment of this application, both the first communication device and the second communication device can obtain the first information. That is, both the first communication device and the second communication device can obtain a correspondence between different services and basic map elements. Based on this, the second communication device can send existing service environment reconstruction maps about different services to the first communication device. The first communication device may determine, from the service environment reconstruction maps based on the target service that is to be performed by the first communication device, the environment reconstruction map corresponding to the target service, and may perform the communication service and/or the sensing service based on the environment reconstruction map. Further, the second communication device may also better perform the communication service and/or a sensing service based on information fed back by the first communication device.

The foregoing describes in detail the method embodiments in embodiments of this application with reference to FIG. 1 to FIG. 15, and the following describes in detail apparatus embodiments in embodiments of this application with reference to FIG. 16 to FIG. 19. It should be understood that descriptions of the method embodiments correspond to descriptions of the apparatus embodiments. Therefore, for a part that is not described in detail, refer to the foregoing method embodiments.

FIG. 16 to FIG. 19 are diagrams of structures of possible communication apparatuses according to embodiments of this application. These communication apparatuses may be configured to implement functions of the first communication device or the second communication device in the foregoing method embodiments, and therefore may also implement beneficial effects of the foregoing method embodiments.

As shown in FIG. 16, a communication apparatus 1600 includes an obtaining unit 1610 and a processing unit 1620. The communication apparatus 1600 may be configured to implement functions of the first communication device in the method embodiments shown in FIG. 2 and FIG. 4 to FIG. 14.

When the communication apparatus 1600 is configured to implement the functions of the first communication device in the method embodiments shown in FIG. 2 and FIG. 4 to FIG. 14, the obtaining unit 1610 is configured to obtain an environment reconstruction map of a first space, where the first space is a space within a preset range of the first communication device, the environment reconstruction map is represented by using a basic map element, the basic map element includes parameter information of the basic map element, and the parameter information of the basic map element includes type information and location information of the basic map element. The processing unit 1620 is configured to perform a communication service based on the environment reconstruction map, where the communication service includes at least one of the following: multiple-input multiple-output MIMO transmission, channel measurement, link adaptation, beam management, high-frequency communication, network management, and data transmission.

In some embodiments, the obtaining unit 1610 is further configured to scan the first space to obtain the environment reconstruction map.

In some embodiments, the environment reconstruction map is represented by using a basic map element corresponding to first capability information, and the first capability information indicates type information of the basic map element supported by the first communication device.

In some embodiments, the obtaining unit 1610 is further configured to receive second capability information sent by a second communication device, where the second capability information indicates type information of a basic map element supported by the second communication device, and the environment reconstruction map is represented by using the basic map element corresponding to the second capability information.

In some embodiments, the obtaining unit 1610 is further configured to receive second capability information sent by a second communication device, where the second capability information indicates type information of a basic map element supported by the second communication device. The processing unit 1620 is further configured to determine third capability information based on the second capability information and first capability information, where the first capability information indicates type information of a basic map element supported by the first communication device, the third capability information indicates at least one item in type information of a basic map element supported by both the first communication device and the second communication device, and the environment reconstruction map is represented by using the basic map element corresponding to the third capability information.

In some embodiments, the obtaining unit 1610 is further configured to receive a global environment reconstruction map sent by a second communication device, where the global environment reconstruction map is represented by using a basic map element corresponding to second capability information, and the second capability information indicates type information of the basic map element supported by the second communication device. The processing unit 1620 is further configured to determine the environment reconstruction map from the global environment reconstruction map based on first capability information, where the environment reconstruction map is represented by using a basic map element corresponding to the first capability information, and the first capability information indicates type information of the basic map element supported by the first communication device.

In some embodiments, the obtaining unit 1610 is further configured to receive a first local environment reconstruction map sent by a second communication device, where the first local environment reconstruction map is an environment reconstruction map that is in the first space and that the second communication device has. The obtaining unit 1610 is further configured to scan the first space to obtain a second local environment reconstruction map. The processing unit 1620 is further configured to determine the environment reconstruction map based on the first local environment reconstruction map and the second local environment reconstruction map.

In some embodiments, the communication apparatus further includes a sending unit 1630, and the sending unit 1630 is configured to send the environment reconstruction map to the second communication device.

In some embodiments, the sending unit 1630 is further configured to send first capability information to the second communication device, where the first capability information indicates type information of a basic map element supported by the first communication device.

In some embodiments, the obtaining unit 1610 is further configured to receive the environment reconstruction map sent by a second communication device.

In some embodiments, the obtaining unit 1610 is further configured to receive second capability information sent by the second communication device, where the second capability information indicates type information of a basic map element supported by the second communication device. In some embodiments, the environment reconstruction map is represented by using the basic map element corresponding to the second capability information, and the second capability information indicates the type information of the basic map element supported by the second communication device.

In some embodiments, the sending unit 1630 is further configured to send first capability information to the second communication device, where the first capability information indicates type information of a basic map element supported by the first communication device.

In some embodiments, the environment reconstruction map is represented by using the basic map element corresponding to the first capability information.

In some embodiments, the sending unit 1630 is further configured to send first capability information to the second communication device, where the first capability information indicates type information of a basic map element supported by the first communication device. The environment reconstruction map is represented by using a basic map element corresponding to third capability information, and the third capability information indicates at least one item in type information of a basic map element supported by both the first communication device and the second communication device.

In some embodiments, the obtaining unit 1610 is further configured to receive second capability information sent by the second communication device, where the second capability information indicates type information of a basic map element supported by the second communication device.

The processing unit 1620 is further configured to determine third capability information based on the second capability information and first capability information, where the first capability information indicates type information of a basic map element supported by the first communication device, the third capability information indicates at least one item in type information of a basic map element supported by both the first communication device and the second communication device. The sending unit 1630 is further configured to send the third capability information to the second communication device, where the environment reconstruction map is represented by using the basic map element corresponding to the third capability information.

In some embodiments, the obtaining unit 1610 is further configured to obtain first information, where the first information indicates a correspondence between a first service and type information of a basic map element, and the first service includes the communication service and/or a sensing service.

In some embodiments, the obtaining unit 1610 is further configured to receive the first information sent by a second communication device.

In some embodiments, the processing unit 1620 is further configured to scan the first space based on a target service, to obtain the environment reconstruction map, where the environment reconstruction map is represented by using a basic map element corresponding to the target service, the target service is a service that is to be performed by the first communication device, the first service includes the target service, and the environment reconstruction map is represented by using the basic map element corresponding to the target service.

In some embodiments, the sending unit 1630 is further configured to send the environment reconstruction map to the second communication device.

In some embodiments, the obtaining unit 1610 is further configured to receive the environment reconstruction map sent by the second communication device, where the environment reconstruction map is represented by using a basic map element corresponding to a target service, the first service includes the target service, and the target service is a service that is to be performed by the first communication device.

In some embodiments, the sending unit 1630 is further configured to send the target service to the second communication device.

In some embodiments, the obtaining unit 1610 is further configured to receive a service environment reconstruction map sent by the second communication device, where the service environment reconstruction map is represented by using a basic map element corresponding to the first service. The processing unit 1620 is further configured to determine the environment reconstruction map from the service environment reconstruction map based on a target service, where the target service is a service that is to be performed by the first communication device, the first service includes the target service, and the environment reconstruction map is represented by using a basic map element corresponding to the target service.

As shown in FIG. 17, a communication apparatus 1700 includes an obtaining unit 1710 and a processing unit 1720. The communication apparatus 1700 may be configured to implement functions of the second communication device in the method embodiments shown in FIG. 2 and FIG. 4 to FIG. 14.

When the communication apparatus 1700 is configured to implement the functions of the second communication device in the method embodiments shown in FIG. 2 and FIG. 4 to FIG. 14, the obtaining unit 1710 is configured to receive an environment reconstruction map of a first space sent by a first communication device, where the first space is a space within a preset range of the first communication device, the environment reconstruction map is represented by using a basic map element, the basic map element includes parameter information of the basic map element, and the parameter information of the basic map element includes type information and location information of the basic map element. The processing unit 1720 is configured to perform a communication service based on the environment reconstruction map, where the communication service includes at least one of the following: multiple-input multiple-output MIMO transmission, channel measurement, link adaptation, beam management, high-frequency communication, network management, and data transmission.

In some embodiments, the environment reconstruction map is represented by using a basic map element corresponding to first capability information, and the first capability information indicates type information of the basic map element supported by the first communication device.

In some embodiments, the obtaining unit 1710 is further configured to receive the first capability information sent by the second communication device, where the first capability information indicates the type information of the basic map element supported by the first communication device.

In some embodiments, the communication apparatus further includes a sending unit 1730, and the sending unit 1730 is further configured to send second capability information to the first communication device, where the second capability information indicates type information of a basic map element supported by the second communication device.

In some embodiments, the environment reconstruction map is represented by using the basic map element corresponding to the second capability information.

In some embodiments, the sending unit 1730 is further configured to send second capability information to the first communication device, where the second capability information indicates type information of a basic map element supported by the second communication device. The environment reconstruction map is represented by using a basic map element corresponding to third capability information, and the third capability information indicates at least one item in type information of a basic map element supported by both the first communication device and the second communication device.

In some embodiments, the sending unit 1730 is further configured to send a global environment reconstruction map to the first communication device, where the global environment reconstruction map is represented by using a basic map element corresponding to second capability information, and the second capability information indicates type information of the basic map element supported by the second communication device. The environment reconstruction map is represented by using a basic map element corresponding to first capability information, and the first capability information indicates type information of the basic map element supported by the first communication device.

In some embodiments, the sending unit 1730 is further configured to send a first local environment reconstruction map to the first communication device, where the first local environment reconstruction map is an environment reconstruction map that is in the first space and that the second communication device has.

In some embodiments, the obtaining unit 1710 is further configured to obtain first information, where the first information indicates a correspondence between a first service and type information of a basic map element, and the first service includes the communication service and/or a sensing service.

In some embodiments, the obtaining unit 1710 is further configured to receive the first information sent by the first communication device.

In some embodiments, the environment reconstruction map is represented by using a basic map element corresponding to a target service, the target service is a service that is to be performed by the first communication device, and the first service includes the target service.

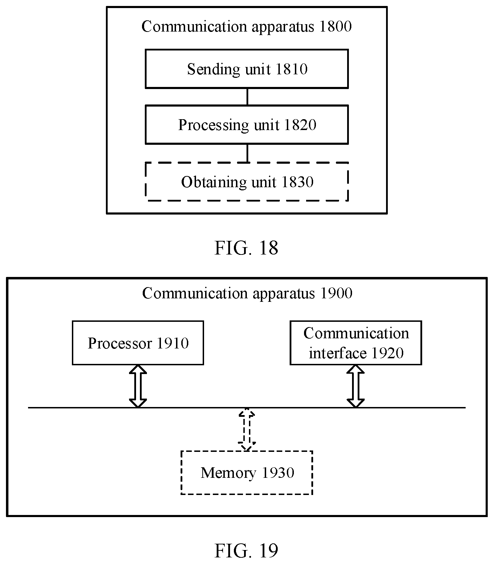

As shown in FIG. 18, a communication apparatus 1800 includes a sending unit 1810 and a processing unit 1820. The communication apparatus 1800 may be configured to implement functions of the second communication device in the method embodiments shown in FIG. 2 and FIG. 4 to FIG. 14.

When the communication apparatus 1800 is configured to implement the functions of the second communication device in the method embodiments shown in FIG. 2 and FIG. 4 to FIG. 14, the sending unit 1810 is configured to send an environment reconstruction map of a first space to a first communication device, where the first space is a space within a preset range of the first communication device, the environment reconstruction map is represented by using a basic map element, the basic map element includes parameter information of the basic map element, and the parameter information of the basic map element includes type information and location information of the basic map element. The processing unit 1820 is configured to perform a communication service, where the communication service includes at least one of the following: multiple-input multiple-output MIMO transmission, channel measurement, link adaptation, beam management, high-frequency communication, network management, and data transmission.

In some embodiments, the sending unit 1810 is further configured to send second capability information to the second communication device, where the second capability information indicates type information of a basic map element supported by the second communication device. In some embodiments, the environment reconstruction map is represented by using the basic map element corresponding to the second capability information, and the second capability information indicates the type information of the basic map element supported by the second communication device.

In some embodiments, the communication apparatus further includes: an obtaining unit 1830. The obtaining unit 1830 is configured to receive first capability information sent by the first communication device, where the first capability information indicates type information of a basic map element supported by the first communication device. The environment reconstruction map is represented by using the basic map element corresponding to the first capability information. In some embodiments, the obtaining unit 1830 is further configured to receive first capability information sent by the first communication device, where the first capability information indicates type information of a basic map element supported by the first communication device. The processing unit 1820 is further configured to determine third capability information based on the first capability information and second capability information, where the third capability information indicates at least one item in type information of a basic map element supported by both the first communication device and the second communication device, and the environment reconstruction map is represented by using the basic map element corresponding to the third capability information.

In some embodiments, the obtaining unit 1830 is further configured to receive third capability information sent by the first communication device, where the third capability information indicates at least one item in type information of a basic map element supported by both the first communication device and the second communication device, and the environment reconstruction map is represented by using the basic map element corresponding to the third capability information.

In some embodiments, the obtaining unit 1830 is further configured to obtain first information, where the first information indicates a correspondence between a first service and type information of a basic map element, and the first service includes the communication service and/or a sensing service.

In some embodiments, the obtaining unit 1830 is further configured to receive the first information sent by the first communication device.

In some embodiments, the environment reconstruction map is represented by using a basic map element corresponding to a target service, the target service is a service that is to be performed by the first communication device, and the first service includes the target service.

In some embodiments, the obtaining unit 1830 is further configured to receive the target service sent by the first communication device; and the processing unit 1820 is further configured to determine the environment reconstruction map based on the target service.

As shown in FIG. 19, the communication apparatus 1900 includes a processor 1910 and a communication interface 1920. The processor 1910 and the communication interface 1920 are coupled to each other. It may be understood that the communication interface 1920 may be a transceiver or an input/output interface. Optionally, the communication apparatus 200 may further include a memory 1930, configured to: store instructions executed by the processor 1910, or store input data required by the processor 1910 to run the instructions, or store data generated after the processor 1910 runs the instructions.

When the communication apparatus 1900 is configured to implement the methods shown in FIG. 2 and FIG. 4 to FIG. 14, the processor 1910 is configured to implement functions of the processing unit, and the communication interface 1920 is configured to implement functions of the obtaining unit and the sending unit.

It should be understood that the processor 1910 shown in FIG. 19 may include at least one processor, and the communication interface 1920 may also include a plurality of communication interfaces.

For explanations and beneficial effect of related content in any one of the apparatuses provided above, refer to the corresponding method embodiment provided above. Details are not described herein again.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

An embodiment of this application provides a chip system, including a processor, configured to invoke a computer program from a memory and run the computer program, so that a device in which the chip system is installed performs the steps performed by the first communication device in FIG. 2 and FIG. 4 to FIG. 14, or a device in which the chip system is installed performs the steps performed by the second communication device in FIG. 2 and FIG. 4 to FIG. 14. Optionally, the memory may alternatively be integrated with the processor.

An embodiment of this application provides a readable storage medium. The computer-readable medium stores program code to be executed by a device. The program code includes the steps performed by the first communication device in FIG. 2 and FIG. 4 to FIG. 14, or the program code includes the steps performed by the second communication device in FIG. 2 and FIG. 4 to FIG. 14.

An embodiment of this application provides a computer program product. When the computer program product is run on a computer, the computer is enabled to perform the steps performed by the first communication device in FIG. 2 and FIG. 4 to FIG. 14, or the computer is enabled to perform the steps performed by the second communication device in FIG. 2 and FIG. 4 to FIG. 14. In addition, an embodiment of this application further provides a communication system. The communication system may include the first communication device in FIG. 2 and FIG. 4 to FIG. 14, and the second communication device in FIG. 2 and FIG. 4 to FIG. 14.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated in figures, both a compute device and an application that runs on the compute device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining, by a first communication device, an environment reconstruction map of a first space, wherein the first space is a space within a preset range of the first communication device, the environment reconstruction map is represented by using a basic map element, the basic map element comprises parameter information of the basic map element, and the parameter information of the basic map element comprises type information and location information of the basic map element; and
   performing, by the first communication device, a communication service based on the environment reconstruction map, wherein the communication service comprises at least one of the following: multiple-input multiple-output MIMO transmission, channel measurement, link adaptation, beam management, high-frequency communication, network management, and data transmission.

2. The method according to claim 1, wherein obtaining, by the first communication device, the environment reconstruction map of the first space comprises:
   scanning, by the first communication device, the first space to obtain the environment reconstruction map.

3. The method according to claim 2, wherein the environment reconstruction map is represented by using a basic map element corresponding to first capability information, and the first capability information indicates type information of the basic map element supported by the first communication device.

4. The method according to claim 2, wherein the method further comprises:
   receiving, by the first communication device, second capability information sent by a second communication device, wherein the second capability information indicates type information of a basic map element supported by the second communication device, and the environment reconstruction map is represented by using the basic map element corresponding to the second capability information.

5. The method according to claim 2, wherein the method further comprises:

   receiving, by the first communication device, second capability information sent by a second communication device, wherein the second capability information indicates type information of a basic map element supported by the second communication device; and
   determining, by the first communication device, third capability information based on the second capability information and first capability information, wherein the first capability information indicates type information of a basic map element supported by the first communication device, and the third capability information indicates at least one item in type information of a basic map element supported by both the first communication device and the second communication device, wherein

the environment reconstruction map is represented by using the basic map element corresponding to the third capability information.

6. The method according to claim 1, wherein obtaining, by the first communication device, the environment reconstruction map of the first space comprises:

receiving, by the first communication device, a global environment reconstruction map sent by a second communication device, wherein the global environment reconstruction map is represented by using a basic map element corresponding to second capability information, and the second capability information indicates type information of the basic map element supported by the second communication device; and determining, by the first communication device, the environment reconstruction map from the global environment reconstruction map based on first capability information, wherein the environment reconstruction map is represented by using a basic map element corresponding to the first capability information, and the first capability information indicates type information of the basic map element supported by the first communication device.

7. The method according to claim 1, wherein obtaining, by the first communication device, the environment reconstruction map of the first space comprises:

receiving, by the first communication device, a first local environment reconstruction map sent by a second communication device, wherein the first local environment reconstruction map is an environment reconstruction map that is in the first space and that the second communication device has; scanning, by the first communication device, the first space to obtain a second local environment reconstruction map; and determining, by the first communication device, the environment reconstruction map based on the first local environment reconstruction map and the second local environment reconstruction map.

8. The method according to any one of claims 1 to 7, wherein performing, by the first communication device, the communication service based on the environment reconstruction map comprises: sending, by the first communication device, the environment reconstruction map to the second communication device.

9. The method according to claim 8, wherein the method further comprises: sending, by the first communication device, the first capability information to the second communication device, wherein the first capability information indicates the type information of the basic map element supported by the first communication device.

10. The method according to claim 1, wherein obtaining, by the first communication device, the environment reconstruction map of the first space comprises: receiving, by the first communication device, the environment reconstruction map sent by a second communication device.

11. The method according to claim 10, wherein the method further comprises: receiving, by the first communication device, second capability information sent by the second communication device, wherein the second capability information indicates type information of a basic map element supported by the second communication device.

12. The method according to claim 10 or 11, wherein the environment reconstruction map is represented by using the basic map element corresponding to the second capability information, and the second capability information indicates the type information of the basic map element supported by the second communication device.

13. The method according to claim 10, wherein the method further comprises:

sending, by the first communication device, first capability information to the second communication device, wherein the first capability information indicates type information of a basic map element supported by the first communication device, wherein the environment reconstruction map is represented by using the basic map element corresponding to the first capability information.

14. The method according to claim 10, wherein the method further comprises:

sending, by the first communication device, first capability information to the second communication device, wherein the first capability information indicates type information of a basic map element supported by the first communication device, wherein the environment reconstruction map is represented by using a basic map element corresponding to third capability information, and the third capability information indicates at least one item in type information of a basic map element supported by both the first communication device and the second communication device.

15. The method according to claim 10, wherein the method further comprises:

receiving, by the first communication device, second capability information sent by the second communication device, wherein the second capability information indicates type information of a basic map element supported by the second communication device;

determining, by the first communication device, third capability information based on the second capability information and first capability information, wherein the first capability information indicates type information of a basic map element supported by the first communication device, and the third capability information indicates at least one item in type information of a basic map element supported by both the first communication device and the second communication device; and

sending, by the first communication device, the third capability information to the second communication device, wherein

the environment reconstruction map is represented by using the basic map element corresponding to the third capability information.

16. The method according to claim 1, wherein the method further comprises:
obtaining, by the first communication device, first information, wherein the first information indicates a correspondence between a first service and type information of a basic map element, and the first service comprises the communication service and/or a sensing service.

17. The method according to claim 16, wherein obtaining, by the first communication device, the first information comprises:
receiving, by the first communication device, the first information sent by a second communication device.

18. The method according to claim 16 or 17, wherein obtaining, by the first communication device, the environment reconstruction map of the first space comprises:
scanning, by the first communication device, the first space to obtain the environment reconstruction map, wherein the environment reconstruction map is represented by using a basic map element corresponding to a target service, the target service is a service that is to be performed by the first communication device, and the first service comprises the target service.

19. The method according to claim 18, wherein the method further comprises:
sending, by the first communication device, the environment reconstruction map to the second communication device.

20. The method according to claim 16 or 17, wherein obtaining, by the first communication device, the environment reconstruction map of the first space comprises:
receiving, by the first communication device, the environment reconstruction map sent by the second communication device, wherein the environment reconstruction map is represented by using a basic map element corresponding to a target service, the first service comprises the target service, and the target service is a service that is to be performed by the first communication device.

21. The method according to claim 20, wherein before receiving, by the first communication device, the environment reconstruction map sent by the second communication device, the method further comprises:
sending, by the first communication device, the target service to the second communication device.

22. The method according to claim 16 or 17, wherein obtaining, by the first communication device, the environment reconstruction map of the first space comprises:

receiving, by the first communication device, a service environment reconstruction map sent by the second communication device, wherein the service environment reconstruction map is represented by using a basic map element corresponding to the first service; and

determining, by the first communication device, the environment reconstruction map from the service environment reconstruction map based on a target service, wherein the target service is a service that is to be performed by the first communication device, the first service comprises the target service, and the environment reconstruction map is represented by using a basic map element corresponding to the target service.

23. The method according to any one of claims 1 to 22, wherein the type information of the basic map element comprises at least one of the following: a plane, a voxel, an octree, a sphere, a cylinder, and a cone.

24. The method according to any one of claims 1 to 23, wherein the location information of the basic map element comprises at least one of the following: coordinates of the basic map element in the environment reconstruction map, an index of the basic map element in the environment reconstruction map, and a space range of the basic map element in the environment reconstruction map.

25. The method according to any one of claims 1 to 24, wherein the parameter information of the basic map element further comprises:

    a representation parameter, wherein the representation parameter represents a geometric feature of the basic map element;
    an attribute type, wherein the attribute type comprises at least one of the following: a dielectric constant, a permeability, and a scattering coefficient;
    an attribute parameter, wherein the attribute parameter is a specific parameter value corresponding to the attribute type; and/or
    a reliability parameter, wherein the reliability parameter indicates a reliability degree of the basic map element.

26. A communication method, comprising:

    receiving, by a second communication device, an environment reconstruction map of a first space sent by a first communication device, wherein the first space is a space within a preset range of the first communication device, the environment reconstruction map is represented by using a basic map element, the basic map element comprises parameter information of the basic map element, and the parameter information of the basic map element comprises type information and location information of the basic map element; and
    performing, by the second communication device, a communication service based on the environment reconstruction map, wherein the communication service comprises at least one of the following: multiple-input multiple-output MIMO transmission, channel measurement, link adaptation, beam management, high-frequency communication, network management, and data transmission.

27. The method according to claim 26, wherein the environment reconstruction map is represented by using a basic map element corresponding to first capability information, and the first capability information indicates type information of the basic map element supported by the first communication device.

28. The method according to claim 26 or 27, wherein the method further comprises:
    receiving, by the second communication device, the first capability information sent by the first communication device, wherein the first capability information indicates the type information of the basic map element supported by the first communication device.

29. The method according to claim 26, wherein the method further comprises:

    sending, by the second communication device, second capability information to the first communication device, wherein the second capability information indicates type information of a basic map element supported by the second communication device, wherein
    the environment reconstruction map is represented by using the basic map element corresponding to the second capability information.

30. The method according to claim 26, wherein the method further comprises:

    sending, by the second communication device, second capability information to the first communication device, wherein the second capability information indicates type information of a basic map element supported by the second communication device, wherein
    the environment reconstruction map is represented by using a basic map element corresponding to third capability information, and the third capability information indicates at least one item in type information of a basic map element supported by both the first communication device and the second communication device.

31. The method according to claim 26, wherein before receiving, by the second communication device, the environment reconstruction map of the first space sent by the first communication device, the method further comprises:

    sending, by the second communication device, a global environment reconstruction map to the first communication device, wherein the global environment reconstruction map is represented by using a basic map element corresponding to second capability information, and the second capability information indicates type information of the basic map element supported by the second communication device, wherein
    the environment reconstruction map is represented by using a basic map element corresponding to first capability information, and the first capability information indicates type information of the basic map element supported by the first communication device.

32. The method according to claim 26, wherein before receiving, by the second communication device, the environment reconstruction map of the first space sent by the first communication device, the method further comprises:

sending, by the second communication device, a first local environment reconstruction map to the first communication device, wherein the first local environment reconstruction map is an environment reconstruction map that is in the first space and that the second communication device has.

33. The method according to claim 26, wherein the method further comprises:

obtaining, by the second communication device, first information, wherein the first information indicates a correspondence between a first service and type information of a basic map element, and the first service comprises the communication service and/or a sensing service.

34. The method according to claim 33, wherein obtaining, by the second communication device, the first information comprises:

receiving, by the second communication device, the first information sent by the first communication device.

35. The method according to claim 33 or 34, wherein the environment reconstruction map is represented by using a basic map element corresponding to a target service, the target service is a service that is to be performed by the first communication device, and the first service comprises the target service.

36. The method according to any one of claims 26 to 35, wherein the type information of the basic map element comprises at least one of the following: a plane, a voxel, an octree, a sphere, a cylinder, and a cone.

37. The method according to any one of claims 26 to 36, wherein the location information of the basic map element comprises at least one of the following: coordinates of the basic map element in the environment reconstruction map, an index of the basic map element in the environment reconstruction map, and a space range of the basic map element in the environment reconstruction map.

38. The method according to any one of claims 26 to 37, wherein the parameter information of the basic map element further comprises:

a representation parameter, wherein the representation parameter represents a geometric feature of the basic map element;

an attribute type, wherein the attribute type comprises at least one of the following: a dielectric constant, a permeability, and a scattering coefficient;

an attribute parameter, wherein the attribute parameter is a specific parameter value corresponding to the attribute type; and/or

a reliability parameter, wherein the reliability parameter indicates a reliability degree of the basic map element.

39. A communication method, comprising:

sending, by a second communication device, an environment reconstruction map of a first space to a first communication device, wherein the first space is a space within a preset range of the first communication device, the environment reconstruction map is represented by using a basic map element, the basic map element comprises parameter information of the basic map element, and the parameter information of the basic map element comprises type information and location information of the basic map element; and

performing, by the second communication device, a communication service, wherein the communication service comprises at least one of the following: multiple-input multiple-output MIMO transmission, channel measurement, link adaptation, beam management, high-frequency communication, network management, and data transmission.

40. The method according to claim 39, wherein the method further comprises:

sending, by the second communication device, second capability information to the first communication device, wherein the second capability information indicates type information of a basic map element supported by the second communication device.

41. The method according to claim 39 or 40, wherein the environment reconstruction map is represented by using the basic map element corresponding to the second capability information, and the second capability information indicates the type information of the basic map element supported by the second communication device.

42. The method according to claim 39, wherein the method further comprises:

receiving, by the second communication device, first capability information sent by the first communication device, wherein the first capability information indicates type information of a basic map element supported by the first communication device, wherein the environment reconstruction map is represented by using the basic map element corresponding to the first capability information.

43. The method according to claim 39, wherein the method further comprises:

receiving, by the second communication device, first capability information sent by the first communication device, wherein the first capability information indicates type information of a basic map element supported by the first communication device; and

determining, by the second communication device, third capability information based on the first capability information and second capability information, wherein the third capability information indicates at least one item in type information of a basic map element supported by both the first communication device and the second communication device, wherein the environment reconstruction map is represented by using the basic map element corresponding to the third capability information.

44. The method according to claim 39, wherein the method further comprises:

receiving, by the second communication device, third capability information sent by the first communication device, wherein the third capability information indicates at least one item in type information of a basic map element supported by both the first communication device and the second communication device, wherein the environment reconstruction map is represented by using the basic map element corresponding to the third capability information.

45. The method according to claim 39, wherein the method further comprises:
obtaining, by the second communication device, first information, wherein the first information indicates a correspondence between a first service and type information of a basic map element, and the first service comprises the communication service and/or a sensing service.

46. The method according to claim 45, wherein obtaining, by the second communication device, the first information comprises:
receiving, by the second communication device, the first information sent by the first communication device.

47. The method according to claim 45 or 46, wherein the environment reconstruction map is represented by using a basic map element corresponding to a target service, the target service is a service that is to be performed by the first communication device, and the first service comprises the target service.

48. The method according to claim 47, wherein before sending, by the second communication device, the environment reconstruction map of the first space to the first communication device, the method further comprises:

receiving, by the second communication device, the target service sent by the first communication device; and

determining, by the second communication device, the environment reconstruction map based on the target service.

49. The method according to any one of claims 39 to 48, wherein the type information of the basic map element comprises at least one of the following: a plane, a voxel, an octree, a sphere, a cylinder, and a cone.

50. The method according to any one of claims 39 to 49, wherein the location information of the basic map element comprises at least one of the following: coordinates of the basic map element in the environment reconstruction map, an index of the basic map element in the environment reconstruction map, and a space range of the basic map element in the environment reconstruction map.

51. The method according to any one of claims 39 to 50, wherein the parameter information of the basic map element further comprises:

a representation parameter, wherein the representation parameter represents a geometric feature of the basic map element;

an attribute type, wherein the attribute type comprises at least one of the following: a dielectric constant, a permeability, and a scattering coefficient;

an attribute parameter, wherein the attribute parameter is a specific parameter value corresponding to the attribute type; and/or

a reliability parameter, wherein the reliability parameter indicates a reliability degree of the basic map element.

52. A communication apparatus, wherein the communication apparatus comprises a processor, the processor is coupled to a memory, the memory stores instructions, and when the instructions are run by the processor, the method according to any one of claims 1 to 25 is implemented, or the method according to any one of claims 26 to 38 is implemented, or the method according to any one of claims 39 to 51 is implemented.

53. A computer-readable storage medium, wherein the computer-readable storage medium comprises instructions, and when the instructions are run by a processor, the method according to any one of claims 1 to 25 is implemented, or the method according to any one of claims 26 to 38 is implemented, or the method according to any one of claims 39 to 51 is implemented.

54. A computer program product, wherein the computer program product comprises instructions, and when the instructions are run by a processor, the method according to any one of claims 1 to 25 is implemented, or the method according to any one of claims 26 to 38 is implemented, or the method according to any one of claims 39 to 51 is implemented.

Sensing device 1

Sensing device 2

Sensing device 3

Sensing center

FIG. 1

First communication device

Second communication device

S110: Obtain an environment reconstruction map of a first space

S120: Perform a communication service based on the environment reconstruction map

S130: First capability information

S140: Environment reconstruction map

S150: Perform a communication service based on the environment reconstruction map

FIG. 2

```
                        0x98(1001 1000)


        0xFF(1111 1111)           0x0F(0000 1111)        0x88(1000 1000)


0xFF  0xAA  0xFF  0xAA  0xFF  0xAA  0xFF  0xAA    0x0F  0x0F  0x0F  0x0F    0xFF  0xFF
```

FIG. 3

| First communication device | | Second communication device |
| --- | --- | --- |

S101: Second capability information

S102: Scan a first space to obtain an environment reconstruction map, where the environment reconstruction map is represented by using a basic map element corresponding to the second capability information

S103: Perform a communication service based on the environment reconstruction map

S104: Environment reconstruction map

S105: Perform a communication service based on the environment reconstruction map

FIG. 4

```
┌─────────────────┐                              ┌─────────────────┐
│     First       │                              │    Second       │
│ communication   │                              │ communication   │
│    device       │                              │    device       │
└────────┬────────┘                              └────────┬────────┘
         │                  S201: Second                  │
         │◄─────────────  capability information ─────────┤
         │                                                │
┌────────┴─────────────────────────────────┐             │
│ S202: Determine third capability information             │
│ based on the second capability information and           │
│      first capability information          │            │
└────────┬─────────────────────────────────┘             │
┌────────┴─────────────────────────────────┐             │
│ S203: Scan a first space to obtain an     │             │
│ environment reconstruction map, where the │             │
│ environment reconstruction map is represented           │
│ by using a basic map element corresponding to           │
│       the third capability information     │            │
└────────┬─────────────────────────────────┘             │
┌────────┴─────────────────────────────────┐             │
│ S204: Perform a communication service based             │
│     on the environment reconstruction map │            │
└────────┬─────────────────────────────────┘             │
         │             S205: Environment                  │
         ├ ─ ─ ─ ─  reconstruction map ─ ─ ─ ─ ─ ─ ─ ─ ─►│
         │                                                │
         │              ┌ ─ ─ ─ ─ ─ ─ ─ ─ ─ ─ ─ ─ ─ ─ ─ ─┴─ ─ ─ ─┐
         │              │ S206: Perform a communication service based│
         │              │    on the environment reconstruction map   │
         │              └ ─ ─ ─ ─ ─ ─ ─ ─ ─ ─ ─ ─ ─ ─ ─ ─┬─ ─ ─ ─┘
         │                                                │
```

FIG. 5

```
┌──────────────┐                              ┌──────────────┐
│    First     │                              │   Second     │
│ communication│                              │ communication│
│    device    │                              │    device    │
└──────┬───────┘                              └──────┬───────┘
       │          S301: Global environment          │
       │◄─────────  reconstruction map  ────────────│
       │                                             │
┌──────┴──────────────────────────────────┐         │
│   S302: Determine an environment         │         │
│   reconstruction map from the global     │         │
│ environment reconstruction map based on first│     │
│ capability information, where the environment│     │
│  reconstruction map is represented by using a│     │
│  basic map element corresponding to the first│     │
│        capability information             │         │
└──────┬───────────────────────────────────┘         │
       │                                             │
┌──────┴───────────────────────────────────┐         │
│ S303: Perform a communication service based│        │
│   on the environment reconstruction map   │         │
└──────┬────────────────────────────────────┘        │
       │          S304: Environment                  │
       ├ ─ ─ ─ ─  reconstruction map  ─ ─ ─ ─ ─ ─ ─ ►│
       │                                             │
       │            ┌ ─ ─ ─ ─ ─ ─ ─ ─ ─ ─ ─ ─ ─ ─ ─ ─ ─ ─ ┐
       │            │ S305: Perform a communication service │
       │            │based on the environment reconstruction map│
       │            └ ─ ─ ─ ─ ─ ─ ─ ─ ─ ─ ┬ ─ ─ ─ ─ ─ ─ ─ ┘
       │                                   │
```

FIG. 6

```
┌──────────────┐                          ┌──────────────┐
│    First     │                          │   Second     │
│communication │                          │communication │
│   device     │                          │   device     │
└──────┬───────┘                          └──────┬───────┘
       │         S401: First local environment   │
       │◄──────── reconstruction map ────────────│
       │                                          │
┌──────┴────────────────────────────────┐        │
│ S402: Scan a first space to obtain a   │        │
│ second local environment               │        │
│ reconstruction map                     │        │
└──────┬─────────────────────────────────┘        │
       │                                          │
┌──────┴─────────────────────────────────┐        │
│ S403: Determine an environment         │        │
│ reconstruction map based on the first  │        │
│ local environment reconstruction map   │        │
│ and the second local environment       │        │
│ reconstruction map                     │        │
└──────┬─────────────────────────────────┘        │
       │                                          │
┌──────┴─────────────────────────────────┐        │
│ S404: Perform a communication service  │        │
│ based on the environment               │        │
│ reconstruction map                     │        │
└──────┬─────────────────────────────────┘        │
       │         S405: Environment               │
       ├ ─ ─ ─ ─ reconstruction map ─ ─ ─ ─ ─ ─►  │
       │                                          │
       │        ┌ ─ ─ ─ ─ ─ ─ ─ ─ ─ ─ ─ ─ ─ ─ ─ ┴ ─ ─ ─ ┐
       │        │ S406: Perform a communication service │
       │        │ based on the environment              │
       │        │ reconstruction map                    │
       │        └ ─ ─ ─ ─ ─ ─ ─ ─ ─ ─ ─ ┬ ─ ─ ─ ─ ─ ─ ─ ┘
```

FIG. 7

| First<br>communication<br>device | | Second<br>communication<br>device |
|---|---|---|

S501: Environment
reconstruction map

S502: Second
capability information

S503: Perform a communication service based
on the environment reconstruction map

S504: Perform a communication
service

FIG. 8

| First communication<br>device | | Second<br>communication device |
|---|---|---|

S601: First capability information

S602: Environment
reconstruction map

S603: Perform a communication service based on
the environment reconstruction map, where the
environment reconstruction map is represented
by using a basic map element corresponding to
the first capability information

S604: Perform a communication
service

FIG. 9

```
┌─────────────────┐                      ┌─────────────────┐
│      First      │                      │     Second      │
│  communication  │                      │  communication  │
│     device      │                      │     device      │
└─────────────────┘                      └─────────────────┘
        │                                        │
        ├──── S701: First capability information ──────▶│
        │                                        │
        │                          ┌─────────────────────────────────────┐
        │                          │ S702: Determine third capability    │
        │                          │ information based on the first      │
        │                          │ capability information and second   │
        │                          │ capability information, where an    │
        │                          │ environment reconstruction map is   │
        │                          │ represented by using a basic map    │
        │                          │ element corresponding to the third  │
        │                          │ capability information              │
        │                          └─────────────────────────────────────┘
        │                                        │
        │◀─── S703: Environment reconstruction map ────┤
        │                                        │
┌───────────────────────────────────────┐       │
│ S704: Perform a communication service  │       │
│ based on the environment               │       │
│ reconstruction map                     │       │
└───────────────────────────────────────┘       │
        │                          ┌ ─ ─ ─ ─ ─ ─ ─ ─ ─ ─ ─ ─ ─ ┐
        │                            S705: Perform a communication
        │                          │        service              │
        │                          └ ─ ─ ─ ─ ─ ─ ─ ─ ─ ─ ─ ─ ─ ┘
        │                                        │
```

FIG. 10

First communication device

Second communication device

← S801: Second capability information ──

S802: Determine third capability information based on the second capability information and first capability information

── S803: Third capability information ──→

S804: Determine an environment reconstruction map based on the third capability information, where the environment reconstruction map is represented by using a basic map element corresponding to the third capability information

S805: Environment reconstruction map ←──

S806: Perform a communication service based on the environment reconstruction map

S807: Perform a communication service

FIG. 11

First communication device

Second communication device

S910: Obtain first information, where the first information indicates a correspondence between a first service and type information of a basic map element

S920: Obtain the first information, where the first information indicates the correspondence between the first service and the type information of the basic map element

S930: Scan a first space to obtain an environment reconstruction map, where the environment reconstruction map is represented by using a basic map element corresponding to a target service, and the target service is a service that is to be performed by the first communication device

S940: Perform a communication service based on the environment reconstruction map

S950: Environment reconstruction map

S960: Perform a communication service based on the environment reconstruction map

FIG. 12

First communication device

Second communication device

S1020: Obtain the first information, where the first information indicates the correspondence between the first service and the type information of the basic map element

S1010: Obtain first information, where the first information indicates a correspondence between a first service and type information of a basic map element

------ S1030: Target service ------▶

S1040: Determine an environment reconstruction map based on the target service

◀—— S1050: Environment reconstruction map

S1060: Perform a communication service based on the environment reconstruction map

S1070: Perform a communication service

FIG. 13

First
communication
device

Second
communication
device

S1110: Obtain first information, where
the first information indicates a
correspondence between a first service
and type information of a basic map
element

S1120: Obtain the first information, where
the first information indicates the
correspondence between the first service and
the type information of the basic map element

S1130: Service environment
reconstruction map

S1140: Determine an environment
reconstruction map from the service
environment reconstruction map based on a
target service

S1150: Perform a communication service
based on the environment reconstruction map

S1160: Perform a communication service

FIG. 14

☐ Environment reconstruction map including types POINT, PATCH, and CUBE

▨ Environment reconstruction map including types POINT and PATCH

☐ ▨ Represent different periodicities or time-frequency resources

FIG. 15

Communication apparatus 1600

Obtaining unit 1610

Processing unit 1620

Sending unit 1630

FIG. 16

Communication apparatus 1700

Obtaining unit 1710

Processing unit 1720

Sending unit 1730

FIG. 17

Communication apparatus 1800

Sending unit 1810

Processing unit 1820

Obtaining unit 1830

FIG. 18

Communication apparatus 1900

Processor 1910

Communication interface 1920

Memory 1930

FIG. 19

# EP 4 776 151 A1

## INTERNATIONAL SEARCH REPORT

| | International application No. |
|---|---|
| | **PCT/CN2023/122728** |

### A. CLASSIFICATION OF SUBJECT MATTER

G06F16/29(2019.01)i; H04W4/02(2018.01)i

According to International Patent Classification (IPC) or to both national classification and IPC

### B. FIELDS SEARCHED

Minimum documentation searched (classification system followed by classification symbols)

IPC: G06F H04L H04W

Documentation searched other than minimum documentation to the extent that such documents are included in the fields searched

Electronic data base consulted during the international search (name of data base and, where practicable, search terms used)

CNTXT, ENTXT, ENTXTC, CNKI, 3GPP: 地图, 拓扑, 图像, 元, 素, 基, 数据, 类型, 格式, 差异, 差别, 不同, 区别, 支持, 能力, 重构, 融合, 更新, map, tile, image, topology, layer, element, data, feature, type, format, updat+, difference, ability, fus+

### C. DOCUMENTS CONSIDERED TO BE RELEVANT

| Category* | Citation of document, with indication, where appropriate, of the relevant passages | Relevant to claim No. |
|---|---|---|
| X | CN 113127583 A (HUAWEI TECHNOLOGIES CO., LTD.) 16 July 2021 (2021-07-16) description, paragraphs 0059-0177, 0203, and 0215-0216 | 1-54 |
| A | CN 114791917 A (HUAWEI TECHNOLOGIES CO., LTD.) 26 July 2022 (2022-07-26) entire document | 1-54 |
| A | CN 105393282 A (GOOGLE INC.) 09 March 2016 (2016-03-09) entire document | 1-54 |
| A | CN 111693056 A (HERE GLOBAL B.V.) 22 September 2020 (2020-09-22) entire document | 1-54 |
| A | US 2023196758 A1 (HERE GLOBAL B.V.) 22 June 2023 (2023-06-22) entire document | 1-54 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 June 2024** | **18 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/122728**

| Patent document cited in search report | | | Publication date (day/month/year) | Patent family member(s) | | | Publication date (day/month/year) |
|---|---|---|---|---|---|---|---|
| CN | 113127583 | A | 16 July 2021 | US | 2022343758 | A1 | 27 October 2022 |
| | | | | WO | 2021135948 | A1 | 08 July 2021 |
| | | | | EP | 4072173 | A1 | 12 October 2022 |
| | | | | JP | 2023508705 | A | 03 March 2023 |
| CN | 114791917 | A | 26 July 2022 | WO | 2022156352 | A1 | 28 July 2022 |
| | | | | EP | 4283484 | A1 | 29 November 2023 |
| CN | 105393282 | A | 09 March 2016 | US | 2014340421 | A1 | 20 November 2014 |
| | | | | WO | 2014186459 | A2 | 20 November 2014 |
| | | | | EP | 2997546 | A2 | 23 March 2016 |
| CN | 111693056 | A | 22 September 2020 | EP | 3708960 | A1 | 16 September 2020 |
| | | | | US | 2020292323 | A1 | 17 September 2020 |
| US | 2023196758 | A1 | 22 June 2023 | EP | 4198868 | A1 | 21 June 2023 |

Form PCT/ISA/210 (patent family annex) (July 2022)